(19) Europäisches Patentamt
European Patent Office
Office européen des brevets

(11) EP 2 277 931 B1

(12) **EUROPÄISCHE PATENTSCHRIFT**

(45) Veröffentlichungstag und Bekanntmachung des Hinweises auf die Patenterteilung:
**21.03.2012 Patentblatt 2012/12**

(51) Int Cl.:
***C08F 255/10*** *(2006.01)* ***C09D 151/06*** *(2006.01)*
***C09J 151/06*** *(2006.01)* ***C08F 255/02*** *(2006.01)*

(21) Anmeldenummer: **10167292.1**

(22) Anmeldetag: **25.06.2010**

(54) **Modifizierte Polyolefine mit besonderem Eigenschaftsprofil, Verfahren zu deren Herstellung und deren Verwendung**

Modified polyolefins with particular characteristic profile, method for producing same and use of same

Polyoléfines modifiées dotées d'un profil de propriétés spécifique, leur procédé de fabrication et d'utilisation

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **03.07.2009 DE 102009027446**

(43) Veröffentlichungstag der Anmeldung:
**26.01.2011 Patentblatt 2011/04**

(73) Patentinhaber: **Evonik Degussa GmbH**
**45128 Essen (DE)**

(72) Erfinder:
- **Becker, Hinnerk Gordon, Dr.**
  **45257, Essen (DE)**
- **Mindach, Lutz, Dr.**
  **44797, Bochum (DE)**
- **Kautz, Holger, Dr.**
  **45721, Haltern am See (DE)**
- **Ammer, Miriam**
  **45665, Recklinghausen (DE)**

(56) Entgegenhaltungen:
**EP-A1- 1 614 699** **WO-A2-2009/092752**
**DE-A1- 10 114 345** **US-A1- 2006 293 424**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 277 931 B1

## Beschreibung

Die vorliegende Erfindung betrifft modifizierte Polyolefine mit besonderem Eigenschaftsprofil, die auf Basis von teilkristallinen Polyolefinen mit ataktischen Strukturelementen hergestellt werden, ein Verfahren zu ihrer Herstellung sowie ihre Verwendung, insbesondere als Klebstoff bzw. als Bestandteil von Klebstoffen.

Amorphe Poly-alpha-Olefine dienen vielfach als Klebrohstoffe für eine breite Palette von Anwendungen. Der Einsatzbereich erstreckt sich vom Hygienesektor über Laminierungen und Verpackungskleber bis zum konstruktiven Kleben und Verwendungen in der Holzverarbeitung. Unmodifizierte amorphe Poly-alpha-Olefine (sog. APAOs) zeichnen sich dabei durch eine rein physikalische Härtung aus, die auf Grund ihres thermoplastischen Charakters beliebig reversibel ist. Sie weisen allerdings nur begrenzte Zug- und Klebscherfestigkeiten sowie eine relativ niedrige Wärmestandfestigkeit auf. Außerdem lässt sich mit ihnen keine kovalente Einbindung reaktiver Oberflächengruppen (wie z. B. -OH) in eine Verklebung erreichen.

Die beschriebenen Nachteile unmodifizierter APAOs lassen sich durch eine nachträgliche Funktionalisierung (Modifizierung) beheben, wobei vor allem Carbonsäuren bzw. Carbonsäurederivate und/oder Silane zur Modifizierung eingesetzt werden.

Die Herstellung silanmodifizierter Polyolefine durch Umsetzung von Polyethylen mit ungesättigten Silanen ist seit langem bekannt. Schon in EP 0004034 wird eine Methode zur Vernetzung von Poly(α-Olefinen) mit Hilfe von Silanverbindungen beschrieben, wobei möglichst hohe Vernetzungsgrade erzielt werden sollen. Die Vernetzung erfolgt unmittelbar nach dem Pfropfen und führt zu steifen, hochfesten Materialien mit niedriger Versprödungstemperatur, wie sie z. B für die Herstellung von Kabelummantelungen und/oder Formkörpern verwendet werden. Als Klebstoffe lassen sich die beschriebenen Polymere nicht einsetzten.

In der DE 1963571, der DE 2353783 und derDE 2406844 werden Verfahren zur Vernetzung von Polyethylenpolymeren bzw. Ethylen-Mischpolymerisaten, die geringe Mengen an Propen und/oder 1-Buten enthalten, beschrieben. Zielprodukte sind vernetzte Formkörper auf Polyethylenbasis.

In der DE 2554525 und der DE 2642927 werden Verfahren zur Herstellung von stranggepressten Produkten inkl. der Silanfunktionalisierung eines Polymers, der Einarbeitung eines Silanol-Kondensationskatalysators sowie der Formgebung und Vernetzung des Polymers, in einem Arbeitsschritt, durch Verwendung eines Extruders beschrieben. Als Endanwendungen werden Kabel, Rohre und Schläuche genannt. Mit den auf diese Weise hergestellten Polymeren sind keine Verklebungen möglich, auch ist die gesamte Weiterverarbeitung auf Grund der unmittelbar nach der Modifizierung durchgeführten Vernetzung nur sehr eingeschränkt möglich.

Ebenfalls seit langem bekannt ist die Möglichkeit, durch das Einführen von Silangruppen in Polyolefine die Haftung auf funktionellen Oberflächen wie z. B. Glas zu verbessern. So werden bereits in der US 3,075,948 Pfropfpolymere bestehend aus ungesättigten Silanmonomeren und festen Poly(alpha-Olefinen) mit 2-6 Kohlenstoffatomen beschrieben, die einen verbesserten Wärmestand und eine gute Haftung auf Glas aufweisen sollen. Die erhaltenen modifizierten Polymere werden für die Herstellung von Formteilen und Behältern sowie als Beschichtung von Glasbehältern eingesetzt, für den Einsatz als Schmelzklebstoffe eignen sie sich auf Grund des vollständig unterschiedlichen Anforderungsprofils (Schmelzviskosität, Materialsteifigkeit im unvernetzten Zustand usw.) nicht.

Auch der Einsatz von amorphen Poly(alpha-Olefinen) für die Silanvernetzung ist bereits bekannt. So werden beispielsweise in der EP 0260103 amorphe silanmodifizierte Polymere mit gesättigtem Kohlenstoff-Gerüst und niedrigem Molekulargewicht beschrieben, die als Beschichtungsmittel zum Schutz vor Witterungseinflüssen eingesetzt werden. Als Beispiele für solche Polymere werden Copolymere von Ethylen und/oder α-Olefinen genannt, insbesondere EPM und EPDM. Die beschriebenen Basispolymere sind amorph und gummiartig und weisen eine hohe Elastizität auf. Auf Grund ihres gummiartigen Charakters ist die Verarbeitbarkeit im unvernetzten Zustand schlecht. Für die in der vorliegenden Anmeldung beabsichtigten Anwendungen im Kleb- und Dichtstoffbereich sind die Produkte nicht geeignet.

In der DE 4000695 wird die Verwendung weitgehend amorpher Poly(alpha-Olefine) in einem Verfahren beschrieben, in welchem die APAOs mit einem Radikalspender und optional zusätzlich pfropffähigen Monomeren (z. B. Vinylsilanen) bei gleichzeitiger Scherbelastung umgesetzt werden. Die erhaltenen Produkte eignen sich für den Einsatz als Teppichbeschichtungsmassen oder als Schmelzklebstoffe. Die zur Herstellung der modifizierten Poly(alpha-Olefine) eingesetzten weitgehend amorphen Polyolefine weisen allerdings selbst (d.h. im unmodifizierten Zustand) nur schlechte bis mäßige Material- bzw. Klebeigenschaften, insbesondere nur geringe Klebscherfestigkeiten auf unbehandeltem isotaktischen Polypropylen sowie nur geringe Zugfestigkeiten auf, so dass auch die modifizierten Polymere nur für Anwendungen mit geringen Anforderungen geeignet sind. Insbesondere weisen die unmodifizierten vorwiegend amorphen Polyolefine eine hohe Polydispersität auf, was zu Nachteilen bei der Materialkohäsion sowie zu Problemen mit ausgasenden niedermolekularen Bestandteilen führt. Auch ist die Mikrostruktur der Polymerketten u. a. auf Grund der zur Herstellung der unmodifizierten Polyolefine verwendeten heterogenen Polymerisationskatalysatoren wenig definiert, so dass eine gezielte Anpassung auf besondere Material- bzw. Klebanforderungen nur schwer möglich ist. Hinzu kommt, dass die modifizierten Polymere nur über eine niedrige Funktionalisierung verfügen, da das Verhältnis von Pfropfpolymerisation zu Kettenspaltung ungünstig ist. Auf Grund der niedrigen Funktionalisierung verläuft die Vernetzungsreaktion

langsam, die Anbindung an reaktive Oberflächen ist nur relativ schwach ausgeprägt. Hinzu kommt, dass die Zugfestigkeit sowohl des unvernetzten als auch des vernetzten modifizierten Polyolefins nur relativ geringe Werte erreicht, wodurch die Produkte von vielen Anwendungsbereichen ausgeschlossen bleiben.

In der JP 2003-002930 werden Pfropfpolymere aus amorphen Poly($\alpha$-Olefin)en, ungesättigten Carbonsäuren und optional zusätzlich ungesättigten aromatischen Substanzen (z. B. Styrol) hergestellt. Die verwendeten Polyolefine sind amorph und weisen in DSC-Messungen keine Kristallinität > 1J/g auf. Feuchtigkeitsvernetzende Monomer-Systeme wie z. B. Vinyl-Silane werden nicht diskutiert, die gepfropften Polyolefine weisen auf Grund der Eigenschaften ihres Basispolymers und der verwendeten Pfropfmonomere nicht die gewünschten Materialparameter auf, insbesondere sind sie zu weich, weisen nur einen geringen Wärmestand auf und zeigen eine zu geringe Zugfestigkeit.

In der WO 03/070786 werden ein Verfahren zur Herstellung modifizierterPoly(1-buten)-Polymere, die daraus erhältlichen modifizierten Poly(1-buten)-Polymere, sowie eine die modifizierten Poly(1-buten)-Polymere enthaltende Klebstoffzusammensetzung beschrieben. Dabei weist das für die Modifikation verwendete Poly(1-buten)-Basispolymer einen Schmelzpunkt im Bereich von 0 bis 100 °C, einen Isotaktizitätsindex von < 20 % sowie eine Polydispersität von < 4.0 auf. Als Pfropfmonomere werden ungesättigte Carbonsäuren, Carbonsäureanhydride bzw. entsprechende Derivate wie Amide, Ester usw. genannt. Feuchtigkeitsvernetzende Monomere wie z. B. Vinylsilane werden nicht beschrieben. Die hergestellten modifizierten Polymere sind auf Grund ihrer geringen Kristallinität relativ weich und eher wachsartiger Natur. Der niedrige Schmelzpunkt bewirkt eine schlechte Wärmestandfestigkeit der Klebverbindungen. Die Polymere sind nicht für die in der vorliegenden Anmeldung beabsichtigten Anwendungen geeignet.

In der WO 2006/069205 werden modifizierte Polyolefine auf Basis von niederviskosen Polypropylenpolymeren mit einem Propylenanteil von > 50 mol-% und einem Anteil an isotaktischen Propylentriaden von > 85 % beschrieben, die u. a. auch über eine radikalischen Pfropfpolymerisation hergestellt werden können. Aufgrund der Materialeigenschaften der verwendeten Basispolymere sind die erhalten Produkte nicht für die in der vorliegenden Anmeldung beabsichtigten Einsatzgebiete geeignet.

In der WO 2007/067243 werden durch Carbonsäuren funktionalisierte Polypropylenpolymere mit hohem bis sehr hohem Propylenanteil (75 - 90 mol%) beschrieben, die auf Basis von propylenbasierten Homo- und/oder Copolymeren mit einer gewichtsmittleren Molmassen von < 100.000 g/mol, einem Schmelzpunkt von < 157 °C und einer Schmelzviskosität bei 190 °C von < 40.000 mPa·s [cPs] bei Reaktionstemperaturen von 130-165 °C hergestellt werden. Feuchtigkeitsvernetzende Systeme wie z. B. auf Basis von Silanen werden nicht beschrieben. Auf Grund der verwendeten Basispolymere und der verwendeten Pfropfmonomere sind die beschriebenen Produkte nicht für die in der vorliegenden Anmeldung beabsichtigten Einsatzgebiete geeignet.

In der WO 91/06580 werden silanmodifizierte ungesättigte amorphe Polymere beschrieben, die im vernetzten Zustand z. B. als Formkörper eingesetzt werden können. Als weitere Anwendungsbeispiele für die silanmodifizierten Polymere werden Klebstoffzusammensetzungen, auch von Schmelzklebstoffen genannt. Als Beispiele für ungesättigte Basis-Polymere werden gummiartige Polymere, wie z. B. Styrol-Butadien-Blockcopolymere (SBS), Styrol-Isopren-Blockcopolymere (SIS), Styrol-Butadien-Rubber (SBR), Nitril-Rubber, Polychloropren-Rubber und Butyl-Rubber genannt. Alle genannten Basispolymere weisen eine Gummielastizität (d.h. auch schlechte Verarbeitbarkeit) bzw. andere negative Materialeigenschaften (wie z. B. schlechte Wärmestandfestigkeiten) auf, die sie für Schmelzkleberanwendungen ungeeignet machen.

Der Einsatz silanmodifizierter Polymere in Heißschmelzklebstoffen ist ebenfalls bekannt. So wird beispielsweise in der WO 89/11513 eine Klebstoffzusammensetzung beschrieben, die mindestens ein silanmodifiziertes bzw. silangepfropftes teilkristallines Polymer enthält. Als Basispolymere werden dabei insbesondere Homo-, Co- und Terpolymere von $C_{2-6}$ $\alpha$-Olefinen sowie isotaktische Polypropylenpolymere und Blends von Polypropylenen, insbesondere wenn sie auch ataktisches Polypropylen enthalten, genannt. Die Pfropfreaktion läuft dabei bei Temperaturen von 140 bis 250 °C ab. Ataktisches Polypropylen ohne definierte Polymermikrostruktur weist von sich aus einen sehr niedrigen Erweichungspunkt auf [siehe z. B.: H.-G. Elias; Makromoleküle; Bd. III; Wiley-VCH: Weinheim; 2001]. Die in der WO 89/11513 beschriebene Verfahrensweise führt zu Produkten mit unbefriedigenden Materialeigenschaften, insbesondere im Hinblick auf die Kohäsion, Adhäsion (Klebscherfestigkeit) und den Wärmestand im unvernetzten Zustand (z. B. unmittelbar nach der Applikation). Die Einstellung von Viskosität, Schmelzverhalten und "Tack" der Klebzusammensetzung wird ursächlich auf die Verwendung längerkettiger (≥ 3 Verbindungsatome zwischen Si-Atom und der Polymerkette) Silanmonomere zurückgeführt, die zu einer "offeneren Struktur" führen sollen. Die Verwendung von längerkettigen Silanmonomeren ist in sofern nachteilig, als sie zu einer schwächeren Vernetzung durch einen höheren Polymerisationsgrad der Netzketten (d. h. der monomeren Grundeinheiten zwischen zwei Vernetzungsstellen) führt, was zusätzlich nachteilig auf die Materialeigenschaften des Pfropfpolymers auswirkt.

In der DE 19516457 wird eine vernetzbare Klebstoffzusammensetzung bestehend aus mindestens 50 ma-% eines silangepfropften Polyolefins und zusätzlich eines carbonsäuregepfropften Polyolefins beschrieben. Als Basispolymere für die Pfropfung werden Poyl(ethylen-co-vinylacetat), Polypropylen, Polyethylen, Poly(ethylen-co-methacrylat) und Poly(ethylen-co-methacrylsäure) genannt. Auf Grund der verwendeten Basispolymere und der verwendeten Pfropfmonomere sind die beschriebenen Produkte nicht für die gewünschten Einsatzgebiete geeignet.

In der EP 1508579 werden (Silan-)modifizierte kristalline Polyolefinwachse mit hohem Propylenanteil beschrieben. Aufgrund ihrer wachsartigen Eigenschaften und den daraus resultierenden schlechten Klebeigenschaften sind die beschriebenen Polymere für die beabsichtigten Einsatzgebiete nicht geeignet. Eine hohe Funktionalisierung gemäß den vorliegenden Anforderungen ist auf Grund der Materialeigenschaften der eingesetzten Basispolymere nicht zu erreichen.

In der WO 2007/001694 werden Klebstoffzusammensetzungen beschrieben, die funktionalisierte Polymere (bevorzugt Maleinsäureanhydrid-gepfropfte Propylenpolymere) enthalten. Bei den eingesetzten Basispolymeren handelt es sich um Propylen(co)polymere mit hohen isotaktischen Anteilen (> 75 % isotaktische Triaden) und einer Polydispersität von 1,5 bis 40, also überwiegend kristalline Polymeren, die eine sehr breite Molmassenverteilung besitzen, wie sie normaler Weise nur bei multimodal verteilten Polymeren erreichbar ist. Die gewichtsmittlere Molmasse der bevorzugt eingesetzten Polymere liegt bei bis zu 5.000.000 g/mol, also überwiegend im Bereich sehr hoher Molmassen bzw. Schmelzviskosität, was ebenfalls durch den angegebenen Grenzwert für den Schmelzindex von 0,2 g/10 min zum Ausdruck kommt. Polymere mit sehr breiter Molmassenverteilung, insbesondere mit einer Molmassenverteilung von > 4 zeigen aber bei radikalisch initiierten Pfropfreaktionen eine sehr ungleichmäßige Verteilung von funktionellen Gruppen auf den Polymerketten. Insbesondere enthalten die gepfropften Polymere sehr hohe Anteile an kurzen Ketten ohne funktionelle Gruppe bzw. mit nur einer oder maximal zwei funktionellen Gruppe, die entweder gar keine reaktive Anbindung ermöglichen (ohne funktionelle Gruppe), oder aber nicht zur Ausbildung von dreidimensionalen Netzwerken befähigt sind. Dies wiederum führt sowohl zu einer schlechten Adhäsion wie auch zu einer schlechteren Kohäsion. Polymere mit sehr hohen Molmassen und sehr hoher Schmelzviskosität sind zudem insbesondere in Schmelzeprozessen schlecht zu verarbeiten und weisen auf Grund des großen Viskositätsunterschiedes eine schlechte Mischbarkeit mit Monomeren und Radikalstartern auf, was zu inhomogenen Produkten mit schlechtem Eigenschaftsprofil führt.

US 2006/293424 offenbart mit Metallocenen hergestellte funktionalisierte Propenpolymere mit einer Schmelzenthalpie zwischen 0,5 und 70 J/g und einem mm-Triadentaktizitätsindex von mindestens 75% und deren Einsatz in Klebzusammensetzungen.

In EP 1614699 werden Propen/1-Buten Randomcopolymere beschrieben, wobei die Polymere aus 60 bis 90 mol-% Propen und 10 bis 40 mol-% Buten bestehen und eine Triadenisotaktizität von nicht weniger als 85 % und nicht mehr als 97,5 %, ein Verhältnis $M_w/M_n$ von 1 bis 3, eine intrinsische Viskosität von 0,1 bis 12 dl/g und einen Schmelzpunkt von 40-120 °C aufweisen, sowie deren Verwendung zur Herstellung von Folien.

WO 2009/092752 beschreibt unfunktionalisierte Polyolefine enthaltend maximal 20 ma-% Ethylen, entweder 70 - 100 ma-% oder maximal 20 ma-% Propylen und/oder entweder 70 - 100 ma-% oder maximal 20 ma-% 1-Buten oder eines anderen linearen 1-Olefins, wobei die Summe der Anteile 100 ma-% beträgt, dadurch gekennzeichnet, dass die durch $^{13}C$-NMR bestimmte Triadenverteilung für Propentriaden einen isotaktischen Anteil von 75 - 98 ma-%, einen ataktischen Anteil von weniger als 20 ma-% und einen syndiotaktischen Anteil von maximal 20 ma-%, aufweisen und/ oder die durch $^{13}C$-NMR bestimmte Triadenverteilung für 1-Butentriaden einen isotaktischen Anteil von 10 - 98 ma-%, einen ataktischen Anteil von 1 - 85 ma-% und einen syndiotaktischen Anteil von maximal 20 ma-%, aufweisen, sowie Verfahren zu deren Herstellung und deren Verwendung.

DE 10114345 offenbart Übergangsmetallverbindungen mit wenigstens zwei pi-Systemen und mindestens einer Donor-Akzeptor-Wechselwirkung zwischen den pi-Systemen und deren Verwendung als Katalysatoren, insbesondere zur Homo- oder Copolymerisation eines oder mehrerer Olefine.

In der WO 2007/002177 werden Klebstoffzusammensetzungen auf Basis von Poly(propylen)-random-Copolymeren, funktionalisierten Polyolefincopolymeren die reich an syndiotaktischen Einheiten sind, und nicht funktionalisierten Klebharzen beschrieben, wobei die Poly(propylen)-random-Copolymere eine Schmelzenthalpie von 0,5 bis 70 J/g und einen Anteil isotaktischer Propylentriaden von mindestens 75% (besonders bevorzugt > 90%) aufweisen, und die verwendeten funktionalisierten (syndiotaktischen) Polymere einen Gehalt an funktionellen Monomereinheiten von mindestens 0,1 % aufweisen und mit einem Anteil von < 5 ma-% in der Klebstoffzusammensetzung vorhanden sind. Die beschriebenen Poly(propylen)-random-Copolymeren weisen eine Polydispersität mit 1,5 bis 40 auf, was auf eine multimodale Molmassenverteilung und die gleichzeitige Anwesenheit mehrere Katalysatorspezies hindeuten. In die gleiche Richtung deutet der angegebene Schmelzbereich von 25 bis 105 °C der mehrere Schmelzpeaks unterschiedlicher Intensität aufweist, wobei die angegebene Grenze von 105 °C einen für Polypropylenpoylmere, insbesondere für isotaktische Poylpropylenpolymere unüblich niedrigen Wert aufweist. Polymere mit sehr breiter Molmassenverteilung, insbesondere mit einer Molmassenverteilung von > 5 zeigen bei radikalisch initiierten Pfropfreaktionen eine sehr ungleichmäßige Verteilung von funktionellen Gruppen auf den Polymerketten. Insbesondere enthalten die gepfropften Polymere sehr hohe Anteile an kurzen Ketten ohne funktionelle Gruppe bzw. mit nur einer oder maximal zwei funktionellen Gruppe, die entweder gar keine reaktive Anbindung ermöglichen (ohne funktionelle Gruppe), oder aber nicht zur Ausbildung von dreidimensionalen Netzwerken befähigt sind. Dies wiederum führt sowohl zu einer schlechten Adhäsion wie auch zu einer schlechteren Kohäsion. Die genannte Obergrenze für den Schmelzbereich sorgt für eine niedrige Wärmestandfestigkeit der entsprechenden Verklebungen.

In der WO 2007008765 wird der Einsatz von niedrigviskosen silangepfropften Poly(ethylen-co-1-olefin)-Polymeren als Klebrohstoff beschrieben. Die Polymere, die zur Modifizierung eingesetzt werden, weisen einen Ethylengehalt

von mindestens 50 mol-% Ethylen auf. Als 1-Olefin-Comonomere werden zahlreiche höhere 1-Olefin wie z. B. 1-Hexen und 1-Octen aber auch einige verzweigte 1-Olefine wie z. B. 3-Methyl-1-penten sowie diverse weitere Monomere, wie z. B. Diene, Styrol usw. genannt, die die vorherige Anforderung "1-Olefin" nicht erfüllen, und somit zu Polymeren mit vollständig unterschiedlichen Materialeigenschaften führen. Insbesondere Dienpolymere neigen beim Einsatz in peroxidischen Prozessen zur Vernetzung und Ausbildung von Gelteilchen. Dies wird verstärkt durch die erfindungsgemäße Anwesenheit von Vinylendgruppen in den Basispolymeren. Die silangepfropften Polymere weisen sehr niedrige Versagenstemperaturen von lediglich > 43 °C (PAFT) bzw. > 60 °C (SAFT) auf. Die Verwendung von Polyolefinen mit hohem Ethylenanteil bedeutet zwangsläufig das Vorhanden sein von langen Ethylenblöcken im Polymer. Dies wiederum führt zu schlechten Benetzungs- und Haftungseigenschaften auf vielen Kunststoffoberflächen, so dass sehr viele Verklebungsprobleme nicht optimal gelöst werden können. Zudem neigen lange Polyethylensequenzen zur peroxidischen Vernetzung (was u. a. bei der Herstellung von Kabelummantelungen technisch ausgenutzt wird), wodurch eine Gelbildung unvermeidlich ist. Die ungepfropften Basispolymere weisen eine relativ geringe Molmasse und Schmelzviskosität von maximal 50000 mPa·s [cP] bei 177 °C auf. Bekannter Weise wird die Molmasse (und damit auch die Schmelzviskosität) bei einer peroxidisch induzierten Pfropfreaktion durch Kettenspaltung abgebaut. Entsprechende Polymere mit hohen Funktionalisierungsraten weisen daher zwangsläufig sehr niedrige Molmassen/Schmelzviskositäten auf, und sind für viele Applikationsbereiche nicht geeignet. Die Verwendung relativ niedermolekularer Basispolymere führt generell zu eher geringen Funktionalisierungsraten. Ebenfalls beschrieben werden Harzzusammensetzungen die bereits vernetzte Poly(ethylen-co-1-olefin)-Polymere enthalten. Derartige gummiartige Bestandteile enthaltende Zusammensetzungen sind für optisch anspruchsvolle Anwendungen nicht geeignet (schlechte Oberflächenstruktur) und können außerdem auf vielen im Klebstoffbereich üblichen Applikationsanlagen (z. B. Schmelzesprühen) nicht verarbeitet werden (Verstopfung der Applikationsdüsen). Die als Anwendung beschriebenen Schmelzkleber weisen hauptsächlich niedrige Schmelzviskositäten auf. Ebenfalls beschrieben wird der Einsatz von kristallinen und teilkristallinen Poly(propylen-co-1-olefin) polymeren, die sich ebenfalls für die Pfropfung eignen sollen. Diese weisen einen Propylengehalt von mindestens 50 mol-% sowie bevorzugt ebenfalls eine Schmelzviskosität von maximal 50000 mPa·s [cP] bei 177 °C (vor der Pfropfung und nach der Pfropfung) sowie eine Polydispersität von 1 bis 5 auf. Als Beispiele für Poly(propylene-co-1-olefin)-Polymere werden unter anderem Polymere der Produktreihen VISTAMAXX, LICOCENE, Eastoflex, REXTAC und VESTOPLAST genannt. Teilkristalline Polyolefinpolymere mit spezieller Mikrostruktur werden nicht beschrieben. Die Kristallinität der Poly(propylen-co-1-olefin)copolymere wird mit 2-60 % (d. h. 3-100 J/g) angegeben, und liegt damit im Wesentlichen im Bereich hoher Kristallinität. Dies wiederum bewirkt eine schlechte Benetzung von, bzw. eine schlechte Adhäsion auf Polyolefinoberflächen und schließt zahlreiche Applikationsfelder aus.

In der EP0827994 wird die Verwendung von silangepfropften amorphen Poly(alpha-Olefinen) als feuchtigkeitsvernetzender Klebrohstrohstoff oder Klebstoff beschrieben. Als Basispolymere werden ataktisches Polypropylen (aPP), ataktisches Poly(1-buten) oder vorzugsweise Co- bzw. Terpolymere aus $C_4$-$C_{10}$ alpha-Olefinen (0-95 ma-%), Propen (5-100 ma-%) und Ethylen (0-20ma-%) eingesetzt. Das in den Beispielen dargestellte silanmodifizierte APAO weist einen Erweichungspunkt von 98 °C, eine Nadelpenetration von 15*0,1mm und eine Schmelzviskosität von 6000 mPa*s auf. Die verwendeten ataktischen Polyolefine und APAOs weisen eine relativ geringe Molmasse und eine relativ niedrige Kristallinität auf, was bei der Modifizierung zu Produkten mit geringer Flexibilität führt, die eine geringe Funktionalität und eine geringe Zugfestigkeit besitzen, und daher für viele Anwendungen nicht geeignet sind.

Der Einsatz von Metallocenverbindungen als Katalysator in der Olefinpolymerisation ist ebenfalls lange bekannt. Kaminsky et al. haben gezeigt, dass sich das Katalysatorsystem Cyclopentadienylzirkoniumdichlorid / Methylaluminoxan ($Cp_2ZrCl_2$/MAO) gut zur Polymerisation eignet (*Adv. Organomet. Chem.* **1980**, *18*, 99 - 149). Seit dieser Zeit ist der Einsatz von Metallocenverbindungen in Verbindung mit Methylaluminoxan (MAO) in Polymerisationsreaktionen weit verbreitet. So gibt es eine Vielzahl von Veröffentlichungen die sich mit der Metallocen-katalysierten Olefinpolymerisation, beispielsweise von Propen, beschäftigen, wie z. B. US 6,121,377, EP 584 609, EP 516 018, WO 2000/037514, WO 2001/46274 und US 2004/0110910.

Bei der Polymerisation von Propen bzw. seinen höheren Homologen, kann es zur Bildung unterschiedlicher relativer Stereoisomerer kommen. Die Regelmäßigkeit, mit der die konfigurativen Repetiereinheiten in der Hauptkette eines Makromoleküls aufeinanderfolgen, bezeichnet man als Taktizität. Zur Bestimmung der Taktizität betrachtet man die Monomereinheiten einer Polymerkette und stellt die relative Konfiguration jedes (pseudo)asymmetrischen Kettenatoms relativ zum vorangegangenen fest. Von *Isotaktizität* spricht man, wenn die hierbei festgestellte relative Konfiguration aller (pseudo)asymmetrischen Kettenatome stets die gleiche ist, d.h. die Kette aus nur einer einzigen konfigurativen Repetiereinheit aufgebaut ist. Von *Syndiotaktizität* spricht man dagegen, wenn die relative Konfiguration aufeinander folgender (pseudo)asymmetrischen Kettenatome jeweils gerade entgegengesetzt ist, d.h. die Kette alternierend aus zwei verschiedenen konfigurativen Repetiereinheiten aufgebaut ist. Bei *ataktischen* Polymeren schließlich sind die verschiedenen konfigurativen Repetiereinheiten entlang der Kette zufällig angeordnet.

Die physikalischen Eigenschaften von Propylenpolymeren sind in erster Linie von der Struktur der Makromoleküle und damit auch von der Kristallinität, ihrem Molekulargewicht und der Molekulargewichtsverteilung abhängig, und lassen sich durch das verwendete Polymerisationsverfahren, sowie insbesondere den verwendeten Polymerisationskatalysator beeinflussen [R. Vieweg, A. Schley, A. Schwarz (Hrsg); Kunststoff Handbuch; Bd. IV/"Polyolefine"; C. Hanser Verlag, München 1969].

Auf Basis ihrer Taktizität werden Polypropylenpolymere somit in ataktische, isotaktische und syndiotaktische Polymere unterteilt. Als Sonderformen kommen außerdem die sog. hemiisotaktischen Polypropylenpolymere und die sog. Stereoblockpolymere hinzu. Bei letzteren handelt es sich meist um Polymere mit isotaktischen und ataktischen Stereoblöcken, die sich wie thermoplastische Elastomere verhalten, da eine physikalische Vernetzung der Polymerketten stattfindet, die zu einer Verbindung unterschiedlicher kristalliner Polymerregionen führt (A.F. Mason, G.W. Coates in: "Macromolecular Engineering"; Wiley-VCH, Weinheim; 2007).

Ataktisches Polypropylen weist einen niedrigen Erweichungspunkt, eine niedrige Dichte und eine gute Löslichkeit in organischen Lösungsmitteln auf. Klassisches ataktisches Polypropylen (aPP) zeichnet sich durch eine sehr breite Molekulargewichtsverteilung aus, die einerseits zu einem breiten Schmelzbereich führt, und andererseits hohe niedermolekulare Anteile mit sich bringt, die mehr oder weniger stark zur Migration neigen. aPP hat eine sehr geringe Zugfestigkeit von ca. 1 MPa, weist aber andererseits eine sehr hohe Reißdehnung von bis zu 2000 % auf (H.-G. Elias; Makromoleküle; Bd. III; Wiley-VCH; Weinheim; 2001). Auf Grund des niedrigen Erweichungspunktes ist die Wärmestandfestigkeit von aPP-Formulierungen entsprechend niedrig, was zu einer starken Limitierung des Einsatzbereiches führt. Rein ataktische Polypropylenpolymere lassen sich auch durch Metallocenkatalyse herstellen, wobei sowohl sehr niedermolekulare als auch höhermolekulare Polymere erhalten werden können (L. Resconi in: "Metallocene based Polyolefins"; J. Scheirs, W. Kaminsky (Hrsg.); J. Wiley & Sons; Weinheim; 1999).

Syndiotaktisches Polypropylen ist hochtransparent und zeichnet sich durch eine gute Wärmebeständigkeit aus, wobei die Schmelztemperatur unter der von isotaktischem Polypropylen liegt. Es weist hohe Bruchfestigkeiten bei moderater Reißdehnung auf (A.F.Mason, G.W.Coates in "Macromolecular Engineering"; Wiley-VCH, Weinheim; 2007). Nachteilig ist die in vielen Fällen beobachtete langsame Kristallisation aus der Schmelze. Auf Grund von physikalischen Verschlaufungen liegt die Schmelzeviskosität von syndiotaktischem Polypropylen bei vergleichbarer Molmasse deutlich höher als die von isotaktischem Polypropylen, d. h. man kann mit deutlich geringeren Molmassen die gleiche Schmelzviskosität erreichen. Syndiotaktisches und isotaktisches Polypropylen sind ab einer bestimmten Molmasse nicht mischbar, entsprechende Polymerblends neigen zur Phasenseparation. Polymerblends von syndiotaktischem Polypropylen mit anderen Polyolefinen zeigen eine deutlich höhere Reißdehnung als Blends mit isotaktischem Polypropylen (T. Shiomura, N. Uchikawa, T. Asanuma, R. Sugimoto, I. Fujio, S. Kimura, S. Harima, M. Akiyama, M. Kohno, N. Inoue in: "Metallocene based Polyolefins"; J. Scheirs, W. Kaminsky (Hrsg.); J.Wiley & Sons; Weinheim; 1999) Klassische heterogene Ziegler-Natta-Katalysatoren sind nicht in der Lage syndiotaktisches Polypropylen herzustellen.

Isotaktisches Polypropylen zeichnet sich durch eine hohe Schmelztemperatur und gute Zugfestigkeit aus. Für 100%ig isotaktisches Polypropylen liegt die berechnete Schmelztemperatur bei 185 °C und die Schmelzenthalpie bei ca. 207 J/g (J.Bicerano; J.M.S.; Rev.Macromol.Chem.Phys.; C38 (1998); 391ff). Als Homopolymer weist es allerdings eine relativ geringe Kältebeständigkeit sowie eine hohe Sprödigkeit und eine schlechte Heißsiegelbarkeit beziehungsweise Verschweißbarkeit auf. Die Zugfestigkeit (Bruch) liegt bei ca. 30 MPa, wobei so gut wie keine Reißdehnung auftritt. Verbesserte Materialeigenschaften lassen sich durch Co- bzw. Terpolymerisation mit Ethylen und 1-Buten einstellen, wobei der Comonomergehalt für Copolymere mit Ethylen bei üblicher Weise < 8 ma-% und für Terpolymere mit Ethylen und 1-Buten bei < 12 ma-% liegt. (H.-G. Elias; Makromoleküle; Bd. III; Wiley-VCH; Weinheim; 2001). Bei gleichem MFR (Melt Flow Rate = Schmelzindex) zeigt isotaktisches Polypropylen welches durch klassische heterogene Ziegler-Natta-Katalyse hergestellt wurde, eine deutlich geringere Strukturviskosität als Polypropylen welches durch Metallocenkatalyse hergestellt wurde. Die Schlagzähigkeit des Metallocen-basierten Polymers liegt in einem weiten Molmassenbereich über der des Ziegler-Natta-Materials. (W.Spaleck in: "Metallocene based Polyolefins"; J. Scheirs, W. Kaminsky (Hrsg.); J.Wiley & Sons; Weinheim; 1999).

Da die Löslichkeit von Polypropylen sowohl vom Molekulargewicht als auch von seiner Kristallinität abhängt, kann über Lösungsversuche ein entsprechende Fraktionierung erfolgen [A. Lehtinen; Macromol. Chem.Phys.; 195 (1994); 1539ff]. Bezüglich der Löslichkeit von Polypropylenpolymeren in aromatischen Lösungsmitteln und/oder Ethern gibt es zahlreiche Publikationen in der wissenschaftlichen Literatur. So wurde beispielsweise gefunden, dass der Anteil von xylollöslichen Bestandteilen bei isotaktischem Poly(propylen)-Homopolymer, welches durch Metallocenkatalyse gewonnen wurde, bei deutlich < 1ma-% liegt, bei random-Copolymeren mit Ethylen werden je nach Ethylenanteil xylollösliche Anteile von maximal 5 ma-% gefunden (W. Spaleck in: "Metallocene based Polyolefins"; J. Scheirs, W. Kaminsky (Hrsg.); J.Wiley & Sons; Weinheim; 1999).

Es ist seit langem bekannt, dass sich mittels Extraktion mit Ether amorphe ataktische Anteile [J. Boor; "Ziegler-Natta Catalysts and Polymerization"; Academic Press; New York; 1979] und niedermolekulare Anteile mit geringer Kristallinität [G. Natta, I. Pasquon, A. Zambelli, G. Gatti; Makromol. Chem.; 70 (1964); 191ff] aus Polypropylenpolymeren erhalten lassen. Hoch kristalline isotaktische Polymere haben hingegen eine sehr geringe Löslichkeit sowohl in aliphatischen Lösungsmitteln wie auch in Ethern und zwar auch bei erhöhter Temperatur [B.A. Krentsel, Y.V. Kissin, V.I. Kleiner, L.L. Stotskaya; "Polymers and Copolymers of higher 1-Olefins"; S.19/20; Hanser Publ.; München; 1997]. Die löslichen Polymeranteile weisen im Allgemeinen keine bzw. nur eine sehr geringe Kristallinität auf, und zeigen keinen

Schmelzpunkt [Y.V.Kissin; "Isospecific polymerization of olefins"; Springer Verlag; New York; 1985]. In Tetrahydrofuran lösliche Polypropylenoligomere weisen sehr geringe zahlenmittlere Molmassen von deutlich kleiner als 1500 g/mol auf [H. El Mansouri, N. Yagoubi, D. Scholler, A. Feigenbaum, D. Ferrier; J. Appl. Polym. Sci.; 71 (1999); 371ff].

Die verschiedenen Polymertypen unterscheiden sich wesentlich in ihren Materialeigenschaften. Die Kristallinität von hoch isotaktischen bzw. syndiotaktischen Polymeren ist auf Grund ihrer hohen Ordnung sehr hoch. Ataktische Polymere weisen hingegen einen höheren amorphen Anteil und demzufolge eine niedrigere Kristallinität auf. Polymere mit hoher Kristallinität zeigen viele Materialeigenschaften, die insbesondere im Bereich der Heißschmelzklebstoffe unerwünscht sind. So führt beispielsweise eine hohe Kristallinität bei niedermolekularen Polymeren zu einer sehr schnellen Kristallisation mit offenen Zeiten ("offene Zeit" = Zeitspanne in der die zu verklebenden Teile miteinander verbunden werden können) von teilweise weniger als einer Sekunde. Dies führt bei der Applikation (z. B. bei Düsen-Applikation durch Versprühen) bereits bei geringsten Temperaturschwankungen zur Verstopfung des verwendeten Applikationsequipments, und damit zu einer sehr schlechten Prozessstabilität. Hinzu kommt die äußerst kurze Zeitspanne, in der nach der Applikation das Fügen der Klebverbindung erfolgen kann. Hochkristalline Polymere sind zudem bei Raumtemperatur hart, spröde und weisen nur eine sehr geringe Flexibilität auf, was bei Verklebungen ebenfalls unerwünscht ist. Hinzu kommt, dass für das Aufschmelzen von hochkristallinen Polymeren punktuell (am Ort des Eintrages) sowie über das gesamte Leitungssystem sehr hohe Energiemengen benötigt werden, was neben ökonomischen Effekten auch negative Folgen für die Prozessfähigkeit hat. Weiterhin kommt es bei hoch kristallinen Polymeren unterhalb des Schmelzpunktes (welcher bei Vermessung mittels Differentialkalorimetrie (DSC) durch einen scharfen Schmelzpeak in der 2. Aufheizung gekennzeichnet ist), zur spontanen (sofortigen) Verfestigung, was die Verarbeitbarkeit solcher Polymere bzw. der auf Basis solcher Polymere hergestellten Produkte unmöglich macht bzw. stark erschwert.

Die Herstellung von Poly-1-olefinen mit isotaktischen Propylensegmenten durch Verwendung von Metallocenkatalysatoren ist bekannt.

So beschreibt beispielsweise die EP0384264 substituierte und unsubstituierte Bisindenylzirkonocene mit stark variierenden Verbrückungselementen für die Herstellung von Polypropylenwachsen mit einem Propylenanteil von 80 bis 99,75 ma-%. Die beschriebenen isotaktischen kristallinen Wachse sind auf Grund ihrer hohen Kristallinität, ihrer Härte sowie der schlechten Klebperformance in Formulierungen nicht für die in der vorliegenden Anmeldung beabsichtigten Verwendungen geeignet. Eine Modifizierung unter Verwendung der radikalischen Pfropfpolymerisation führt auf Grund der ungünstigen Kettentopologie zu einem sehr starken Polymerabbau bei gleichzeitig geringen Pfropfraten.

In der EP480390 wird ein Verfahren zur Herstellung von Polyolefinen mit hoher Taktizität und großer Molmasse beschrieben, bei dem durch die Wahl eines speziell abgestimmten Systems aus Metallocen-Katalysator und Cokatalysator auf die Verwendung aromatischer Lösungsmittel verzichtet werden kann. Erhalten werden ausweislich der Beispiele sowohl isotaktische als auch syndiotaktische Polymere, deren Isotaktizitätsindex zwischen 90 und 99%, bzw. deren Syndiotaktizitätsindex bei 96 % liegt. Polymere mit hohen Anteilen an ataktischen Triaden sowie Polymere mit speziellem Verhältnis von syndiotaktischen zu isotaktischen und ataktischen Strukturelementen werden nicht beschrieben. Eine Modifizierung der beschriebenen Polymere unter Verwendung der radikalischen Pfropfpolymerisation führt auf Grund der ungünstigen Kettentopologie ebenfalls zu einem sehr starken Polymerabbau bei gleichzeitig geringen Pfropfraten.

In der EP584609 werden rac/meso-Mischungen von substituierten und unsubstituierten Bisindenylzirkonocenen beschrieben, mit denen sich Mischungen aus ataktischen und isotaktischen Polyolefinen herstellen lassen. Meso-Formen von Metallocenkatalysatoren stellen bekannter Maßen Polymere mit irregulärer undefinierter Stereostruktur her, wobei gleichzeitig sehr niedrige Katalysatoraktivitäten und eine schlechte Reproduzierbarkeit der Polymerisationsergebnisse auftreten. Der Einsatz derartiger Produkte in einer radikalischen Pfropfpolymerisation führt zu Materialien mit schlechten Materialeigenschaften, insbesondere in Bezug auf die Materialkohäsion.

In der EP 1263815 werden weitgehend amorphe Polymere auf Basis von Poly(1-Olefin)-Copolymeren, die sich auf Grund ihres rheologischen Verhaltens als Klebstoffe eignen sollen sowie eine Verfahren zu ihrer Herstellung. Amorphe Polymere weisen wie langläufig bekannt allerdings ein sehr unausgeglichenes Materialverhalten auf. Insbesondere ist die Kohäsion solcher Polymere im Verhältnis zur Adhäsion deutlich unterentwickelt, weshalb es bei den entsprechenden Klebverbindungen häufig zu kohäsivem Klebversagen kommt. Die beschriebenen Polymere werden insbesondere als oder in druckempfindliche(n) Klebstoffe(n) (sog. "pressure sensitive adhesives", PSA) eingesetzt. Für klassische Schmelzklebstoffe ist ihr Eigenschaftsprofil dagegen sehr nachteilig. Beansprucht werden Co- und Terpolymere bevorzugt auf Propylenbasis. Poly(1-buten)-Homopolymer sowie Copolymere auf Basis von 1-Buten mit den Comonomeren Propylen (Propylenanteil < 60 mol%) oder Ethylen die einen 1-Butenanteil von > 40 mol% aufweisen werden nicht beschrieben. Ebenso wenig Poly(ethylen-co-propylen)-Copolymere sowie Terpolymere mit speziellen Eigenschaften.

WO 01/46278 beschreibt 1-Olefincopolymere mit überwiegend amorphem Charakter, die durch Metallocenkatalyse erhalten werden, wobei zu ihrer Verwendung als Schmelzklebstoffe keine oder nur minimale Zusätze an Klebharzen notwendig sein sollen. Die Copolymere bestehen dabei aus A: 60 bis 94 % eines $C_3$-$C_6$ 1-Olefins, B: 6 - 40 mol-% eines oder mehrerer $C_4$-$C_{10}$ 1-Olefine und optional C: 0 - 10 mol-% eines anderen ungesättigten Monomers (bevorzugt Ethylen). Durch die statistische Verteilung des Comonomers B wird die Kristallinität der Polymere besonders stark gestört, da nur noch wenige Bereiche die für eine Kristallisation notwendige Mindestblocklänge erreichen (siehe z. B.

S. Davison, G.L. Taylor; Br. Polym. J.; 4 (1972); 65ff). Dies ist unter anderem auch an dem niedrigen Schmelzpunkt der beschriebenen Polymere zu erkennen. Weitgehend amorphe Polymere weisen zudem ein sehr unausgeglichenes Materialverhalten auf. Insbesondere ist die Kohäsion solcher Polymere im Verhältnis zur Adhäsion deutlich unterentwickelt, weshalb es bei den entsprechenden Klebverbindungen häufig zu kohäsivem Klebversagen kommt. Derartige Polymere mit niedrigem Schmelzpunkt führen außerdem in Verklebungen zu einem schlechten Wärmestand, was zahlreiche Einsatzgebiete ausschließt. Comonomere mit mehr als 4 Kohlenstoffatomen sind zudem sehr teuer, was die Produkte im Hinblick auf ihre Einsatzgebiete und die dort zu erzielenden Produktpreise unwirtschaftlich macht. Eine Aromatenfreiheit ist über das beschriebene Herstellungsverfahren schwer zu garantieren, zumal bevorzugt in aromatischen Lösungsmitteln polymerisiert wird, und sich der verwendete Cokatalysator nicht in aliphatischen Lösungsmitteln löst. Die hohen Reaktionstemperaturen, welche (teilweise sehr weit) oberhalb der Schmelzpunkte der hergestellten Polymere liegen, führen zu sehr hohen Reaktionsdrücken, die einen wirtschaftlichen Betrieb des Polymerisationsverfahrens erschweren. Hinzu kommt, dass in weiten Teilen des angegebenen Prozessfensters ($T_R$ 40 - 250°C, $p_R$ 10 - 3000 bar) viele erfindungsgemäße Monomere im überkritischen Zustand vorliegen, was einen hohen technischen Aufwand zur Beherrschung des Prozesses erfordert, und die Wirtschaftlichkeit des Verfahrens weiter einschränkt.

Walter et al. beschreiben die Herstellung "neuer" Polypropylencopolymere unter Verwendung von Metallocenkatalysatoren. Dabei werden Metallocenkatalysatoren eingesetzt, welche isotaktische Polymere erzeugen. Es wird festgestellt, dass sich Benzoindenylsysteme mit 2-Methylsubstitution vor allem für moderne Propylen-Gasphasenpolymerisationsprozesse eignen [Walter, Philipp; Mader, Dietmar; Reichert, Peter; Mulhaupt, Rolf; Journal of Macromolecular Science, Pure and Applied Chemistry (1999), A36(11), 1613-1639].

In der JP 2004-196848 werden niedrigkristalline 1-Buten-Blockcopolymer mit 0,5-50 mol-% Ethylen oder Propylenanteilen beschrieben, die über Polymerisation mit doppelt verbrückten Metallocenkatalysatoren zugänglich sind. Die beschriebenen Polymere erfüllen auf Grund ihrer geringen Kristallinität und ihrem niedrigen Schmelzpunkt nicht die Voraussetzungen für einen Einsatz als Klebrohstoffe, da die aus ihnen erhältlichen Formulierungen einen zu geringen Wärmestand aufweisen.

In der US 2004/0110910 wird ein Verfahren zur Herstellung verzweigter hochkristalliner Polypropylenpolymere mit geringem Ethylengehalt (0-2 ma-%) und Schmelzenthalpie von > 70 J/g beschrieben, die sich u. a. auch für eine Verwendung beispielsweise. in Klebstoffen eignen sollen. Zur Herstellung werden insbesondere Bisindenylzirkonocene verwendet, insbesondere solche mit Phenylsubstituenten am Indenylsystem. Auf Grund ihrer hohen Kristallinität sind die genannten Polymere überwiegend hart und unflexibel was für die in der vorliegenden Anmeldung beabsichtigten Verwendungen kontraproduktiv ist. Durch die zusätzlich vorliegenden Verzweigungen wird das Aufschmelz- bzw. Abbindeverhalten in ebenfalls stark negativer Art beeinflusst.

Hoch isotaktische bzw. syndiotaktische Polypropylen-Homo- bzw. Copolymere mit Ethylen und/oder höheren Olefinen, wie sie in den genannten Offenlegungen beschrieben werden, sind für den Einsatz als Schmelzkleber bzw. Klebrohstoff ungeeignet.

Es bestand somit ein Bedarf an funktionalisierten (teilkristallinen) Polyolefinen, mit verbesserten Materialeigenschaften, insbesondere an funktionalisierten Polyolefinen, die auf Basis von unfunktionalisierten Polyolefinen mit definierter Polymerstruktur hergestellt werden, welche auf Grund ihrer definierten Kettenstruktur bei der radikalischen Funktionalisierung einen hohen Funktionalisierungsgrad bei gleichzeitig moderatem Polymerabbau ermöglichen. Gleichzeitig sollen die funktionalisierten Polyolefine bei guten kohäsiven Eigenschaften zusätzlich ein stark adhäsiv geprägtes Materialverhalten zeigen, ohne die Nachteile von vollständig amorphen Polymersystemen aufzuweisen. Überraschenderweise wurde gefunden, dass die funktionalisierten Polyolefine gemäß der vorliegenden Erfindung dieses komplexe Anforderungsprofil erfüllen, und insbesondere zum Einsatz in oder als Klebstoff geeignet sind.

Ein erster Gegenstand der vorliegenden Erfindung sind demnach modifizierte Polyolefine auf Basis unfunktionalisierter Polyolefine, die maximal 30 ma-% Ethylen, entweder 70-98 ma-% oder maximal 30 ma-% Propylen und/oder entweder 70-100 ma-% oder maximal 25 ma-% 1-Buten enthalten, wobei die Summe der Anteile 100 ma-% beträgt, wobei die durch $^{13}C$-NMR bestimmte Triadenverteilung für Propentriaden (für den Fall, dass die Polymere Propentriaden enthalten) einen ataktischen Anteil von 20-55 ma-%, einen syndiotaktischen Anteil von maximal 30 ma-% und einen isotaktischen Anteil von 40-80 ma-% aufweisen, und/oder die durch $^{13}C$-NMR bestimmte Triadenverteilung für 1-Butentriaden (für den Fall, dass die erfindungsgemäßen Polymere 1-Butentriaden enthalten) einen ataktischen Anteil von 2-85 ma-% und einen syndiotaktischen Anteil von maximal 20 ma-% aufweisen, wobei sich die Anteile isotaktischer, syndiotaktischer und ataktischer Triaden von Propen bzw. 1-Buten jeweils zu 100% addieren, wobei die unfunktionalisierten Polymere unter Verwendung eines Metallocen-Katalysators hergestellt worden sind und wobei auf die unfunktionalisierten Polyolefine ein oder mehrere funktionelle Gruppen aufweisende Monomere aufgepfropft sind, bevorzugt mittels radikalischer Pfropfpolymerisation. Die funktionalisierten Polyolefine werden insbesondere als und/oder in Klebstoffen eingesetzt.

Generell gibt es wesentliche Unterscheide zwischen Polyoefinen, die auf Basis von Ziegler-Natta-Katalysatoren (z. B. geträgerten oder ungeträgerten $TiCl_3$*$AlCl_3$-Katalysatoren) und solchen, die auf Basis von Metallocenkatalysatoren hergestellt werden. Dies führt u. a. dazu, dass sich die erfindungsgemäß eingesetzten unmodifizierten Polyolefine nicht

durch klassische Ziegler-Natta-Katalyse erhalten lassen. Haupt-Unterschiede sind die molekulare und chemische Einheitlichkeit der (Co)polymere, die, auf Grund der heterogenen Katalysatorstruktur (sog. "multi-site"-Katalysatoren), bei Ziegler-Natta-Polyolefinen deutlich geringer als bei Metallocenbasierten Polyolefinen ausgeprägt ist. Insbesondere lassen sich Polydispersitäten von < 3 und die gleichzeitige statistische Verteilung von Comonomeren (insbesondere von solchen mit hoher Reaktivität wie z. B. Ethylen) über die Polymerkette durch Ziegler-Natta-Katalysatoren nicht realisieren. Dadurch liegen die Anteile an niedermolekularen Spezies bei Ziegler-Natta-Polyolefinen in der Regel deutlich höher als bei Metallocen-Polyolefinen.

Die erfindungsgemäßen funktionalisierten Polyolefine haben insbesondere den Vorteil, dass Sie auf Grund ihrer definierten Polymerkettenstruktur sowohl eine gute Adhäsion auf den meisten gängigen Materialien als auch eine gute Materialkohäsion aufweisen, wobei die definierte Polymerkettenstruktur der erfindungsgemäßen Polymere auch ohne Berücksichtigung der (zusätzlichen) Effekte, welche durch die aufgepfropften Monomere hervorgerufen werden, insbesondere eine gute Oberflächenbenetzung, und damit eine gute Adhäsion auf einem zur Verklebung verwendeten Substrat bewirkt. Auf Grund der im erfindungsgemäßen unmodifizierten Polymer vorhandenen ataktischen Strukturelemente (z. B. Comonomerblöcke) wird insbesondere die bei radikalischen Polymermodifizierungen auftretende Kettenspaltung (β-Scission) unterdrückt, so dass ein hoher Funktionalisierungsgrad bei gleichzeitig hohen Molmassen erzielt wird, was z. B. zu funktionalisierten Polyolefinen mit hoher Reaktivität bei gleichzeitig hoher Schmelzviskosität führt. Insbesondere von Vorteil ist der Einsatz der erfindungsgemäßen funktionalisierten Polyolefine in Klebstoffen, insbesondere in Schmelzklebstoffen, deren physikalische Eigenschaften auf diese Weise im Wesentlichen durch die vorteilhaften Materialeigenschaften der erfindungsgemäßen funktionalisierten Polyolefine geprägt werden.

Insbesondere sind die erfindungsgemäßen funktionalisierten Polymere unter Verwendung der erfindungsgemäßen unfunktionalisierten Polymere erhältlich durch Verfahren wie nachfolgend in der vorliegenden Erfindung beschrieben. Der Einsatz der erfindungsgemäßen Verfahren zur Herstellung der erfindungsgemäßen funktionalisierten Polymere ist insbesondere bevorzugt und ermöglicht einen einfachen Zugang zu den gewünschten funktionalisierten Polymeren.

Wesentlich für die positiven Eigenschaften der erfindungsgemäßen funktionalisierten Polyolefine ist/sind die spezielle Mikrostruktur der zur Funktionalisierung eingesetzten Polymerketten, ihre Polymerzusammensetzung bzw. die speziellen (makroskopischen) Materialeigenschaften des eingesetzten Basispolymers.

Bei den zur Herstellung der erfindungsgemäßen funktionalisierten Polymere verwendeten unfunktionalisierten Polyolefinen, weist die durch $^{13}$C-NMR bestimmte Triadenverteilung für Propentriaden (unter der Voraussetzung das das Polymer Propentriaden enthält) einen ataktischen Anteil von 20-55 ma-%, bevorzugt von 21-53 ma-%, besonders bevorzugt von 22-51 ma-% und insbesondere von 23-50 ma-%, bezogen auf die Propentriaden, auf. Dadurch wird erreicht, dass sowohl die erfindungsgemäßen unfunktionalisierten Polymere, wie auch die daraus hergestellten funktionalisierten Polymere beim Auftrag auf eine Oberfläche (z. B. ein zu verklebendes Substrat), insbesondere aber auf Olefin-Homo- und -Copolymeren, zu einer optimalen Benetzung dieser Oberfläche führen, was eine sehr gute Adhäsion bewirkt sowie allein oder in Formulierungen eine hohe Flexibilität, insbesondere eine hohe Dehnbarkeit besitzen. Zusätzlich werden durch eine Beschränkung der parallel zur Pfropfung ablaufenden Kettenspaltung (sog. "β-Scission" = Nebenreaktion) bei der radikalischen Funktionalisierung hohe Pfropfgrade erreicht.

Ebenfalls vorzugsweise weist die durch $^{13}$C-NMR bestimmte Triadenverteilung für Propentriaden bei den zur Herstellung der erfindungsgemäßen funktionalisierten Polymere verwendeten unfunktionalisierten Polyolefinen (unter der Voraussetzung das das Polymer Propentriaden enthält) einen isotaktischen Anteil von 40 - 80 ma-%, bevorzugt von 42 - 78 ma-%, besonders bevorzugt von 44 - 76 ma-% und insbesondere von 45 - 75 ma-%, bezogen auf die Propentriaden, auf. Dadurch wird erreicht, dass sowohl die erfindungsgemäßen unfunktionalisierten Polymere wie auch die daraus hergestellten funktionalisierten Polymere zusätzlich zu den dominierenden adhäsiven Materialeigenschaften eine erhöhte Kohäsion und einen hohen Wärmestand aufweisen.

Weiterhin weist die durch $^{13}$C-NMR bestimmte Triadenverteilung für Propentriaden bei den zur Herstellung der erfindungsgemäßen funktionalisierten Polymere verwendeten unfunktionalisierten Polyolefinen (unter der Voraussetzung das das Polymer Propentriaden enthält) einen syndiotaktischen Anteil von maximal 30 ma-%, bevorzugt von 1 - 27 ma-%, besonders bevorzugt von 3 - 25 ma-% und insbesondere von 5 - 23 ma-%, bezogen auf die Propentriaden, auf. Dadurch wird erreicht, dass sowohl die erfindungsgemäßen unfunktionalisierten Polymere wie auch die daraus hergestellten funktionalisierten Polymere zusätzlich zu den adhäsiven und kohäsiven Materialeigenschaften eine hohe Elastizität besitzen, und beim Schmelzeauftrag einen optimalen Verlauf zeigen. Hinzu kommt eine verbesserte Transparenz, die insbesondere im Bereich der Folienverklebung erwünscht ist.

Insbesondere bevorzugt weist die durch $^{13}$C-NMR bestimmte Triadenverteilung für 1-Butentriaden bei den zur Herstellung der erfindungsgemäßen funktionalisierten Polymeren verwendeten unfunktionalisierten Polyolefinen (unter der Voraussetzung das das Polymer 1-Butentriaden enthält) einen isotaktischen Anteil von 20 - 98 ma-%, bevorzugt von 22 - 96 ma-%, besonders bevorzugt von 24 - 94 ma-% und insbesondere von 25 - 92 ma-%, bezogen auf die 1-Butentriaden, auf.

Dadurch wird erreicht, dass sowohl die erfindungsgemäßen unfunktionalisierten Polymere wie auch die daraus

hergestellten funktionalisierten Polymere ein optimal ausbalanciertes Abbindeverhalten aufweisen. Im Vergleich mit isotaktischen Propyleneinheiten kristallisieren die isotaktischen 1-Buteneinheiten langsamer. Der erfindungsgemäße isotaktische Anteil garantiert eine optimale Anfangsfestigkeit. Durch die zeitverzögerte Phasenumwandlung von tetragonalen Phase II-Kristalliten in hexagonale Phase I-Kristallite zeigen die Polymeren nach der Abkühlung aus der Schmelze über einen relativ langen Zeitraum eine hohe Flexibilität.

Insbesondere bevorzugt weist die durch $^{13}C$-NMR bestimmte Triadenverteilung für 1-Butentriaden (unter der Voraussetzung das das Polymer 1-Butentriaden enthält) einen syndiotaktischen Anteil von maximal 20 ma-%, bevorzugt von maximal 18 ma-%, besonders bevorzugt von maximal 16 ma-% und insbesondere von 1 - 15 ma-%, bezogen aufdie 1-Butentriaden, auf.

Dadurch wird erreicht, dass sowohl die erfindungsgemäßen unfunktionalisierten Polymere wie auch die daraus hergestellten funktionalisierten Polymere eine hohe Elastizität besitzen und beim Schmelzeauftrag einen optimalen Verlauf zeigen. Hinzu kommt eine verbesserte Transparenz, die insbesondere im Bereich der Folienverklebung erwünscht ist.

Weiterhin bevorzugt weist die durch $^{13}C$-NMR bestimmte Triadenverteilung für 1-Butentriaden bei den zur Herstellung der erfindungsgemäßen funktionalisierten Polymeren verwendeten unfunktionalisierten Polyolefinen (unter der Voraussetzung das das Polymer 1-Butentriaden enthält) einen ataktischen Anteil von bevorzugt 2-80 ma-%, besonders bevorzugt von 4-75 ma-% und insbesondere von 5-70 ma-% bezogen auf die 1-Butentriaden, auf. Dadurch wird erreicht, dass die erfindungsgemäßen Polymere ein optimales Maß an Adhäsion auf allen relevanten Substraten, insbesondere aber auf Olefin-Homo- und -Copolymeren aufweisen sowie allein oder in Formulierungen eine hohe Flexibilität, insbesondere eine hohe Dehnbarkeit besitzen.

Zusätzlich bevorzugt weist die durch $^{13}C$-NMR bestimmte Triadenverteilung bei den zur Herstellung der erfindungsgemäßen funktionalisierten Polymeren verwendeten unfunktionalisierten Polyolefine für den Fall, dass es sich bei diesen um Poly(ethylen-co-propylen-co-1-buten)-Terpolymere handelt, für Ethylengehalte bis 30 ma-% einen Anteil an Ethylentriaden von 0,1 - 10 ma-%, bevorzugt 0,25 - 7,5 ma-% besonders bevorzugt 0,3 - 7 ma-%, insbesondere bevorzugt 0,4 - 6,8 ma-%, bezogen auf den Ethylenanteil, auf, so dass das Monomer Ethylen also entweder weitgehend statistisch über die Polymerkette verteilt, oder blockartig eingebaut wird.

Dadurch wird erreicht, dass sich für die erfindungsgemäßen unfunktionalisierten wie funktionalisierten Polymere Kristallinität und Materialverhalten gezielt einstellen lassen. Bei einer statistischen Verteilung über die Polymerkette erfolgt eine starke Störung der Kristallinität, da die für eine Kristallisation notwendige Mindestblocklänge der unterschiedlichen Monomereinheiten häufig unterschritten wird. Bei blockartiger Kombination mit isotaktischen Propyleneinheiten kommt es zu einer "hart-weich"-Blockbildung, da die Ethylenblöcke im Gegensatz zu den Propylenblöcken nicht die für eine "eigene" Kristallisation notwendige Mindestblocklänge erreichen. Die Ethylenblöcke sind jedoch nie so lang, dass bei einer radikalischen Pfropfpolymerisation eine Vernetzung (gekennzeichnet beispielsweise durch eine signifikant ansteigende Schmelzviskosität) stattfindet.

Die zur Herstellung der erfindungsgemäßen funktionalisierten Polymeren verwendeten unfunktionalisierten Polyolefine enthalten vorzugsweise maximal 30 ma-% bevorzugt maximal 25 ma-% und besonders bevorzugt maximal 23 ma-% und ganz besonders bevorzugt maximal 20 ma-% Ethylen.

In einer bevorzugten Ausführungsform der vorliegenden Erfindung enthalten die zur Herstellung der erfindungsgemäßen funktionalisierten Polymeren verwendeten unfunktionalisierten Polyolefine 100 ma-% 1-Buten.

In einer weiteren bevorzugten Ausführungsform der vorliegenden Erfindung handelt es sich bei den erfindungsgemäß zur Modifizierung eingesetzten unmodifizierten Polymere insbesondere um Copolymere aus Ethylen, Propylen und/oder 1-Buten, wobei die Copolymere maximal 30 ma-% bevorzugt maximal 25 ma-% und besonders bevorzugt maximal 22 ma-% und ganz besonders bevorzugt maximal 20 ma-% Ethylen enthalten. Für den Propylen- beziehungsweise Butenanteil gibt es mehrere alternative Möglichkeiten. Entweder liegt der Propylenanteil bei 70 - 98 ma-%, bevorzugt zwischen 72 - 95 ma-% oder der Propylenanteil liegt bei maximal 30 ma-%, bevorzugt zwischen 1 - 27 ma-% und besonders bevorzugt zwischen 2 - 25 ma-%. Der Butenanteil liegt entweder bei 70 - 100 ma-%, bevorzugt zwischen 75 - 95 ma-% oder bei maximal 25 ma-%, bevorzugt zwischen 1 - 23 ma-% und besonders bevorzugt zwischen 2 - 20 ma-%. In Summe muss der Anteil aller genannten Comonomere 100 ma-% ergeben, das heißt, entweder sind die erfindungsgemäßen Polymere Propylen- oder Buten-reicher, wobei die genannten Monomere beliebig miteinander kombiniert werden können, also Propylen mit Buten und/oder Ethylen.

Insbesondere handelt es sich bei den zur Herstellung der erfindungsgemäßen funktionalisierten Polymeren verwendeten unfunktionalisierten Polymere um Poly(ethylen-co-propylen)-Copolymere mit einem Ethylenanteil von maximal 30 ma-%, um Poly(ethylen-co-1-buten)-Copolymere mit einem Ethylenanteil von maximal 30 ma-%, um Poly (propylen-co-1-buten)-Copolymere mit einem Propylenanteil von maximal 30 ma-% oder um Poly(propylen-co-1-buten)-Copolymere mit einem 1-Butenanteil von maximal 25 ma-%.

In einer besonderen Ausführungsform der vorliegenden Erfindung enthalten die zur Herstellung der erfindungsgemäßen funktionalisierten Polymeren verwendeten unfunktionalisierten Polymere Propylen, 1-Buten und/oder Ethylen sowie ein verzweigtes Olefin ausgewählt aus der Gruppe umfassend 3-Methyl-1-buten, 4-Methyl-1-penten, 3-Methyl-1-hexen, 6-Methyl-1-hexen, 3-Methyl-1-hepten, wobei der Anteil des verzweigten 1-Olefins im Copolymer maximal 50 ma-%, bevorzugt maximal 40 ma-% und besonders bevorzugt maximal 30 ma-% beträgt.

Für den ebenfalls bevorzugten Fall eines Terpolymers enthalten die zur Herstellung der erfindungsgemäßen funktionalisierten Polymeren verwendeten unfunktionalisierten Terpolymere insbesondere Ethylen, Propylen und 1-Buten, wobei eines der drei Comonomere einen Anteil von mindestens 70 ma-% aufweist, während die beiden anderen Monomere zusammen einen Anteil von maximal 30 ma-% bilden. Die Terpolymere enthalten einen Anteil von maximal 28 ma-%, bevorzugt maximal 25 ma-%, besonders bevorzugt maximal 23 ma-% Ethylen.

Folgende Unterkombinationen für die oben genannten Copolymere und Terpolymere sind dabei insbesondere bevorzugt: Poly(ethylen-co-propylen), Poly(ethylen-co-1-buten), Poly(propylen-co-1-buten), Poly(propylen-co-3-methyl-1-buten), Poly(1-buten-co-3-methyl-1-buten), Poly(propylen-co-3-methyl-1-hexen), Poly(propylen-co-3-methyl-1-hepten), Poly(ethylen-co-propylen-co-1-buten) und Poly(ethylen-co-propylen-co-3-methyl-1-buten).

Die zur Herstellung der erfindungsgemäßen funktionalisierten Polymeren verwendeten unfunktionalisierten Polymere liegen bevorzugt in Form eines Pulvers, in Form von Pellets oder in Form eines Granulates vor. Die direkte Weiterverarbeitung von schmelzflüssigen unfunktionalisierten Polymeren zu den erfindungsgemäßen funktionalisierten Produkten ist ebenfalls möglich.

Die erfindungsgemäßen unfunktionalisierten Polymere enthalten vorzugsweise keine aus dem Polymerisationsprozess stammenden aromatischen Verbindungen (d. h. < 100 $\mu$g/g). Darüber hinaus enthalten Sie im Wesentlichen keine organischen halogenierten Verbindungen, die aus dem Polymerisationsprozess stammen. Ebenfalls bevorzugt ist, dass die Polymere keine Verunreinigungen durch Suspendieröle (Trennmittel), keine Reste anorganischer Trägermaterialien, insbesondere keine anorganischen Oxide und/oder Erdalkalimetallhalogenide (wie z. B. $MgCl_2$), keine anorganischen oder organischen Borverbindungen, keine Talcite und/oder Hydrotalcite und/oder deren Abbauprodukte sowie keine Verunreinigungen durch Alkohole, insbesondere durch Methanol enthalten.

Die Molmassenverteilung der zur Herstellung der erfindungsgemäßen funktionalisierten Polymeren verwendeten unfunktionalisierten Polymere kann monomodal oder bimodal sein, insbesondere bevorzugt ist die Molmassenverteilung monomodal.

Polymere mit monomodaler Molmassenverteilung zeichnen sich (insbesondere bei niedriger Polydispersität) durch eine geringe Varianz der Materialeigenschaften aus. So weisen monomodal verteilte Polyolefine beispielsweise ein klar definiertes Aufschmelz- und Abbindeverhalten auf. Bei sehr enger Molmassenverteilung lässt sich ein definiertes Aufschmelz-/Abbindeverhalten auch mit bimodal verteilten Polymeren erreichen, insbesondere wenn längere offene Zeiten gefordert sind und/oder keine scharfen Schmelzpeaks auftreten dürfen (z. B. bei langen Fügezeiten oder schwankender Applikationstemperatur).

Weiterhin weisen die zur Herstellung der erfindungsgemäßen funktionalisierten Polymeren verwendeten unfunktionalisierten Polymere eine Polydispersität, bestimmt durch Hochtemperatur-Gelpermeationschromatographie mit universeller Kalibrierung, von 1,3-4, bevorzugt von 1,4-3,5, besonders bevorzugt von 1,4-3,0 , insbesondere von 1,4-2,9 und ganz besonders bevorzugt von 1,5-2,7 auf. Dieser Bereich ist besonders vorteilhaft, insbesondere für die Anwendung im Klebstoffbereich. Das Kristallisations- bzw. Aufschmelzverhalten bei Polymeren, insbesondere bei Polyolefinen ist bekannter Maßen eine Funktion der Molmasse, bei linearen Polyolefinen insbesondere der Kettenlänge. So ist z. B. von klassischen amorphen Polyolefinen, wie sie derzeit im Bereich der Heißschmelzkleber eingesetzt werden, bekannt, dass eine Polydispersität von 4-6 (oder noch höher) zu einem sehr breiten Aufschmelzbereich einerseits und zu einer verzögerten physikalischen Aushärtung/Kristallisation andererseits führt. Ein zusätzlicher Nachteil der bekannten Systeme ist, dass Polymere mit breiter Molmassenverteilung infolge der beschriebenen Kristallisationsdefizite häufig auch schlechte Zugfestigkeiten zeigen, was ebenfalls unerwünscht ist. Generell ist eine breite Molmassenverteilung ein Zeichen dafür, dass kein einheitliches Polymer sondern vielmehr eine Polymermischung (bzw. ein Polymerblend) vorliegt, was bekannter Maßen zu

Einschränkungen bei den Materialeigenschaften führt.

Die gewichtsmittlere Molmasse der zur Herstellung der erfindungsgemäßen funktionalisierten Polymeren verwendeten unfunktionalisierten Polymere, bestimmt durch Hochtemperatur-Gelpermeationschromatographie mit universeller Kalibrierung, liegt üblicherweise im Bereich von 10000 bis 150000 g/mol, bevorzugt von 12000 bis 130000 g/mol, besonders bevorzugt im Bereich von 14000 bis 120000 g/mol und insbesondere bevorzugt im Bereich von 15000 bis 110000 g/mol, wobei weitere Vorzugsbereiche zwischen 15000 und 45000 g/mol, zwischen 30000 und 75000 g/mol und zwischen 60000 und 105000 g/mol liegen. Dieser Bereich ist besonders vorteilhaft, für den Einsatz in radikalischen Pfropfprozessen, da inklusive der (in den meisten Fällen obligatorische) Kettenspaltung während der Pfropfreaktion Polymere mit Molmassen erhalten werden, die eine gute Grundkohäsion gewährleisten. Die erfindungsgemäßen modifizierten Polymere verfügen damit über eine optimale Schmelzviskosität im relevanten Applikationsfenster, so dass eine optimale Benetzung der zu verklebenden Oberfläche erfolgt. Die relativ niedrige Schmelzviskosität im bevorzugten Molmassenbereich ermöglicht außerdem eine Penetration in makroskopische und mikroskopische Oberflächenstrukturen.

Weiterhin zeichnen sich die zur Herstellung der erfindungsgemäßen funktionalisierten Polymeren verwendeten

unfunktionalisierten Polymere dadurch aus, dass sie einen ALPHAWERT, bestimmt durch Hochtemperatur-Gelpermeationschromatographie mit universeller Kalibrierung, im Bereich von 0,5 bis 1,2, bevorzugt im Bereich von 0,55 bis 1,15, besonders bevorzugt im Bereich von 0,58 bis 1,1 und insbesondere bevorzugt im Bereich von 0,6 bis 1,05 aufweisen. Die erfindungsgemäßen unmodifizierten Polymere zeichnen sich somit durch eine geringe Verzweigung aus, insbesondere enthalten sie bevorzugt keine Langkettenverzeigungen. Verzweigte Polymere zeigen auf Grund ihrer Molekülstruktur ein hochkomplexes rheologisches Verhalten, was zu einer schlechten Verarbeitbarkeit führt. Hinzu kommt, dass hochverzweigte Polyolefine (insbesondere solche mit hohem Ethylenanteil) zur peroxidischen Vernetzung neigen, was im vorliegenden Fall aus naheliegenden Gründen unerwünscht ist.

In einer besonders bevorzugten Ausführungsform liegt der durch Hochtemperatur-Gelpermeationschromatographie mit universeller Kalibrierung bestimmte ALPHAWERT für die zur Herstellung der erfindungsgemäßen funktionalisierten Polymeren verwendeten unfunktionalisierten Polymere zwischen 0,55 und 0,80, bevorzugt zwischen 0,57 und 0,79, und insbesondere bevorzugt zwischen 0,58 und 0,78, während gleichzeitig die ebenfalls durch Hochtemperatur-Gelpermeationschromatographie mit universeller Kalibrierung bestimmte Polydispersität der erfindungsgemäßen unfunktionalisierten Polymere zwischen 2,0 und 3,5, bevorzugt zwischen 2,1 und 3,4, besonders bevorzugt zwischen 2,2 und 3,3 und insbesondere bevorzugt zwischen 2,3 und 3,2 liegt.

In einer weiteren besonders bevorzugten Ausführungsform liegt der durch Hochtemperatur-Gelpermeationschromatographie mit universeller Kalibrierung bestimmte ALPHAWERT für die zur Herstellung der erfindungsgemäßen funktionalisierten Polymeren verwendeten unfunktionalisierten Polymere zwischen 0,7 und 1,1, bevorzugt zwischen 0,75 und 1,08, besonders bevorzugt zwischen 0,8 und 1,06 und insbesondere bevorzugt zwischen 0,82 und 1,05, während gleichzeitig die ebenfalls durch Hochtemperatur-Gelpermeationschromatographie mit universeller Kalibrierung bestimmte Polydispersität der erfindungsgemäßen unfunktionalisierten Polymere bei maximal 3, bevorzugt bei maximal 2,5, besonders bevorzugt bei maximal 2,3 und insbesondere bevorzugt bei maximal 2,0 liegt.

Vorzugsweise liegt der bei der Untersuchung durch Gelpermeationschromatographie gefundene Anteil an niedermolekularen Bestandteilen mit einem Molekulargewicht von 500 bis 1000 Dalton für die zur Herstellung der erfindungsgemäßen funktionalisierten Polymeren verwendeten unfunktionalisierten Polymere bei maximal 0,4 ma-%, bevorzugt bei maximal 0,3 ma-%, besonders bevorzugt bei maximal 0,2 ma-%, insbesondere bei maximal 0,15 ma-%. Ganz besonders bevorzugt können durch die beschriebene Methode keine Bestandteile mit einem Molekulargewicht von 500 bis 1000 Dalton detektiert werden. Dadurch wird erreicht, dass die erfindungsgemäßen Polymere keine Polymerbestandteile enthalten, die zur Migration neigen. Da es bei der radikalischen Funktionalisierung auch zu einer Kettenspaltung (β-Scission) kommen kann, können auch niedermolekulare Polymerketten entstehen. Die Gesamtkonzentration an niedermolekularen Polymerketten im funktionalisierten Polymer erreicht dabei insbesondere dann kritische Werte, wenn bereits im zur Funktionalisierung verwendeten unmodifizierten Polyolefin niedermolekulare Bestandteile enthalten sind.

Weiterhin bevorzugt liegt der bei der Untersuchung durch Hochtemperatur-Gelpermeationschromatographie mit universeller Kalibrierung gefundene Anteil an niedermolekularen Bestandteilen mit einem Molekulargewicht von kleiner 500 Dalton für die zur Herstellung der erfindungsgemäßen funktionalisierten Polymeren verwendeten unfunktionalisierten Polymere bei maximal 0,4 ma-%, bevorzugt bei maximal 0,3 ma-%, besonders bevorzugt bei maximal 0,20 ma-%, insbesondere bei maximal 0,15 ma-%. Ganz besonders bevorzugt können mit der beschriebenen Methode keine Bestandteile mit einem Molekulargewicht von < 500 Dalton detektiert werden. Da es bei der radikalischen Funktionalisierung auch zu einer Kettenspaltung (β-Scission) kommen kann, können auch niedermolekulare Polymerketten entstehen. Die Gesamtkonzentration an niedermolekularen Polymerketten im funktionalisierten Polymer erreicht dabei insbesondere dann kritische Werte, wenn bereits im zur Funktionalisierung verwendeten unmodifizierten Polyolefin niedermolekulare Bestandteile enthalten sind. Sind niedermolekulare Verbindungen mit Molmassen von < 500 Dalton in den zur Herstellung der erfindungsgemäßen modifizierten Polyolefine eingesetzten unmodifizierten Polyolefine enthalten, so besteht die Gefahr, dass sich bei der radikalischen Funktionalisierung verstärkt gasförmige Abbauprodukte bilden, die den Herstellprozess (z. B. durch Aufschäumen) stark erschweren.

In einer besonderen, bevorzugten Ausführungsform, weisen die zur Herstellung der erfindungsgemäßen funktionalisierten Polyolefine verwendeten unfunktionalisierten Polyolefine einen durch ht-GPC mit universeller Kalibrierung bestimmten Polymeranteil mit einem Molekulargewicht von 1.000 bis 500 Dalton von < 0,2 ma%, bevorzugt < 0,15 ma%, besonders bevorzugt < 0,1 ma% und insbesondere bevorzugt von < 0,075 ma% auf, während gleichzeitig der ebenfalls durch ht-GPC mit universeller Kalibrierung bestimmten Polymeranteil mit einem Molekulargewicht kleiner 500 Dalton bei < 0,2 ma%, bevorzugt < 0,15 ma%, besonders bevorzugt < 0,1 ma% und insbesondere bevorzugt < 0,075 ma% liegt.

In einer weiteren besonders bevorzugten Ausführungsform weisen die zur Herstellung der erfindungsgemäßen funktionalisierten Polyolefine verwendeten unfunktionalisierten Polyolefine keinen durch ht-GPC mit universeller Kalibrierung nachweisbaren Polymeranteil mit einem Molekulargewicht von 1000 bis 500 Dalton auf, während sich gleichzeitig auch kein Anteil mit einem Molekulargewicht von kleiner 500 Dalton mit der beschriebenen ht-GPC-Methode nachweisen lässt.

Weiterhin zeichnen sich die zur Herstellung der erfindungsgemäßen funktionalisierten Polymeren verwendeten

unfunktionalisierten Polymere dadurch aus, dass sie bei einer Temperatur von 190 °C, einer Deformation von maximal 1 % und einer Messfrequenz von 1 Hz eine komplexe Schmelzviskosität von 750 bis 100000 mPa*s, bevorzugt von 800 bis 75000 mPa*s, besonders bevorzugt von 900 bis 50000 mPa*s und insbesondere bevorzugt von 1000 bis 40000 mPa*s aufweisen, wobei Schmelzviskositäten von 750 bis 10000 mPa*s, 850 bis 9000 mPa*s, 900 bis 7500 mPa*s, insbesondere 1000 bis 6500 mPa*s ganz besonders bevorzugt sind. Dies führt dazu, dass durch die Verarbeitung der erfindungsgemäßen unfunktionalisierten Polyolefine in einem radikalisch initiierten Pfropfpolymerisationsprozess funktionalisierte Polyolefine mit unterschiedlichen an den jeweiligen Anwendungsbereich angepassten Schmelzviskositäten bereit gestellt werden können, wobei die Limitierung bei hohen Schmelzviskositäten dazu führt, dass immer eine optimale Durchmischung von Polymerschmelze, Monomeren und/oder Initiatoren erzielt werden kann.

Die Schmelzen der für die Funktionalisierung eingesetzten unfunktionalisierten Polyolefine zeichnen sich durch eine gewisse Strukturviskosität aus, die insbesondere für die Verarbeitung in Schmelzprozessen besonders günstig ist. Als Maßstab für die Strukturviskosität der erfindungsgemäßen Polymere kann das Verhältnis der Schmelzviskosität gemessen bei 190 °C und einer Deformation von maximal 1 % bei einer Schergeschwindigkeit von 10 Hz und einer Schergeschwindigkeit von 0,1 Hz dienen. Dieses Verhältnis liegt für die zur Herstellung der erfindungsgemäßen funktionalisierten Polymeren verwendeten unfunktionalisierten Polymere zwischen 1 : 1 und 1 : 10, bevorzugt zwischen 1 : 1,05 und 1 : 8, besonders bevorzugt zwischen 1 : 1,075 und 1 : 6 und besonders bevorzugt zwischen 1 : 1,1 und 1 : 5.

Die Nadelpenetration der zur Modifizierung eingesetzten unmodifizierten Polymere liegt bei maximal 60 * 0,1 mm, bevorzugt im Bereich von 1 - 58 *0,1mm, besonders bevorzugt von 3 - 56 *0,1 mm und insbesondere bevorzugt von 5 - 55 *0,1 mm, wobei Wertebereiche von 1 - 30 * 0,1 mm, 1 - 28 * 0,1 mm, 2 - 26 * 0,1 mm, 3 - 24 * 0,1 mm, 3 - 20 * 0,1 mm, 4 - 17 * 0,1 mm, 5 - 16 * 0,1 mm und insbesondere 6 - 15 * 0,1 mm ganz besonders bevorzugt sind. Dadurch wird erreicht, dass die erfindungsgemäß eingesetzten unmodifizierten Polymere ein optimales Verhältnis von Festigkeit und Plastizität aufweisen, was für die Verarbeitung in bzw. aus der Schmelze besonders vorteilhaft ist (sehr gutes Aufschmelzverhalten).

Die erfindungsgemäß eingesetzten unmodifizierten Polymere sind überwiegend teilkristalliner Natur, weisen also einen signifikanten kristallinen Anteil auf. Dies zeigt sich in Schmelzpeaks beim ersten und/oder zweiten Aufheizen der Polymere in der DSC. Unabhängig von der Anzahl und Ausprägung der Schmelzpeaks liegen die Schmelzpeakmaxima für die erfindungsgemäßen Polyolefine bei der Vermessung mittels Differentialkalorimeter (DSC) in der 1. Aufheizung zwischen 35 und 140 °C. Es ist bevorzugt, dass bei der Vermessung im Differentialkalorimeter (DSC) beim ersten Aufheizen 1-3 Schmelzpeaks detektiert werden können, wobei im Falle von drei Schmelzpeaks das erste Schmelzpeakmaximum bei Temperaturen von 35 - 50 °C liegt, das zweite bei Temperaturen von 50 - 115 °C und das dritte bei Temperaturen von 70 - 140 °C, besonders bevorzugt bei Temperaturen von 75 - 135 °C. Treten nur zwei Schmelzpeaks auf, so liegt das erste Schmelzpeakmaximum zwischen 40 und 110 °C, das zweite zwischen 55 und 140 °C, besonders bevorzugt von 58 - 137 °C. Tritt nur ein Schmelzpeak auf, so liegt das Schmelzpeakmaximum zwischen 40 und 140 °C, bevorzugt zwischen 60 und 140 °C, besonders bevorzugt zwischen 70 und 140 °C und insbesondere bevorzugt zwischen 78 und 138 °C. Unabhängig von der Anzahl und Ausprägung der Schmelzpeaks liegen die Schmelzpeakmaxima für die unmodifizierten Polyolefine bei der Vermessung mittels Differentialkalorimeter (DSC) in der 2. Aufheizung zwischen 50 und 140 °C. Bei der zweiten Aufheizung im Differentialkalorimeter weisen die unmodifizierten Polymere bevorzugt 0, 1 oder 2 Schmelzpeaks auf. Bei zwei Schmelzpeaks liegt das erste Schmelzpeakmaximum bei 50 bis 110 °C, das zweiteSchmelzpeakmaximum bei 70 - 140 °C, besonders bevorzugt von 73 - 135 °C. Ist nur ein Schmelzpeak vorhanden, so liegt die Schmelztemperatur bei 60 bis 140 °C, besonders bevorzugt von 152 - 137 °C. Je nach Copolymerzusammensetzung weisen die Polymere eine Neigung zur Kaltkristallisation auf, wobei (sofern vorhanden) der exotherme Kaltkristallisationspeak beim 2. Aufheizen zwischen 5 und 40 °C liegt. Dadurch wird erreicht, dass die unmodifizierten Polymere ein optimales Verhältnis von kristallinen und nicht kristallinen Einheiten aufweisen und insbesondere im

Verarbeitungsfall (z. B. bei der radikalischen Pfropfmodifikation in der Schmelze) optimale thermische Eigenschaften zeigen.

Anders als hochkristalline Polyolefine, die einen einzelnen sehr scharfen Schmelzpeak aufweisen, zeigen die unmodifizierten Polymere in der 2. Aufheizkurve der DSC-Messung bei einer Aufheizgeschwindigkeit von 10 K/min. entweder keinen Schmelzpeak, einen Schmelzpeak oder zwei Schmelzpeaks, wobei diese Schmelzpeaks unterschiedliche Intensitäten aufweisen können. Zeigen die erfindungsgemäßen Polymere in der 2. Aufheizkurve der DSC-Messung keinen Schmelzpeak, so bedeutet dies nicht, dass sie keine kristallinen Anteile besitzen, sondern nur, dass diese in Folge der standardisierten Versuchsbedingungen nicht detektiert werden. In der ersten Aufheizkurve zeigen alle Polymere mindestens einen Schmelzpeak. Das Ende des Aufschmelzbereiches der 2. Aufheizkurve der DSC (sog. Peak-Offset) liegt für die erfindungsgemäßen Polymere zwischen 70 °C und 145 °C, bevorzugt zwischen 75 °C und 143 °C besonders bevorzugt zwischen 79 °C und 142 °C und insbesondere bevorzugt zwischen 80 °C und 140 °C.

Vorzugsweise weisen die zur Modifikation eingesetzten unmodifizierten Polymere eine beim zweiten Aufheizen in der DSC gemessene endotherme Schmelzenthalpie von maximal 30 J/g, bevorzugt von 1 - 27 J/g, besonders bevorzugt von 2 - 25 J/g und insbesondere bevorzugt von 3 - 23 J/g auf, wobei Wertebereiche von 0 - 10 J/g, 6 - 22 J/g, 10 - 20 J/g und insbesondere von 5 - 15 J/g ganz besonders bevorzugt sind. Dadurch wird erreicht, dass sowohl die unmodifizierten Polymere als auch die aus ihnen hergestellten modifizierten Polymere ein optimales Verhältnis von kristallinen und nicht kristallinen Anteilen aufweisen. Je nach Polymerzusammensetzung und gewählten Polymerisationsbedingungen können so Polymere zur Verfügung gestellt werden, zu deren Aufschmelzen nur ein sehr geringer oder aber (im Vergleich mit hochkristallinen Polyolefinen) ein moderater Energiebeitrag notwendig ist, was wiederum für die Verarbeitung in der Schmelze von Vorteil ist.

In einer ganz besonders bevorzugten Ausführungsform weisen die zur Modifikation eingesetzten unmodifizierten Polymere eine beim 2. Aufheizen in der DSC gemessene endotherme Schmelzenthalpie von 0 J/g (d.h. keine Endothermie detektierbar) und gleichzeitig eine Nadelpenetration von 20 - 60*0,1mm, bevorzugt von 25 - 55*0,1 mm und besonders bevorzugt von 27 - 53*0,1mm auf. Diese Kombination hat den Vorteil, dass Polymere zur Verfügung gestellt werden können, die nur eine äußerst geringe Energie zum Schmelzen benötigen, gleichzeitig aber eine gute Festigkeit aufweisen.

Die mittels DSC aus der 2. Aufheizkurve bestimmte Glasübergangstemperatur der unmodifizierten Polymere liegt bei maximal -8 °C, bevorzugt zwischen -9 und -55 °C, besonders bevorzugt zwischen -10 und - 52 °C und insbesondere bevorzugt zwischen -12 und -50 °C, wobei Wertebereiche zwischen -8 und -18 °C, -9 und -17 °C, -10 und -16 °C sowie zwischen - 20 und -48 °C, -25 und -45 °C und insbesondere -27 und -44 °C besonders bevorzugt sind. Dadurch wird erreicht, dass sowohl die unmodifizierten Polymere als auch die aus ihnen hergestellten modifizierten Polymere je nach Polymerzusammensetzung und gewählten Polymerisationsbedingungen auch in Anwendungsbereichen eingesetzt werden können, die hohe Tieftemperaturflexibilität verlangen und daher hochkristallinen Polyolefinen (wie z. B. isotakischem Polypropylen) verschlossen bleiben. Dabei ist insbesondere bemerkenswert, dass für die erfindungsgemäßen Polymere die niedrigen Glasübergangstemperaturen auch ohne den Einsatz von teuren Comonomeren wie z. B. 1-Penten, 1-Hexen, 1-Octen, 1-Nonen und/oder 1-Decen erreicht werden können.

Weiterhin liegt je nach Copolymerzusammensetzung der Erweichungspunkt, der erfindungsgemäß zur Modifizierung eingesetzten unmodifizierten Polymere, gemessen nach der Ring & Kugelmethode bei maximal 145 °C, bevorzugt bei 75 - 142 °C, besonders bevorzugt bei 80 - 140 °C und insbesondere bei 83 bis 138 °C, wobei Wertebereiche zwischen 80 und 118 °C, 90 und 115 °C sowie zwischen 116 und 135 °C und insbesondere 120 und 135 °C besonders bevorzugt sind. Dadurch wird erreicht, dass Polymere zur Verfügung gestellt werden können, die trotz einer relativ geringen Kristallinität, auch im unvernetzten Zustand erst bei hohen Temperaturen eine Erweichung erfahren, und damit Verklebungen mit hoher Wärmestandfestigkeit ermöglichen.

Eine Besonderheit der unmodifizierten Polymere ist, dass durch entsprechende Wahl der Polymerzusammensetzung und der Polymerisationsbedingungen auch Polymere zur Verfügung gestellt werden können, die in der 2. Aufheizung der DSC keinen Schmelzpeak aufweisen, aber dennoch einen Erweichungspunkt (Ring & Kugel) von über 90 °C, bevorzugt von über 95 °C und besonders bevorzugt von über 97 °C aufweisen.

Die zur Modifizierung eingesetzten unmodifizierten Polymere weisen vorzugsweise bei Raumtemperatur eine Löslichkeit in Xylol von mindestens 10 ma% auf, vorzugsweise eine Löslichkeit von mindestens 50 ma-%, bevorzugt von mindestens 55 ma-%, besonders bevorzugt von mindestens 57 ma-% und insbesondere bevorzugt von 60-100 ma-% auf. Dies hat den Vorteil, dass Polymere mit guter bis sehr guter Löslichkeit in Xylol zur Verfügung gestellt werden, die im Gegensatz zu bisher bekannten Systemen mit dieser Eigenschaft eine sehr enge Molmassenverteilung mit äußerst niedrigen niedermolekularen Anteilen aufweisen, so dass auch Polymere zur Verfügung gestellt werden, die trotz ihrer Löslichkeit in Xylol einen (zumindest in der ersten Aufheizung der DSC) messbaren kristallinen Anteil und eine (zumindest in der ersten Aufheizung der DSC) deutlich erkennbare Schmelztemperatur aufweisen. Die unmodifizierten Polymere mit hoher Löslichkeit in Xylol ermöglichen die einfache Herstellung radikalisch modifizierter Polymere durch lösungsmittelbasierte Herstellverfahren. In einer besonderen, bevorzugten Ausführungsform weisen die zur Modifikation eingesetzten unmodifizierten Polyolefine eine komplexe Schmelzviskosität (bestimmt bei 190°C mit einer Deformation von maximal 1 % und einer Messfrequenz von 1 Hz) von maximal 15.000 mPa*s, bevorzugt von maximal 10.000 mPa*s, besonders bevorzugt von maximal 7.500 mPa*s und insbesondere bevorzugt von maximal 5.500 mPa*s auf, während gleichzeitig ihre Löslichkeit in Xylol bei Raumtemperatur mindestens 70 ma-%, bevorzugt mindestens 75 ma-%, besonders bevorzugt mindestens 80 ma-% und insbesondere bevorzugt über 90 ma-% beträgt.

Die unmodifizierten Polymere weisen weiterhin vorzugsweise eine Löslichkeit in Tetrahydrofuran (THF) bei Raumtemperatur von mindestens 10 ma-%, bevorzugt von mindestens 25 ma-%, besonders bevorzugt von mindestens 50 ma-% und insbesondere bevorzugt von 60 - 100 ma-% auf.

Dies hat den Vorteil, dass unpolare Polymere mit guter Löslichkeit in einem polaren Lösungsmittel zur Verfügung gestellt werden können (z. B. für die Modifikation in Lösungsmittel-basierten Herstellverfahren), die im Gegensatz zu bisher bekannten Systemen mit dieser Eigenschaft eine hohe zahlenmittlere Molmasse und eine sehr enge Molmassenverteilung mit äußerst niedrigen niedermolekularen Anteilen aufweisen. Insbesondere beträgt die in der zweiten Aufheizung der DSC bestimmte exotherme Schmelzenergie für die zur Herstellung der erfindungsgemäßen modifizierten Polymere eingesetzten unmodifizierten Polymere mit 100%iger Löslichkeit in Tetrahydrofuran bei Raumtemperatur maximal 20 J/g, bevorzugt zwischen 1 und 18 J/g und besonders bevorzugt zwischen 2 und 17 J/g. Gleichzeitig liegt die durch Ring- und Kugelmethode bestimmte Erweichungstemperatur bei mindestens 80 °C bevorzugt bei mindestens 83

°C und besonders bevorzugt bei mindestens 85 °C und insbesondere bevorzugt bei 90-130 °C, während die Nadelpenetration bei maximal 55*0,1 mm, bevorzugt bei maximal 50*0,1 mm, besonders bevorzugt bei maximal 45*0,1 mm und insbesondere bevorzugt bei 1-40*0,1 mm liegt.

Weiterhin zeichnen sich die zur Modifizierung erfindungsgemäßen unmodifizierten Polymere dadurch aus, dass sie ohne weitere Zusätze nach mindestens 24 Stunden Lagerdauer im Zugversuch eine Zugfestigkeit von mindestens 0,2 MPa, bevorzugt von mindestens 0,5 MPa, besonders bevorzugt von mindestens 1 MPa und insbesondere von 1,25 bis 20 MPa aufweisen und/oder eine absolute Dehnung von mindestens 10 %, bevorzugt von mindestens 15 %, besonders bevorzugt von mindestens 40 % und insbesondere bevorzugt von 50 - 1200 % aufweisen, wobei weitere Vorzugsbereiche zwischen 40 und 250 %, zwischen 150 und 650 %, zwischen 300 und 750 %, zwischen 500 und 950 % sowie zwischen 600 und 1.100 % liegen.

In einer ganz besonders bevorzugten Ausführungsform weisen die erfindungsgemäß zur Modifizierung eingesetzten unmodifizierten Polyolefine eine Zugfestigkeit von mindestens 1 MPa, bevorzugt von mindestens 2 MPa und insbesondere bevorzugt von mindestens 3 MPa auf, während gleichzeitig die absolute Bruchdehnung mindestens 150 %, bevorzugt mindestens 250 %, besonders bevorzugt mindestens 350 % und insbesondere bevorzugt mindestens 500 % beträgt.

In einer weiteren ganz besonders bevorzugten Ausführungsform weisen die zur Modifizierung eingesetzten unmodifizierten Polyolefine gleichzeitig eine Schmelzviskosität bei 190 °C von < 5000 mPa*s, eine Zugfestigkeit von mindestens 1 MPa und eine Erweichungstemperatur (bestimmt nach der Ring- und Kugelmethode) von > 90 °C auf.

Die Herstellung der zur Modifizierung eingesetzten unmodifizierten Polyolefine erfolgt durch in Kontakt bringen eines Metallocen-Katalysators mit mindestens einem ersten Lösungsmittel, wobei das mindestens eine erste Lösungsmittel ein nicht halogeniertes aliphatisches Lösungsmittel ist, mindestens einer durch Alkylgruppen modifizierten Methylaluminoxankomponente, die gegebenenfalls in einem zweiten Lösungsmittel gelöst und/oder suspendiert vorliegt, wobei das zweite Lösungsmittel ein nicht halogeniertes Lösungsmittel ist, das gleich oder verschieden vom ersten Lösungsmittel sein kann, und mindestens eines 1-Olefin-Monomers in einem Reaktionsraum und anschließende Polymerisation des mindestens einen 1-Olefin-Monomers bei einer Reaktionstemperatur unter Bildung von erfindungsgemäßen Polyolefinen, dadurch gekennzeichnet, dass die Reaktionstemperatur oberhalb der Siedetemperatur des oder der ersten Lösungsmittel(s) liegt. Wesentlich ist dabei, dass die Reaktionstemperatur im stationären Reaktionszustand oberhalb der Siedetemperatur des oder der ersten Lösungsmittel(s) und vorzugsweise gleichzeitig unterhalb des Erweichungspunktes (bestimmt nach der Ring- und Kugelmethode) des erfindungsgemäß hergestellten Polymers liegt. Insbesondere liegt die Polymerisationstemperatur im stationären Reaktionszustand mindestens 10 K unterhalb der Erweichungstemperatur, bevorzugt mindestens 15 K, besonders bevorzugt mindestens 20 K und insbesondere bevorzugt mindestens 25 K. Letzteres ist ein besonders herausragendes Charakteristikum des erfindungsgemäßen Verfahrens, weil es trotz dieser Temperaturführung bei Anwendung des erfindungsgemäßen Verfahrens nicht zur Ausbildung von makroskopischen Polymerpartikeln (wie sie etwa bei einer Slurrypolymerisation vorliegen) im Polymerisationsmedium kommt, sondern in homogener Phase polymerisiert wird.

Das mindestens eine erste Lösungsmittel ist ausgewählt aus nicht halogenierten cyclischen und/oder linearen aliphatischen Lösungsmitteln. Vorzugsweise weist das Lösungsmittel eine Siedetemperatur bei Normaldruck von nicht mehr als 101 °C auf. Vorzugsweise weisen die aliphatischen Lösungsmittel eine Siedetemperatur bei Normaldruck von nicht mehr als 80 °C, bevorzugt von nicht mehr als 60 °C, besonders bevorzugt von nicht mehr als 40 °C und insbesondere bevorzugt von nicht mehr als 20 °C auf.

Insbesondere handelt es sich bei den nicht halogenierten aliphatischen

Lösungsmitteln um cyclische und/oder lineare aliphatische Verbindungen mit nicht mehr als 7 C-Atomen, vorzugsweise mit nicht mehr als 6 C-Atomen und besonders bevorzugt mit nicht mehr als 5 C-Atomen. Besonders bevorzugt ist das nicht halogenierte aliphatische Lösungsmittel ausgewählt aus der Gruppe umfassend Propan, Butan, Pentan, Cyclopentan, Methylcyclopentan, Hexan, Cyclohexan, Methylcyclohexan, Heptan oder Mischungen hieraus. Ganz besonders bevorzugt ist das Lösungsmittel Propan und/oder n-Butan.

Der Metallocen-Katalysator, der im vorliegenden Verfahren vorzugsweise eingesetzt wird, ist ausgewählt aus Verbindungen gemäß der Formel I

$$Z_xR^1R^{1a}YR^2R^{2a}(IndR^3R^4R^5R^6R^7R^8)_2MCl_2 \quad I$$

worin M ein Übergangsmetall ist, ausgewählt aus der Gruppe umfassend Zr, Hf und Ti, vorzugsweise Zr, worin Ind Indenyl bedeutet und worin $Z_xR^1R^{1a}YR^2R^{2a}$ als Brücke die Indenyl-Reste verbindet, mit Z und Y ausgewählt aus Kohlenstoff und/oder Silizium, mit x = 0 oder 1, worin $R^1$, $R^{1a}$ und $R^2$ und $R^{2a}$ unabhängig voneinander ausgewählt sind aus H, linearen oder verzweigten Alkylgruppen mit 1 bis 6 C-Atomen, Alkoxylalkylgruppen mit 1 bis 6 C-Atomen, Arylgruppen oder Alkoxyarylgruppen mit 6 bis 10 C-Atomen und mit $R^3$ bis $R^8$ ausgewählt aus der Gruppe umfassend H und/oder lineare oder verzweigte Alkylgruppen mit 1 bis 10 C-Atomen, Alkylarylgruppen, Arylalkylgruppen oder Arylgruppen mit 6 bis 10 C-Atomen. Vorzugsweise sind die Reste $R^3$, $R^5$ und/oder $R^7$ ausgewählt aus der Gruppe umfassend

H und/oder lineare oder verzweigte Alkylgruppen mit 1 bis 10 C-Atomen oder Arylgruppen mit 6 bis 10 C-Atomen, insbesondere lineare oder verzweigte Alkylgruppen mit 1 bis 10 C-Atomen. Sind $R^6$ und $R^7$ gleichzeitig nicht mit H substituiert, so sind $R^6$ und $R^7$ insbesondere bevorzugt miteinander verknüpft, insbesondere in Form eines kondensierten Benzylrings. Besonders bevorzugt sind $R^3$ bis $R^8$ Wasserstoff, das heißt der Indenylring ist unsubstituiert. In einer besonderen Ausführungsform sind die Indenylliganden Tetrahydroindenylliganden.

Die Metallocenverbindung ist bevorzugt eine der Formeln II,

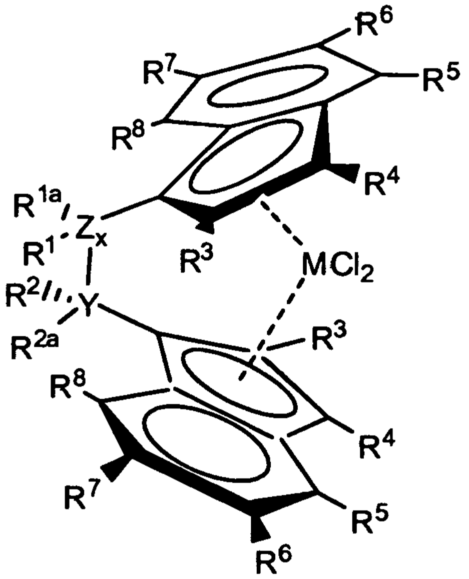

II

worin $R^1$ bis $R^8$ die vorab genannte Bedeutung haben.

Lineare und verzweigte Alkylgruppen mit 1 bis 10 C-Atomen sind insbesondere Substituenten ausgewählt aus der Gruppe umfassend Methyl, Ethyl, Propyl, isoPropyl, Butyl, tert.-Butyl, Pentyl, Hexyl, Heptyl, Octyl, Nonyl oder Decyl.

Alkoxygruppen mit 1 bis 4 C-Atomen sind insbesondere ausgewählt aus der Gruppe umfassend Methoxy, Ethoxy, iso-Propyloxy, tert-Butyloxy.

Arylgruppen mit 6 bis 10 C-Atomen sind insbesondere ausgewählt aus der Gruppe umfassend Benzyl, Phenyl und Indenyl.

Alkylarylgruppen mit 6 bis 10 C-Atomen sind insbesondere ausgewählt aus der Gruppe umfassend Methylenphenyl, Methylenindenyl und Ethylbenzyl.

Aryalkylgruppen mit 6 bis 10 C-Atomen sind insbesondere ausgewählt aus der Gruppe umfassend Methylphenyl, Dimethylphenyl, Ethylphenyl, Ethyl-Methylphenyl und Methylindenyl.

Alkoxyarylgruppen mit 6 bis 10 C-Atomen sind insbesondere ausgewählt aus der Gruppe umfassend Methoxyphenyl, Dimethoxyphenyl, Ethyoxyphenyl, Methoxy-Methoxyphenyl und Methoxyindenyl, wobei mindestens eine der enthaltenen Alkoxygruppen in para-Stellung zur Verknüpfung des Substituenten steht.

Insbesondere ist $Z_xR^1R^{1a}YR^2R^{2a}$ ausgewählt aus der Gruppe umfassend $-CH_2-$, - $HCCH_3$- $-C(CH_3)_2-$, $-CH_2CH_2-$, $-C(CH_3)_2C(CH_3)_2-$, $-CH_2C(CH_3)_2-$, $-Si(CH_3)_2-$, - $Si(CH_3)_2Si(CH_3)_2-$, $-Si(CH_3)_2C(CH_3)_2-$, $-C(CH_3)_2Si(CH_3)_2-$, $-C(C_6H_5)_2-$, $-C(C_6H_4OCH_3)_2-$, $-C(OCH_2C_6H_5)_2-$, $-C(OCH_3)_2-$ ,$-C(0CH_3)_2C(0CH_3)_2$, und $-CH_2C(OCH_3)_2-$.

Ganz besonders bevorzugt handelt es sich bei der Metallocenverbindung im vorliegenden erfindungsgemäßen Verfahren um Ethylidenbis(indenyl)-Zirkoniumdichlorid, Diphenylsilyl-bis(indenyl)-Zirkoniumdichlorid, Dimethylmethylen-bis(indenyl)Zirkoniumdichlorid, Dimethylsilyl-bis(2-methylindenyl)Zirkoniumdichlord, Dimethylsilyl-bis(2-methyl-4,6-diisopropylindenyl)-Zirkoniumdichlorid oder Dimethylsilyl-bis(2-methyl-benzoindenyl)-Zirkoniumdichlorid oder Ethylidenbis(tetrahydroindenyl)-Zirkoniumdichlorid.

Die genannten Verbindungen liegen vorzugsweise als racemisches Enantiomerengemisch vor und enthalten insbesondere bevorzugt nicht die enantiomorphe, optisch inaktive meso-Form in signifikantem Umfang. Der Anteil der meso-Form ist bei der vorliegenden Erfindung nicht größer als 5 ma-%, vorzugsweise nicht größer als 2 ma-% und insbesondere bevorzugt nicht größer als 1 ma-%.

Der Katalysator wird dem Polymerisationsraum vorzugsweise zusammen mit einem hohen Überschuss an aliphatischen Kohlenwasserstoff(en) zugeführt, besonders bevorzugt des ersten Lösungsmittels, wobei er besonders

bevorzugt in homogener Form, d. h. vollständig gelöst zugeführt wird.

Die bei der Polymerisation eingesetzten 1-Olefin-Monomere können grundsätzlich aus allen dem Fachmann bekannten 1-Olefinen ausgewählt werden. Insbesondere ist das mindestens eine 1-Olefin-Monomer ausgewählt aus der Gruppe umfassend Ethylen und lineare 1-Olefine. Geeignete lineare 1-Olefine sind insbesondere Propen und/oder 1-Buten.

Die mindestens eine durch Alkylgruppen modifizierte Methylaluminoxankomponente dient im erfindungsgemäßen Verfahren als Cokatalysator. Insbesondere handelt es sich bei dem Cokatalysator um eine Verbindung der Formel III für den linearen Typ

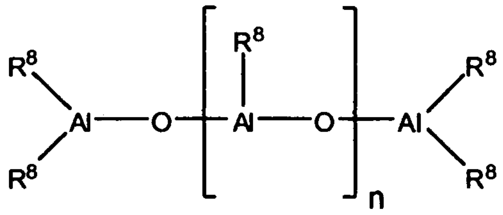

III

und/oder der Formel IV für den cyclischen Typ

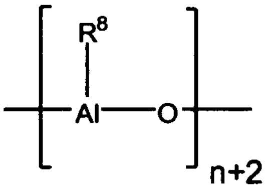

IV

wobei in den Formeln III und IV $R^8$ Methyl und/oder iso-Butyl bedeutet und n eine ganze Zahl von 2 bis 50 ist. Insbesondere sind 15 bis 45 mol-% der Reste $R^8$ iso-Butyl, bevorzugt 17 bis 45 mol-%, besonders bevorzugt 19 bis 43 mol-% und insbesondere bevorzugt 20 bis 40 mol-%. Erst durch den Anteil an iso-Butyl-Resten wird eine Löslichkeit des Cokatalysators in nicht aromatischen Lösungsmitteln ermöglicht. Vorzugsweise liegt der Cokatalysator in einem zweiten Lösungsmittel gelöst vor, dessen Siedetemperatur insbesondere bevorzugt bei maximal 101 °C liegt. Das zweite Lösungsmittel des Cokatalysators ist insbesondere ausgewählt aus linearen Alkanen mit 3-7 C-Atomen, bevorzugt mit 4-6 C-Atomen, wobei vorzugsweise die Siedetemperatur des zweiten Lösungsmittels deutlich unterhalb der Polymerisationstemperatur liegt, dies ist jedoch nicht zwingend. Insbesondere handelt es sich bei dem zweiten Lösungsmittel um Propan, n-Butan, n-Pentan, Cyclopentan, Methylcyclopentan, n-Hexan, Cyclohexan, Methylcyclohexan und/oder n-Heptan.

Bei dem Reaktionsraum zur Durchführung des Herstellverfahrens kann es sich um einen Rührkessel, eine Rührkesselkaskade mit mindestens zwei Rührkesseln, ein Strömungsrohr und/oder ein Strömungsrohr mit Zwangsförderung (z. B. eine Schneckenmaschine) handeln. Dabei können die oben genannten Reaktoren entweder als Einzellösung oder in beliebiger Kombination eingesetzt werden.

Die Regelung der Molmasse kann über die gewählte Polymerisationstemperatur und/oder die Zudosierung und Einmischung von gasförmigem Wasserstoff in die Polymerisationsmasse erfolgen, besonders bevorzugt erfolgt die Steuerung der Molmasse ohne den Einsatz von gasförmigem Wasserstoff nur über die Wahl der entsprechenden Polymerisationstemperatur. Für den Fall, dass Wasserstoff zur Regelung der Molmasse eingesetzt wird, wird dieser bevorzugt in die flüssige Reaktionsphase dosiert, wobei die Dosierung über den Boden des Reaktionsraumes und/oder über ein verwendetes Vermischungsorgan z. B. einen Rührer erfolgt.

Das erhaltene Polymer wird nach der Polymerisation entweder durch Ausfällen in einem gegenpolaren Fällungsmittel (etwa Wasser und/oder Alkoholen wie z. B. Ethanol, Isopropanol oder Butanol) oder durch direkte Entgasung mit anschließendem Aufschmelzvorgang erhalten. Im Anschluss an die Entgasung kann das hergestellte Polymer einer weiteren Konfektionierung unterzogen werden, wobei es sich bei der Konfektionierung um eine Additivierung und/oder eine Pulverisierung und/oder eine Pelletierung und/oder eine Granulierung handelt. Auch die direkte Weiterverarbeitung des schmelzflüssigen Polymers ist möglich.

Auf die oben beschriebenen unfunktionalisierten Basispolymere sind bei den erfindungsgemäßen funktionalisierten Polyolefinen ein oder mehrere funktionelle Gruppen aufweisende Monomere aufgepfropft. Die aufzupfropfenden Monomere besitzen dabei vorzugsweise olefinische Doppelbindungen. Insbesondere sind die ein oder mehreren funktionellen Gruppen aufweisende Monomere ausgewählt aus der Gruppe der Carbonsäuren und/oder Carbonsäurederivate (beispielsweise Maleinsäureanhydrid, Maleinsäure, Itaconsäure, Itaconsäureanhydrid, Citronensäureanhydrid, Acrylsäure, Methacrylsäure), der Acrylate (beispielsweise Hydroxymethylacrylat, Hydroxyethylacrylat, Hydroxypropylacrylat, Methylmethacrylat, Ethylmethacrylat, Buthylmethacyrlat, Glycidylmethacylat usw.), der Vinylsilane (beispielsweise Vinyltrimethoxysilan, Vinyltriethoxysilan, Vinyl-tris(2-methoxy-ethoxy)silan, 3-Methacryloxypropyltrimethoxysilan, 3-Methacryloxypropyltriethoxysilan, Vinyldimethylethoxysilan und/oder Vinylmethyldibutoxysilan, insbesondere Vinyltrimethoxysilan), der Vinylaromaten (beispielsweise Styrol, $\alpha$-Methylstyrol, Divinylbenzol, Aminostyrol, Styrolsulfonsäure usw.), der cyclischen Imidoester bzw. deren Vinylverbindungen (z. B. Isopentenyl-2-oxazolin, Ricinoloxazolinmaleinat usw.), der Vinylimidazoline (z. B. 1-Vinylimidazol), der Vinylpyrolidone (z. B. N-Vinylpyrrolidon), und/oder der alicyclischen Vinylverbindungen (beispielsweise 4-Vinyl-1-cyclohexen, Vinylcyclohexan, Vinylcyclopentan usw.).

Die modifizierten Polymere weisen besondere Eigenschaften auf, die teilweise auf die Eigenschaften der zur Modifizierung eingesetzten Basispolymere, teilweise auf die verwendeten Pfropfmonomere, teilweise auf das zur Modifikation verwendete Verfahren bzw. eine Kombination zurückzuführen sind.

Bezüglich der Eigenschaften der erfindungsgemäßen modifizierten Polyolefine ist insbesondere der Einfluss der Modifikation auf die Materialeigenschaften zu beachten. So neigen insbesondere Vinylsilane mit Alkoxygruppen zur Vernetzung bei Anwesenheit von Feuchtigkeit, so dass eine Veränderung der Materialeigenschaften (z. B. Schmelzviskosität, Nadelpenetration, Erweichungspunkt usw.) je nach Lagerbedingungen erfolgt. Die im Folgenden aufgeführten Eigenschaften verstehen sich (sofern nicht ausdrücklich anders vermerkt) als Eigenschaften von unvernetzten Materialien ohne weitere Zusatzstoffe.

So beträgt die Schmelzviskosität des erfindungsgemäßen modifizierten (gepfropften) Polyolefins im unvernetzten Zustand, bestimmt mit Oszillationsrheometrie bei 1 Hz und einer Deformation von maximal 1 % bei 190 °C, 500 - 95000 mPa*s, vorzugsweise 1000 - 85000 mPa*s, besonders bevorzugt 1500 - 75000 mPa*s und insbesondere bevorzugt 2000 - 65000 mPa*s, wobei weitere Vorzugsbereiche zwischen 2500 und 5500, 5000 und 12500, 9000 und 17500, 15000 und 27500 sowie zwischen 20000 und 60000 mPa*s liegen. Dabei zeigen die Schmelzen der erfindungsgemäßen modifizierten Polymere sowohl ein viskoelastisches wie auch ein strukturviskoses Verhalten. Es werden somit modifizierte Polyolefine zur Verfügung gestellt, die sich auf Grund ihrer variablen Schmelzviskosität im unvernetzten Zustand für die unterschiedlichsten Applikationsverfahren eignen, und dementsprechend auch in unterschiedlichsten Anwendungsbereichen (z. B. Schmelzklebstoffe, Dichtmassen, Formmassen, Primer usw.) zum Einsatz kommen können. Ein besonders Merkmal der erfindungsgemäßen modifizierten Polyolefine ist, dass ihre Strukturviskosität (d. h. die Abhängigkeit der Schmelzviskosität von der Schergeschwindigkeit) im unvernetzten Zustand mit steigendem Molekulargewicht zunimmt.

Der Erweichungspunkt des unvernetzten erfindungsgemäßen modifizierten (gepfropften) Polyolefins, gemessen mittels Ring & Kugel-Methode, beträgt 80 bis 155 °C, bevorzugt 85 bis 150 °C, besonders bevorzugt 87 bis 145 °C und insbesondere bevorzugt von 90 bis 140 °C, wobei weitere Vorzugsbereiche zwischen 90 und 99 °C, zwischen 98 und 110 °C, zwischen 108 und 122 sowie zwischen 120 und 140 °C liegen. Es werden somit modifizierte Polyolefine zur Verfügung gestellt, die je nach Polymerzusammensetzung und aufgepfropften Monomeren einen niedrigen bis mittleren Erweichungspunkt aufweisen, d. h. einerseits auch im unvernetzten Zustand zu einer ausreichenden Wärmestandfestigkeiteiner unter Verwendung der erfindungsgemäßen modifizierten Polyolefine hergestellten Verklebung führen, andererseits aber auch eine Verarbeitung (vor allem in der Schmelze) bei moderaten Verarbeitungs- und Applikationstemperaturen zulassen, und somit auch für temperatursensitive Anwendungen geeignet sind.

Die Nadelpenetration des unvernetzten erfindungsgemäßen modifizierten Polyolefins beträgt zwischen 2 und 45 *0,1mm, bevorzugt zwischen 3 und 40*0,1 mm, besonders bevorzugt zwischen 4 und 35*0,1mm und insbesondere bevorzugt zwischen 5 und 30* 0,1mm. Es werden somit modifizierte Polyolefine zur Verfügung gestellt, die im unvernetzten Zustand eine gute Balance zwischen Festigkeit/Härte und Flexibilität aufweisen.

Die Zugfestigkeit der erfindungsgemäßen modifizierten Polyolefine liegt (ohne weitere Zusätze) im unvernetzten Zustand zwischen 1 und 25 MPa, bevorzugt zwischen 1,5 und 20 MPa, besonders bevorzugt zwischen 2 und 18 MPa und insbesondere bevorzugt zwischen 2,5 und 16 MPa, wobei weitere Vorzugsbereiche zwischen 2 und 7,5 MPa, zwischen 5 und 13 MPa, zwischen 7,5 und 15 MPa sowie zwischen 10 und 16 MPa liegen. Dadurch wird insbesondere eine hohe Grundkohäsion im unvernetzten Zustand gewährleistet. Die im Zugversuch ermittelte Reißdehnung der erfindungsgemäßen, modifizierten Polyolefine liegt (ohne weitere Zusätze) im unvernetzten Zustand zwischen 10 und 1200 %, bevorzugt zwischen 15 und 1.100 %, besonders bevorzugt zwischen 20 und 1000 % und insbesondere bevorzugt zwischen 20 und 900 % wobei weitere Vorzugsbereiche zwischen 25 und 225 %, zwischen 200 und 450 % sowie zwischen 400 und 850 % liegen. Dadurch werden modifizierte Polyolefine zur Verfügung gestellt, die im unvernetzten Zustand über ein hohes Maß an Flexibilität verfügen.

In einer besonderen bevorzugten Ausführungsform liegt die Nadelpenetration des unvernetzten erfindungsgemäßen modifizierten Polyolefins bei maximal 15*0,1mm, bevorzugt bei maximal 12*0,1mm und insbesondere bevorzugt zwischen 2 und 10*0,1mm, während gleichzeitig der Erweichungspunkt zwischen 80 und 140 °C bevorzugt zwischen 90 und 135 und insbesondere bevorzugt zwischen 95 und 132 °C liegt wobei gleichzeitig die Zugfestigkeit maximal 15

MPa, bevorzugt maximal 12 MPa, besonders bevorzugt maximal 10 MPa beträgt und insbesondere bevorzugt zwischen 2 und 9 MPa liegt, wobei gleichzeitig die Reißdehnung maximal 500 %, bevorzugt maximal 450%, besonders bevorzugt maximal 400 % beträgt, und insbesondere bevorzugt zwischen 40 und 380 % liegt.

In einer besonders bevorzugten Ausführungsform handelt es sich bei mindestens einem der zur Modifikation verwendeten Monomeren um ein Silizium-haltiges Monomer, insbesondere um ein Vinylsilan. Die erfindungsgemäßen modifizierten Polyolefine weisen für diesen Fall (nach vollständiger Abtrennung von unreagiertem Restmonomer) einen durch RFA-Spektroskopie (Röntgenfluoreszenzspektroskopie) bestimmten Siliziumgehalt von mindestens 0,25 ma-%, bevorzugt von mindestens 0,30 ma-%, besonders bevorzugt von mindestens 0,35 ma-% und insbesondere bevorzugt von 0,40 - 2 ma-% auf, wobei weitere besonders bevorzugte Bereiche zwischen 0,4 und 0,75 ma-%, zwischen 0,7 und 0,95 ma-%, zwischen 0,8 und 1,25 ma-% und zwischen 1,1 und 2 ma-% liegen. Die erfindungsgemäßen modifizierten Polymere welche einen Siliziumgehalt von mindestens 0,25 ma-% aufweisen zeichnen sich insbesondere dadurch aus, dass sie (ohne weitere Zusätze) nach einer Lagerdauer von mindestens 14 Tagen im Klimaschrank (20°C / 65% relative Luftfeuchte) in einer reinen Polypropylenverklebung (Material: unbehandeltes isotaktisches Polypropylen) eine Klebscherfestigkeit von mindestens 1,5 N/mm$^2$, bevorzugt von mindestens 1,75 N/mm$^2$, besonders bevorzugt von mindestens 2 N/mm$^2$ und insbesondere bevorzugt von mindestens 2,25 N/mm$^2$ aufweisen. Weiterhin zeichnen sie sich dadurch aus, dass sie (ohne weitere Zusätze) in einer reinen Holzverklebung (Holzart: unbehandelte Buche) nach mindestens 14 Tagen Lagerung im Klimaschrank (20 °C / 65 % relative Luftfeuchte) eine Klebscherfestigkeit von mindestens 1,5 N/mm$^2$, bevorzugt von mindestens 2,0 N/mm$^2$, besonders bevorzugt von mindestens 2,5 N/mm$^2$ und insbesondere bevorzugt von mindestens 3,0 N/mm$^2$ aufweisen.

In einer weiteren besonders bevorzugten Ausführungsform handelt es sich bei mindestens einem der zur Modifikation verwendeten Monomeren um eine Carbonsäure bzw. ein Carbonsäureanhydrid. Für diesen Fall beträgt der durch Elementaranalyse bestimmte Sauerstoffgehalt insbesondere mindestens 0,1 ma-%, bevorzugt mindestens 0,15 ma-%, besonders bevorzugt mindestens 0,2 ma-% und insbesondere bevorzugt mindestens 0,25 ma-%. Diese erfindungsgemäßen modifizierten Polyolefine zeichnen sich insbesondere durch eine sehr gute Haftung auf Metallen, insbesondere auf Aluminium aus. Die erfindungsgemäßen modifizierten Polymere welche einen Sauerstoffgehalt von mindestens 0,1 ma-% aufweisen, zeichnen sich insbesondere dadurch aus, dass sie (ohne weitere Zusätze) nach einer Lagerdauer von mindestens 14 Tagen im Klimaschrank (20 °C 165 % relative Luftfeuchte) in einer reinen Aluminiumverklebung (Material: unbehandeltes Aluminium, 99.5) eine Klebscherfestigkeit von mindestens 0,5 N/mm$^2$, bevorzugt von mindestens 0,6 N/mm$^2$, besonders bevorzugt von mindestens 0,7 N/mm$^2$ und insbesondere bevorzugt von mindestens 0,75 N/mm$^2$ aufweisen.

In einer weiteren besonders bevorzugten Ausführungsform handelt es sich bei mindestens einem der zur Modifikation verwendeten Monomeren um ein Acrylat bzw. Methacrylat. Für diesen Fall beträgt der durch Elementaranalyse bestimmte Sauerstoffgehalt mindestens 0,15 ma-%, bevorzugt mindestens 0,25 ma-%, besonders bevorzugt mindestens 0,3 ma-% und insbesondere bevorzugt mindestens 0,35 ma-%. Diese erfindungsgemäßen modifizierten Polyolefine zeichnen sich insbesondere durch eine gute Haftung auf Acrylat-basierten Polymeren, wie z. B. Polymethylmethacrylat sowie auf unbehandelten Polyolefinoberflächen aus. Die erfindungsgemäßen Acrylat-modifizierten Polymere welche einen Sauerstoffgehalt von mindestens 0,15 ma-% aufweisen, zeichnen sich insbesondere dadurch aus, dass sie (ohne weitere Zusätze) nach einer Lagerdauer von mindestens 14 Tagen im Klimaschrank (20°C / 65% relative Luftfeuchte) in einer reinen PMMA-Verklebung (Formmasse "7N", Evonik Röhm GmbH; Verklebungstemperatur 200 °C) eine Klebscherfestigkeit von mindestens 0,5 N/mm$^2$, bevorzugt von mindestens 0,75 N/mm$^2$, besonders bevorzugt von mindestens 1,0 N/mm$^2$ und insbesondere bevorzugt von mindestens 1,25 N/mm$^2$ aufweisen.

In einer weiteren besonders bevorzugten Ausführungsform handelt es sich bei mindestens einem der zur Modifikation verwendeten Monomeren um ein Silanacrylat. Für diesen Fall beträgt der durch RFA-Spektroskopie

(Röntgenfluoreszenzspektroskopie) bestimmten Siliziumgehalt mindestens 0,15 ma-%, bevorzugt mindestens 0,20 ma-%, besonders bevorzugt mindestens 0,25 ma-% und insbesondere bevorzugt von 0,30 - 2 ma-%.

Diese erfindungsgemäßen modifizierten Polyolefine zeichnen sich insbesondere durch eine gute Haftung auf Glas, Metallen, unbehandelten Polyolefinen und PMMA aus und sind gleichzeitig Vernetzbar, was zu sehr hohen Zugscherfestigkeiten führt.

Polyolefine mit den genannten bevorzugten Eigenschaften eignen sich in ganz besonderer Weise für Verklebungen, insbesondere für den Einsatz als oder in Heißschmelzklebstoffen und zeigen vorteilhafte Eigenschaften gegenüber bekannten Systemen. Dies gilt insbesondere für die weiter verbesserte Haftung auf unbehandelten Polyolefinen, insbesondere auf unbehandeltem Polypropylen sowie Papier/Pappe, Holz, Glas, polaren Kunststoffen wie z. B. Polycarbonat, Polyethylenterephhalat usw. und oder Metallen, insbesondere Aluminium.

Ein weiterer Gegenstand der vorliegenden Erfindung sind Verfahren zur Herstellung eines erfindungsgemäßen modifizierten Polyolefins, dadurch gekennzeichnet, dass ein teilkristallines Polyolefin mit einem durch $^{13}$C-NMR-Spektroskopie bestimmten Gehalt an Ethylen von maximal 30 ma-%, entweder 70-98 ma-% oder maximal 30 ma-% Propylen und/oder entweder 70-100 ma-% oder maximal 25 ma-% 1-Buten, wobei die Summe der Anteile 100 ma-% beträgt, welches sich weiterhin dadurch auszeichnet, dass seine ebenfalls durch $^{13}$C-NMR bestimmte Triadenverteilung für

Propentriaden (für den Fall, dass die Polymere Propentriaden enthalten) einen ataktischen Anteil von 20-55 ma-%, einen syndiotaktischen Anteil von maximal 30 ma-% und einen isotaktischen Anteil von 40-80 ma-% aufweisen, und/ oder die durch $^{13}C$-NMR bestimmte Triadenverteilung für 1-Butentriaden (für den Fall, dass die erfindungsgemäßen Polymere 1-Butentriaden enthalten) einen ataktischen Anteil von 2-85 ma-% und einen syndiotaktischen Anteil von maximal 20 ma-% aufweisen, wobei sich die Anteile isotaktischer, syndiotaktischer und ataktischer Triaden von Propen bzw. 1-Buten jeweils zu 100% addieren, wobei das unfunktionalisierte Polymer unter Verwendung eines Metallocen-Katalysators hergestellt worden ist, mit mindestens einem Radikalstarter und einem oder mehreren funktionelle Gruppen aufweisende Monomeren in Kontakt gebracht wird, woraufhin eine Pfropfreaktion der ein oder mehreren funktionelle Gruppen aufweisende Monomere auf das Polyolefin stattfindet.

Die ein oder mehreren Monomere können auf das Basispolymer nach allen Methoden des Standes der Technik aufgepfropft werden, beispielsweise in Lösung oder bevorzugt in der Schmelze, wobei ein bzw. mehrere Radikalspender in ausreichender Menge eingesetzt wird/werden. Eine geeignete Arbeitsweise kann der DE-OS 40 00 695 entnommen werden, auf die ausdrücklich Bezug genommen wird. Beispielsweise können folgende Radikalspender verwendet werden: Diacylperoxide wie z. B. Dilaurylperoxid oder Didecanoylperoxid, Alkylperester wie z. B. tert-Butylperoxy-2-ethylhexanoat, Perketale wie z. B. 1,1-Di(tert-butylperoxy)-3,3,5-trimethylcyclohexan oder 1,1-Di(tert-butylperoxy)cyclohexan, Dialkylperoxide wie z. B. tert-Butylcumylperoxid, Di(tert.butyl)peroxid oder Dicumylperoxid, C-Radikalspender wie z. B. 3,4-Dimethyl-3,4-diphenylhexan oder 2,3-Dimethyl-2,3-diphenylbutan sowie Azoverbindungen wie z. B. Azobisisobutyronitril, 2,2'-Azo-di(2-acetoxypropan) usw. Das Aufpfropfen erfolgt insbesondere bei einer Temperatur von 30 bis 250 °C.

In einer besonderen Ausführungsform handelt es sich um ein Lösungsverfahren, wobei aliphatische und/oder aromatische Kohlenwasserstoffe und/oder cyclische Ether als Lösungsmittel eingesetzt werden können. Besonders bevorzugt wird als Lösungsmittel mindestens ein aromatischer Kohlenwasserstoff eingesetzt. Geeignete aromatische Kohlenwasserstoffe sind insbesondere Trichlorbenzol, Dichlorbenzol, Toluol und Xylol, besonders bevorzugt wird Xylol eingesetzt. Besonders bevorzugte aliphatische Kohlenwasserstoffe sind beispielsweise Propan, n-Butan, Hexan, Heptan, Cyclohexan und Octan. Besonders bevorzugter cyclischer Ether ist Tetrahydrofuran (THF).

Werden Ether, insbesondere cyclische Ether als Lösungsmittel verwendet, so müssen der verwendete Initiator sowie die Reaktionsbedingungen mit besondere Sorgfalt ausgewählt werden, um die Bildung von explosiven Peroxiden der verwendeten Ether zu unterbinden bzw. zu kontrollieren. Insbesondere ist der zusätzliche Einsatz spezieller Inhibitoren (z. B. IONOL) zu erwägen.

Im Fall eines Pfropfprozesses in Lösung liegt die Konzentration des eingesetzten Basispolymers bei mindestens 10 ma-%, bevorzugt bei mindestens 15 ma-%, besonders bevorzugt bei mindestens 20 ma-% und insbesondere bevorzugt bei mindestens 22,5 ma-%. Die Reaktionstemperatur des Pfropfprozesses in Lösung liegt bei 30 bis 200 °C, bevorzugt bei 40 bis 190 °C, besonders bevorzugt bei 50 bis 180 °C und insbesondere bevorzugt bei 55 bis 140 °C. Die Lösungspfropfung erfolgt entweder in diskontinuierlicher oder in kontinuierlicher Weise. Im Fall einer diskontinuierlichen Reaktionsführung wird zunächst das feste Polymer (z. B. als Granulat, Pulver usw.) im verwendeten Lösungsmittel gelöst. Alternativ dazu wird direkt eine konditionierte Polymerisationslösung aus dem Herstellverfahren des Basispolymers verwendet, und auf Reaktionstemperatur gebracht. Es folgt die Zugabe des Monomers/der Monomeren und der/des Radikalstarter(s). In einer besonders bevorzugten Ausführungsform werden Lösungsmittel Basispolymere(e) und Monomer(e) vorgelegt und auf Reaktionstemperatur gebracht, während der/die Radikalstarter über einen definierten Zeitraum kontinuierlich zudosiert wird/werden. Dies hat den Vorteil, dass die stationäre Radikalkonzentration niedrig ist, und daher das Verhältnis von Pfropfreaktion zu Kettenspaltung besonders günstig (d.h. mehr Pfropfreaktion und weniger Kettenspaltung) ausfällt. In einer weiteren besonders bevorzugten Ausführungsform werden Lösungsmittel und Basispolymer(e) vorgelegt und auf Reaktionstemperatur gebracht, während Monomer(e) und Radikalstarter - gemeinsam (z. B. in Form einer Mischung) oder voneinander getrennt- über einen definierten Zeitraum kontinuierlich zudosiert werden. Dies hat den Vorteil, dass sowohl die stationäre Radikalkonzentration als auch die Monomerkonzentration am Reaktionsort niedrig sind, was sowohl die Kettenspaltung als auch die Bildung von Homopolymeren zurückdrängt. Dies ist insbesondere bei der Verwendung von Monomeren wichtig, die bei Reaktionstemperatur stark zur thermisch initiierten (Homo)polymerisation neigen. Ganz besonders bevorzugt wird im Anschluss an die unterschiedlichen definierten Zudosierungszeiträume eine weitere Menge an Radikalstarter(n) zudosiert, um den Gehalt an Restmonomeren in der Reaktionslösung zu minimieren. Als Reaktor wird bevorzugt ein Rührkessel verwendet, die Verwendung alternativer Reaktionsbehälter wie z. B. diskontinuierlicher Knetreaktoren ist ebenfalls möglich, und insbesondere bei niedrigen Reaktionstemperaturen und/oder hohen Polymerkonzentrationen bevorzugt.

Im Fall einer kontinuierlichen Reaktionsführung wird zunächst in einem oder mehreren Vorlagebehältern (z. B. Rührkesseln) das feste Polymer in mindestens einem Lösungsmittel gelöst und anschließend kontinuierlich in den/die Reaktionsbehälter dosiert. In einer alternativen, ebenfalls besonders bevorzugten Ausführungsform, wird direkt eine konditionierte Polymerlösung aus einem Herstellprozess des Basispolymers verwendet. In einer weiteren ebenfalls besonders bevorzugten Ausführungsform wird das feste Polymer (z. B. in Form von Pulver, Granulat, Pellets usw.) zusammen mit mindestens einem Lösungsmittel kontinuierlich in eine (ein- oder mehrwellige) Schneckenmaschine oder

einen Kontikneter dosiert, unter Einwirkung von Temperatur und/oder Scherung gelöst, und anschließend kontinuierlich in den/die Reaktionsbehälter dosiert. Als Reaktionsbehälter bzw. Reaktoren für die Durchführung der kontinuierlichen Pfropfreaktion in Lösung kommen kontinuierliche Rührkessel, Rührkesselkaskaden, Strömungsrohre, Strömungsrohre mit Zwangsförderung (z. B. Schneckenmaschinen), Reaktionskneter sowie deren beliebige Kombinationen in Frage. Werden Strömungsrohre mit Zwangsförderung eingesetzt, so handelt es sich dabei bevorzugt um Extruder, wobei sowohl ein-, zwei- wie auch mehrwellige Extruder eingesetzt werden können. Besonders bevorzugt werden zwei- und/oder mehrwellige Extruder eingesetzt. Insbesondere bevorzugt zur kontinuierlichen Herstellung der erfindungsgemäßen modifizierten Polymere in Lösung ist die Verwendung einer Reaktorkombination aus Strömungsrohr, Strömungsrohr mit Zwangsförderung und kontinuierlichem Rührkessel in beliebiger Reihenfolge, wobei bevorzugt entweder im Strömungsrohr mit Zwangsförderung oder im kontinuierlichen Rührkessel auch die Entfernung von Restmonomeren und flüchtigen Neben-/Abbauprodukten erfolgt.

Alternativ bevorzugt handelt es sich um ein Schmelzeverfahren, wobei mindestens ein Radikalstarter direkt in die Schmelze dosiert wird. Insbesondere liegt bei dieser Verfahrensvariante die Temperatur der Polymermasse zum Zeitpunkt der Zudosierung mindestens eines Radikalstarters oberhalb der SADT (Self accelerating decompositon temperature = Temperatur oberhalb der eine selbstbeschleunigende Zersetzung einsetzen kann) mindestens eines der zudosierten Radikalstarter.

Die Reaktionstemperatur des Pfropfprozesses in der Schmelze liegt bei 160-250 °C, bevorzugt bei 165-240 °C, besonders bevorzugt bei 168 bis 235 °C und insbesondere bevorzugt bei 170 bis 230 °C.

Die Schmelzepfropfung erfolgt entweder in diskontinuierlicher oder in kontinuierlicher Fahrweise. Im Fall einer diskontinuierlichen Reaktionsführung wird das feste Polymer (z. B. als Granulat, Pulver, Pellets usw.) zunächst aufgeschmolzen und gegebenenfalls homogenisiert. Alternativ wird direkt eine konditionierte Polymerschmelze aus einem Polymerisationsprozess verwendet und auf Reaktionstemperatur gebracht. Es folgt die Zugabe von Monomere(en) und Radikalstarter(n).

In einer besonderen Ausführungsform werden Monomer(e) und Polymerschmelze homogen durchmischt und auf Reaktionstemperatur gebracht, während der/die Radikalstarter über einen definierten Zeitraum kontinuierlich zudosiert werden. Dies hat den Vorteil, dass die stationäre Radikalkonzentration niedrig ist, und daher das Verhältnis von Pfropfreaktion zu Kettenspaltung besonders günstig (d.h. mehr Pfropfreaktion und weniger Kettenspaltung) ausfällt.

In einer weiteren besonders bevorzugten Ausführungsform wird die Polymerschmelze vorgelegt und homogenisiert, während Monomer(e) und Radikalstarter gemeinsam (z. B. in Form einer Mischung) oder getrennt über einen definierten Zeitraum kontinuierlich zudosiert werden. Dies hat den Vorteil, dass sowohl die stationäre Radikalkonzentration, als auch die Monomerkonzentration am Reaktionsort niedrig bleibt, was sowohl die Kettenspaltung als auch die Bildung von Homopolymer zurückdrängt. Letzteres ist besonders bei der Verwendung von Monomeren wichtig, die bei der vorliegenden Reaktionstemperatur zur thermischen (Homo)polymerisation neigen. Als Reaktor wird bevorzugt ein Rührkessel mit wandgängigem Rühraggregat oder ein Reaktionskneter verwendet.

Im Fall einer kontinuierlichen Reaktionsführung wird zunächst in einem oder mehreren Vorlagebehältern (z. B. Rührkesseln) das feste Polymer aufgeschmolzen und anschließend kontinuierlich in den/die Reaktionsbehälter dosiert. In einer alternativen, ebenfalls besonders bevorzugten Ausführungsform, wird direkt eine konditionierte Polymerschmelze aus einem Polymerisationsprozess verwendet. In einer weiteren ebenfalls besonders bevorzugten Ausführungsform wird das feste Polymer (z. B. in Form von Pulver, Granulat, Pellets usw.) kontinuierlich in eine (ein- oder mehrwellige) Schneckenmaschine oder einen Kontikneter dosiert, unter Einwirkung von Temperatur und/oder Scherung aufgeschmolzen, und anschließend kontinuierlich in den/die Reaktionsbehälter dosiert. Als Reaktionsbehälter bzw. Reaktoren für die Durchführung der kontinuierlichen Pfropfreaktion in der Schmelze kommen kontinuierliche Rührkessel, Rührkesselkaskaden, Strömungsrohre, Strömungsrohre mit Zwangsförderung (z. B. Schneckenmaschinen), Reaktionskneter sowie deren beiliege Kombinationen in Frage. Werden Strömungsrohre mit Zwangsförderung eingesetzt, so handelt es sich dabei bevorzugt um Extruder, wobei sowohl ein-, zwei- wie auch mehrwellige Extruder eingesetzt werden. Besonders bevorzugt werden zwei- und/oder mehrwellige Extruder eingesetzt. Insbesondere bevorzugt zur kontinuierlichen Herstellung der erfindungsgemäßen modifizierten Polymere in der Schmelze ist die Verwendung einer Reaktorkombination aus Strömungsrohr, Strömungsrohr mit Zwangsförderung und kontinuierlichem Rührkessel in beliebiger Reihenfolge, wobei bevorzugt entweder im Strömungsrohr mit Zwangsförderung oder im kontinuierlichen Rührkessel auch die Entfernung von Restmonomeren und flüchtigen Neben-/Abbauprodukten erfolgt.

Ein weiterer Gegenstand der vorliegenden Erfindung ist die Verwendung der erfindungsgemäßen modifizierten Polyolefine in Formmassen, als oder in Klebstoffen, in Markierungsmassen, Beschichtungsmassen, Dichtungsbahnen, Bodenbelägen oder Dachbahnen, als Primer oder in Primerformulierungen und/oder Haftvermittlerformulierungen und/ oder in wässrigen Dispersionen, Suspensionen und/oder Emulsionen. Entsprechende Formmassen, Klebstoffe, Markierungsmassen, Beschichtungsmassen, Dichtungsbahnen, Bodenbeläge oder Dachbahnen, Primer oder Primerformulierungen, Haftvermittlerformulierungen, wässrige Dispersionen, Suspensionen und/oder Emulsionen enthaltend die erfindungsgemäßen Polymere sind ebenfalls Gegenstand der vorliegenden Erfindung.

Im Falle von Formmassen enthalten diese das erfindungsgemäße Polyolefin, sowie mindestens ein weiteres

Polymer. In einer besonderen bevorzugten Ausführungsform wird mindestens ein erfindungsgemäßes modifiziertes Polyolefin als Verträglichkeitsvermittler zusammen mit mindestens zwei weiteren Polymeren eingesetzt, wobei der Anteil der erfindungsgemäßen modifizierten Polyolefine an der Formmassen maximal 50 ma-%, bevorzugt maximal 40 ma-%, besonders bevorzugt maximal 30 ma-% und insbesondere bevorzugt maximal 25 ma-% beträgt.

Die weiteren Bestandteile der erfindungsgemäßen Formmassen können insbesondere andere Polymere umfassen, wobei es sich bei diesen anderen Polymeren um ein oder mehrere Ethylenpolymerisate, und/oder isotaktische Propylenpolymerisate und/oder syndiotaktische Propylen polymerisate und/oder isotaktische Poly-1-buten-Polymerisate und/oder syndiotaktische Poly-1-buten-Polymerisate handeln kann.

Hierbei besteht insbesondere bevorzugt zwischen den enthaltenen erfindungsgemäßen Polymeren und den zusätzlich enthaltenen Polymeren ein signifikanter Unterschied in der Schmelzviskosität, gemessen durch Oszillationsrheometrie bei 190 °C, wobei die zusätzlich enthaltenen Polymere eine mindestens doppelt so hohe Schmelzviskosität wie die erfindungsgemäßen Polymere, bevorzugt eine mindestens 3 mal so hohe, besonders bevorzugt eine mindestens 4 mal so hohe und insbesondere bevorzugt eine mindestens 5 mal so hohe Schmelzviskosität aufweisen.

Die genannten Formmassen können zur Herstellung von Fertigteilen (z. B. durch Spitzguss) oder zur Herstellung von Filmen und/oder Folien verwendet werden.

Vorzugsweise werden die erfindungsgemäßen modifizierten Polymere als oder in Klebstoffen eingesetzt, insbesondere bevorzugt in Klebstoffformulierungen.

In den erfindungsgemäßen Klebstoffformulierungen können neben den erfindungsgemäßen Polymeren weitere Bestandteile enthalten sein. Bei den weiteren Bestandteilen kann es sich insbesondere bei Lösungsformulierungen um cyclische und/oder lineare aliphatische und/oder aromatische Kohlenwasserstoffe handeln, auch um entsprechende halogenierte Kohlenwasserstoffe. Hierbei erweist sich die gute Löslichkeit der erfindungsgemäßen Polymere in unterschiedlichen Lösungsmitteln wie z. B. Xylol und Tetrahydrofuran als besonders vorteilhaft. Es ist somit nicht notwendig, halogenierte Lösungsmittel zu wählen, um eine Lösungsformulierung herstellen zu können. Vorzugsweise werden daher keine halogenierten Kohlenwasserstoffe verwendet. In den bei Raumtemperatur flüssigen Klebstoffformulierungen haben die genannten Kohlenwasserstoffe einen Formulierungsanteil von maximal 90 ma-% bevorzugt maximal 80 ma-%, besonders bevorzugt maximal 75 ma-%, und insbesondere bevorzugt von maximal 50 ma-%.

Ganz besonders bevorzugt handelt es sich bei der erfindungsgemäßen Klebstoffformulierung um eine Heißschmelzklebstoffformulierung, die für alle dem Fachmann bekannten Arten von Verklebungen eingesetzt werden können.

Die erfindungsgemäße Heißschmelzklebstoffformulierung kann weitere Bestandteile enthalten, die zur Erzielung spezieller Eigenschaften wie z. B. Verformungsfähigkeit, Haftungsvermögen, Verarbeitungsfähigkeit, (Schmelz- bzw. Lösungs-) Viskosität, Festigkeit, Kristallisationsgeschwindigkeit, Klebrigkeit, Lagerstabilität usw. notwendig sind. Der Anteil der weiteren Bestandteile liegt in einer besonderen Ausführungsform der vorliegenden Erfindung insbesondere bevorzugt bei maximal 10 ma-%. Dies hat den Vorteil, dass die Materialeigenschaften der Klebstoffformulierung im Wesentlichen die des verwendeten erfindungsgemäßen Polymers sind. Eine solche Klebstoffformulierung lässt sich mit sehr geringem Aufwand herstellen.

Alternativ kann in einer weiteren Ausführungsform der vorliegenden Erfindung der Anteil der weiteren Bestandteile > 10 ma-% betragen. In diesem Falle machen die weiteren Bestandteile maximal 80 ma-% der Gesamtformulierung, bevorzugt maximal 60 ma-%, besonders bevorzugt maximal 50 ma-%, insbesondere bevorzugt maximal 40 ma-% aus.

Bei den weiteren Bestandteilen kann es sich um anorganische und/oder organische Füllstoffe, die wahlweise elektrisch leitfähig oder isolierend sein können, anorganische und/oder organische Pigmente, die wahlweise elektrisch leitfähig oder isolierend sein können, synthetische und/oder natürliche Harze, insbesondere Klebharze, synthetische und/oder natürliche Öle, anorganische und/oder organische, synthetische und/oder natürliche Polymere, die wahlweise elektrisch leitfähig oder isolierend sein können, anorganische und/oder organische, synthetische und/oder natürliche Fasern, die wahlweise elektrisch leitfähig oder isolierend sein können, anorganische und/oder organische Stabilisatoren, anorganische und/oder organische Flammschutzmittel handeln.

Insbesondere umfassen die weiteren Bestandteile Harze, wobei die Harze eingesetzt werden, um bestimmte Eigenschaften der Klebschicht, insbesondere die Klebrigkeit und/oder Haftung, das Fließ- und Kriechverhalten der Klebschicht und/oder die Klebstoffviskosität an besondere Anforderungen anzupassen. Es kann sich dabei um Naturharze und/oder Kunstharze handeln. Im Falle von Naturharzen enthalten diese Naturharze als Hauptbestandteil Abietinsäure (z. B. Kollophonium). Weiterhin kann es sich bei den Harzen um Terpen- bzw. Polyterpenharze, Petroleumharze und/oder Kumaron-Inden-Harze handeln, wobei es sich insbesondere um sogenannte $C_5$-Harze und/oder $C_9$-Harze und/oder um Mischpolymerisate aus $C_5$-/$C_9$-Harzen handelt. Der Anteil der Harze in der erfindungsgemäßen Heißschmelzklebstoffformulierung beträgt insbesondere maximal 45 ma-%, bevorzugt zwischen 1 und 40 ma-%, besonders bevorzugt zwischen 2 und 30 ma-% und insbesondere bevorzugt zwischen 3 und 20 ma-%, bezogen auf die Gesamtformulierung.

Weiterhin können in den erfindungsgemäßen Heißschmelzklebstoffformulierungen klassische amorphe Poly ($\alpha$-Olefine) (sog. APAOs) als weitere Bestandteile enthalten sein. Bei den genannten amorphen Poly($\alpha$-Olefinen) kann

es sich um Homo-/Co- und/oder Terpolymere aus Ethylen, Propylen, 1-Buten bzw. linearen und/oder verzweigten 1-Olefinen mit 5-20 Kohlenstoffatomen handeln, welche z. B. durch klassische Ziegler-Natta-Katalyse oder Metallocenkatalyse erhältlich sind. Der Anteil der amorphen Poly($\alpha$-Olefine) liegt insbesondere bei maximal 50 ma-% bevorzugt bei maximal 40 ma-% und besonders bevorzugt bei maximal 30 ma-%, bezogen auf die Gesamtformulierung. Vorzugsweise handelt es sich bei den weiteren Bestandteilen um kristalline beziehungsweise teilkristalline Polyolefine, die insbesondere isotaktisches Polypropylen, syndiotaktisches Polypropylen, Polyethylen (HDPE, LDPE und/oder LLDPE), isotaktisches Poly(1-buten), syndiotaktisches Poly(1-buten) deren Copolymere und/oder deren Copolymere mit linearen und/oder verzweigten 1-Olefinen mit 5 bis 10 Kohlenstoffatomen umfassen. Weiterhin ist bevorzugt, dass es sich bei den kristallinen bzw. teilkristallinen Polyolefinen um chemisch modifizierte Polyolefine handelt, wobei die chemische Modifizierung insbesondere solche durch Maleinsäureanhydrid, Itaconsäureanhydrid, Acrylsäure, Acrylate, Methacrylate, ungesättigte Epoxyverbindungen, Silanacrylate, Silane und Hydroxyalkylsilane umfasst.

Weiterhin können die weiteren Bestandteile Polymere mit polaren Gruppen umfassen. Polymere mit polaren Gruppen umfassen Polystyrolcopolymere (z. B. mit Maleinsäureanhydrid, Acrylnitril usw.), Polyacrylate, Polymethacrylate, (Co)polyester, Polyurethane, (Co)polyamide, Polyetherketone, Polyacrylsäure, Polycarbonate sowie chemisch modifizierte Polyolefine (wie z. B. Poly(propylen-graft-maleinsäureanhydrid) oder Poly(propylen-graft-alkoxyvinylsilan).

Weiterhin können die weiteren Bestandteile Homo- und/oder Copolymere auf Basis von Ethylen, Propylen, Acrylnitril, Butadien, Styrol und/oder Isopren umfassen, insbesondere handelt es sich bei diesen Polymeren um Blockcopolymere, insbesondere um Kautschuke wie z. B. Beispiel Natur- und Synthesekautschuk, Poly(butadien), Poly(isopren), Styrol-Butadien-Kautschuk und Nitrilkautschuk. Der Anteil der Polymere auf Basis von Butadien, Styrol, und/oder Isopren beträgt maximal 20 ma-%, bevorzugt 1-15 ma-%, besonders bevorzugt 1,5-10 ma-% und insbesondere 2-9 ma-%, bezogen auf die Heißschmelzklebstoffformulierungen.

Weiterhin können die weiteren Bestandteile elastomere Polymere auf Basis von Ethylen, Propylen, einem Dien und/oder *cis,cis*-1,5-Cyclooctadien, *exo*-Dicyclopentadien, *endo*-Dicyclopentadien und 1,4-Hexadien und 5-Ethyliden-2-norbornen umfassen, insbesondere handelt es sich hierbei um Ethylen-Propylen-Rubber, EPM (doppelbindungsfrei, Ethylengehalt 40-75 ma-%) und/oder EPDM. Der Anteil der Polymere auf Basis von Ethylen, Propylen, einem Dien und/oder *cis,cis*-1,5-Cyclooctadien, *exo*-Dicyclopentadien, *endo*-Dicyclopentadien, 1,4-Hexadien und 5-Ethyliden-2-norbornen beträgt üblicherweise maximal 20 ma-%, bevorzugt 1-15 ma-%, besonders bevorzugt 1,5-10 ma-% und insbesondere 2-9 ma-%, bezogen auf die Heißschmelzklebstoffformulierungen.

Alternativ können die weiteren Bestandteile Wachse umfassen, insbesondere modifizierte und unmodifizierte Wachse, wobei es sich bei diesen vorzugsweise um kristalline, teilkristalline und/oder amorphe Polyolefinwachse auf Basis von Polyethylen, Polypropylen und/oder Poly(1-buten), Paraffinwachse, Metallocenwachse, Mikrowachse, Polyamidwachse, Polytetrafluorethylenwachse und/oder Fischer-Tropsch-Wachse handelt. Der Anteil der Wachse beträgt maximal 50 ma-%, bevorzugt 1-40 ma-%, besonders bevorzugt 2-30 ma-% und insbesondere bevorzugt 3-20 ma-%, bezogen auf die Heißschmelzklebstoffformulierungen.

Weiterhin können die weiteren Bestandteile Füllstoffe umfassen, wobei die Füllstoffe eingesetzt werden, um spezielle Eigenschaftsprofile der Klebschicht, wie z. B. den Temperaturanwendungsbereich, die Festigkeit, die Schrumpfung, die elektrische Leitfähigkeit, den Magnetismus und/oder die Wärmeleitfähigkeit gezielt an spezifische Anforderungen anzupassen. Allgemein handelt es sich bei den Füllstoffen um anorganische und/oder organische Füllstoffe. Die anorganischen Füllstoffe sind insbesondere ausgewählt aus Kieselsäuren (inkl. hydrophobierte Kieselsäuren), Quarzmehl, Kreiden, Schwerspat, Glaspartikeln (insbesondere sphärischen Partikeln zur Erhöhung der Lichtreflexion), Glasfasern, Kohlefasern, Asbestpartikeln, Asbestfasern und/oder Metallpulvern. Organische Füllstoffe sind beispielsweise Ruß, Bitumen, vernetztes Polyethylen, vernetzte Kautschuk- bzw. Gummimischungen synthetische Fasern wie z. B. Polyethylenfasern, Polypropylenfasern, Polyesterfasern, Polyamidfasern, Aramidfasern, Saranfasern, MP-Fasern oder Naturfasern wie Stroh, Wolle, Baumwolle, Seide, Flachs, Hanf, Jute, und/oder Sisal. Der Anteil der Füllstoffe beträgt maximal 80 ma-%, bevorzugt 1-60 ma-%, besonders bevorzugt 5-40 ma-% und insbesondere bevorzugt 7-30 ma-%, bezogen auf die Heißschmelzklebstoffformulierungen.

Ebenfalls können die weiteren Bestandteile Stabilisatoren umfassen, wobei diese eingesetzt werden, um die Klebstoffformulierung vor externen Einflüssen wie z. B. dem Einfluss von (Verarbeitungs-)Wärme, Scherbeanspruchung, Sonneneinstrahlung, Luftfeuchtigkeit und Sauerstoff zu schützen. Geeignete Stabilisatoren sind beispielsweise gehinderte Amine (HALS-Stabilisatoren), gehinderte Phenole, Phosphite und/oder aromatische Amine. In den genannten Formulierungen beträgt der Anteil der Stabilisatoren maximal 3 ma-%, bevorzugt zwischen 0,05 und 2,5 ma-% und insbesondere bevorzugt zwischen 0,1 und 2 ma-%, bezogen auf die Heißschmelzklebstoffformulierungen.

Darüber hinaus können die weiteren Bestandteile ein oder mehrere Öle umfassen, wobei es sich um natürliche und/oder synthetische Öle handeln kann. Diese ein oder mehreren Öle haben vorzugsweise bei der Verarbeitungstemperatur eine Viskosität von 1 bis 1000 mPa*s, bevorzugt von 2-750 mPa*s, am meisten bevorzugt von 3-500 mPa*s. Geeignete Öle sind beispielsweise Mineralöle, (medizinische) Weißöle, Isobutenöle, Butadienöle, hydrierte Butadienöle und/oder Paraffinöle. Der Anteil der ein oder mehreren Öle beträgt maximal 50 ma-%, bevorzugt 1-45 ma-%, besonders bevorzugt 3-40 ma-% und insbesondere 5-38 ma-%, bezogen auf die Heißschmelzklebstoffformulierungen.

Weiterhin können in den Heißschmelzklebstoffformulierungen anorganische und/oder organische Pigmente, UV-aktive Substanzen, organische und/oder anorganische Nukleierungsmittel, die die Kristallisation der Polymere beschleunigen und damit die offene Zeit der Verklebung reduzieren, enthalten sein.

In einer weiter bevorzugten Form der erfindungsgemäßen

Heißschmelzklebstoffformulierungen handelt es sich bei den vorab beschriebenen Formulierungen um Multiphasenblends.

Die erfindungsgemäßen Heißschmelzklebstoffformulierungen können insbesondere mittels Sprühauftrag, als Raupe(n) und/oder durch Rakeln auf die zu verklebende Oberfläche aufgebracht werden.

Ein weiterer Gegenstand der vorliegenden Erfindung sind Verklebungen enthaltend ein oder mehrere Polymere der vorliegenden Erfindung. Insbesondere handelt es sich bei den Verklebungen um Verpackungsverklebungen, Verklebungen von Hygieneartikeln, Holzverklebungen, Verklebungen von Glasoberflächen, Etikettverklebungen Laminierungsverklebungen, Teppich- oder Kunstrasenverklebungen, Schuhverklebungen, druckempfindliche Verklebungen, Buchverklebungen oder Textilverklebungen.

Im Falle von Verpackungsverklebungen können die Verpackungsmaterialien die Werkstoffe Holz, Pappe, Papier, Kunststoff, Metall, Keramik, Glas, Kunst- und/oder Naturfasern und/oder Textilen umfassen. Bei den Verpackungsmaterialien handelt es sich vorzugsweise um unpolare Kunststoffe, insbesondere um Polyethylen, Polypropylen, Poly (1-buten) oder ihre Copolymere mit linearen und/oder verzweigten $C_{2-20}$ 1-Olefinen, beispielsweise unvernetztes Polyethylen wie z. B. LDPE, LLDPE und/oder HDPE, und/oder um (z. B. silan-)vernetztes Polyolefin, insbesondere um silanvernetzes Polyethylen. Weiterhin kann es sich bei den unpolaren Kunststoffen insbesondere um Polystyrol-, Polybutadien-, Polyisopren- Homo- und/oder Copolymere, und/oder ihre Copolymere mit linearen und/oder verzweigten $C_{2-20}$ 1-Olefinen bzw. Dienen, wie z. B. EPDM, EPM oder EPR, und/oder Synthese- bzw. Naturkautschuk handeln.

Im Falle von polaren Kunststoffen handelt es sich insbesondere um Polyacrylate, insbesondere Polyalkylmethacrylate, um Polyvinylacetat, um Polyester und/oder Copolyester, insbesondere um Polyethylentherephthalat und/oder Polybuthylenterephthalat, um Polyamide und/oder Copolymamide, um Acrylnitrilcopolymere, insbesondere um Acylnitril/Butadien/Styrol-Copolymere und/oder Styr-ol/Acrylnithl-Copolymere, um Maleinsäureanhydridcopolymere, insbesondere um S/MSA-Copolymere und/oder MSA-gepfropfte Polyolefine wie z. B. Polypropylen und/oder Polyethylen, um Polyvinylchlorid und/oder um Polycarbonate. Generell können die Verpackungsmaterialien als Schachtel, Box, Container, Blatt, Scheibe, Film und/oder Folie vorliegen. Beispielsweise können entsprechende Kunststofffolien über Extrusion, Kalander, Blasformen, Gießtechnik, Lösungsziehen, Tiefziehen oder einer Kombination aus mehreren dieser Techniken hergestellt werden. Beispielsweise handelt es sich bei den Kunststofffolien um Einschichtfolien, die orientiert oder nicht orientiert sind. Im Falle einer Orientierung der Einschichtfolie kann eine ein-, zwei- oder multiachsiale Orientierung vorliegen, wobei die Orientierungsachsen in beliebigem Winkel zur Folien-Abzugsrichtung stehen können. Alternativ kann es sich bei den Kunststofffolien um Mehrschichtfolien handeln, wobei die Folienschichten sowohl aus dem gleichen wie auch aus unterschiedlichem Material gefertigt sein können. Die Mehrschichtfolien können orientiert oder nicht orientiert sein. Im Falle einer Orientierung der Mehrschichtkunststofffolien kann eine ein-, zwei- oder multiachsiale Orientierung vorliegen, wobei die Orientierungsachsen in beliebigem Winkel zur Folien-Abzugsrichtung stehen können. In einer besonderen Ausführungsform handelt es sich bei der Mehrschichtkunststofffolie um eine Verbundfolie. Bei der Verklebung von Verbundfolien können eine oder mehrere der Folienschichten aus Verbundmaterial bestehen, wobei die Verbundmaterialien in kontinuierlicher Form (z. B. Papier, Aluminiumfilm o. ä.) und/oder diskontinuierlicher Form (z. B. Partikel und/oder Fasern) vorliegen können.

Insbesondere sind bei der Verklebung von Kunststoff-Verpackungsmaterialien gemäß der vorliegenden Erfindung in der Regel keine chemischen und/oder energetischen Vorbehandlungen der Kunststoffoberflächen (z. B. Plasma, Coronabehandlung, Ätzung, Sulfonierung usw.) für die Erzielung einer Haftung notwendig.

Im Falle von Verklebungen von Holz-Verpackungsmaterialien kann es sich bei der Holzverpackung um massives Echtholz, um Echtholzlaminate, um Kunststofflaminate, um MDF-Platten und/oder ähnliche holzartige Stoffe handeln. Dabei können sowohl harz- beziehungsweise ölarme Hölzer wie z. B. Buche, Eiche usw., aber auch harz- beziehungsweise ölreiche Hölzer wie Teak, Kiefer usw. verwendet werden.

Bei den genannten Verpackungsverklebungen weist vorzugsweise mindestens eines der enthaltenen erfindungsgemäßen Polymere eine offene Zeit von kleiner 30 Sekunden auf.

Bei den Verklebungen von Hygieneartikeln gibt es grundsätzlich keine Einschränkungen, beispielsweise kann es sich hier um Windeln, Binden usw. handeln. Im Regelfall wird durch die erfindungsgemäße Verklebung eine mehrschichtige Struktur aufgebaut, die unterschiedliche Materialien wie z. B. Polymerfolien und Nonwoven umfasst. Darüber hinaus können feuchtigkeitsabsorbierende Substanzen, wie z. B. Polyacrylsäurepartikel, in der Verklebung enthalten sein.

Ein weiteres Anwendungsgebiet der erfindungsgemäßen Verklebungen sind strukturelle Holzverklebungen, insbesondere Kantenumleimungen und/oder Dekorpapierummantelungen und/oder Dekorfolienlaminierungen und/oder Montageverklebungen.

Ein weiteres wesentliches Anwendungsgebiet der erfindungsgemäßen Verklebungen sind Verklebungen unter

Beteiligung einer Glasoberfläche. Dabei kann die Verklebung feuchtigkeitsabsorbierende Substanzen wie z. B. Kieselgel, Polyacrylsäurepartikel usw. enthalten. Vorzugsweise handelt es sich hierbei um einen Mehrscheibenisolierglasverbund. Hierzu eignen sich alle dem Fachmann bekannten Arten von Mehrscheibenisolierglasverbunden, unabhängig vom einzelnen Aufbau, beispielsweise mit oder ohne weiteren Abstandshalter.

Weiterhin kann bei erfindungsgemäßen Verklebungen unter Beteiligung einer Glasoberfläche eine Laminierung durchgeführt werden.

Darüber hinaus kann es sich bei der Glasoberfläche um die Oberfläche von Glasfasern handeln, beispielsweise die Oberfläche eines Glasfaserkabels, wie es z. B. für Daten- und/oder Telefonleitungen verwendet wird.

In einer weiteren Ausführungsform der vorliegenden Erfindung handelt es sich bei dem zu verklebenden Gegenstand um ein Etikett. Das Etikett kann hierbei aus einer Papier-, Kunststoff-, Metall- und/oder Mehrschichtfolie bestehen und insbesondere für die Kennzeichnung von lackierten, beschichteten, eloxierten und/oder auf anderer Weise oberflächenbehandelten Metall- insbesondere Weißblechdosen sowie Glas- oder Kunststoff (insbesondere PET-)-Flaschen verwendet werden. Insbesondere kann es sich bei dem Klebstoff für Etikettenverklebungen um einen sogenannten "druckempfindlichen" Klebstoff (PSA) handeln.

In einer weiteren Ausführungsform der vorliegenden Erfindung handelt es sich bei den Verklebungen um eine Laminierung, wobei es sich bei der zu laminierenden Oberfläche um die Oberfläche einer anorganischen und/oder organischen Substanz handeln kann, vorzugsweise aus Metallen (z. B. Stahl, Aluminium, Messing, Kupfer, Zinn, Zink, Email), aus Glas, aus Keramiken und/oder anorganischen Baustoffen, wie z. B. offen- oder geschlossenporigen Beton. Darüber hinaus kann es sich bei der Oberfläche um Holz, Papier, Pappe und/oder Kunststoffe handeln. Die Oberfläche kann selbst ein Verbundwerkstoff aus anorganischen und organischen Materialien (z. B. Glasfaserverbundwerkstoffe) sein. Dabei kann das gegenkaschierte Laminiermaterial anorganischer und/oder organischer Natur sein. Beispiele gegenkaschierter anorganischer Laminiermaterialien sind ultradünne Glasscheiben, Keramikmembranen und/oder Metallfolien (z. B. Aluminiumfolie). Entsprechende Beispiele gegenkaschierter organischer Laminiermaterialien sind Papier, Pappe, Holzfurnier, Kunststoffe, natürliche und/oder synthetische Textilien, Nonwoven, Kunstleder und/oder Naturleder.

Selbstverständlich kann es sich bei den erfindungsgemäßen Verklebungen auch um eine Verklebung im Kfz-Innenraum (z. B. Sichtblenden, Dachhimmel usw.) handeln.

In einer weiteren besonderen Ausführungsform der vorliegenden Erfindung handelt es sich um Verklebungen zur Herstellung von Teppichen und/oder Kunstrasen. Insbesondere wird die Verklebung zur Noppen- und Filamenteinbindung eingesetzt. Dabei kann es sich bei den einzubindenden Fasern bzw. Faserverbunden um natürliche und/oder synthetische Fasern handeln. Beispiele natürlicher Fasern bzw. Faserverbunde sind Wolle, Baumwolle, Sisal, Jute, Stroh, Hanf, Flachs, Seide und/oder Mischungen aus diesen Fasern.

Beispiele einzubindender synthetischer Fasern bzw. Faserverbunde sind (Co)Polyamidfasern, Polyethylenfasern, Co(polyesterfasern), Polypropylenfasern und/oder Mischungen aus diesen Fasern. Im Falle von Kunstrasenverklebungen sind die durch die Verklebung eingebundenen Filamente ausgewählt aus Polypropylenfilamenten, Polyethylenfilamenten, Polyamidfilamenten, Polyesterfilamenten oder Mischfilamenten der aufgeführten Kunststoffe.

Vorzugsweise wird die Verklebung zur Teppichrückenbeschichtung eingesetzt. Darüber hinaus kann zusätzlich ein textiles Substrat gegenlaminiert werden.

Bei den erhaltenen Teppichelementen handelt es sich beispielsweise um sogenannte Meterware, um Teppichfliesen oder um einen nachträglich verformbaren Autoteppich. In den genannten Anwendungen zur Noppen- und Filamenteinbindung weist das enthaltene erfindungsgemäße Polyolefin eine Schmelzviskosität bei 190 °C von maximal 10000 mPa*s, bevorzugt von 500 bis 8000 mPa*s, besonders bevorzugt von 600 bis 6000 mPa*s und insbesondere bevorzugt von 750 bis 4000 mPa*s auf. Der Anteil der erfindungsgemäßen Polyolefine liegt insbesondere bei 60-98 ma-%. Das Auftragsgewicht beträgt insbesondere 20-1500 g/$m^2$. Weitere Beispiele liegen im fachmännischen Können eines Fachmanns.

Weiterhin kann es sich bei den erfindungsgemäßen Verklebungen um Schuhverklebungen handeln, die beispielsweise im Bereich der Sportschuhe und/oder zur Herstellung von sog. Spaltleder eingesetzt werden können.

Ebenfalls erfindungsgemäße Verklebungen sind sogenannte "druckempfindliche Verklebungen" (PSA). Hierbei ist es vorteilhaft, wenn mindestens eines der enthaltenen erfindungsgemäßen Polymere und/oder Formulierungsbestandteile einen "kalten Fluss" (das heißt einen Schmelzpunkt unterhalb der Raumtemperatur) aufweist. Formulierungsbestandteile mit kaltem Fluss sind beispielsweise Poly(1-hexen), Poly(1-octen), Poly(1-hexen-co-1-octen), Polyacrylate usw.

Im Falle von Buchverklebungen handelt es sich in der Regel um eine Verklebung die beim Vorgang des Buchbindens vorgenommen wird.

Bei Textilverklebungen können mehrere textile Schichten punktuell oder flächig miteinander verbunden werden, wobei zu verklebenden Textilelemente natürliche oder synthetische Materialien umfassen können. Insbesondere handelt es sich bei den natürlichen Textilelementen um Wolle, Rosshaar, Baumwolle, Leinengewebe, Hanf, Jute, Sisal, Flachs, Stroh und/oder Leder. Bevorzugte synthetische Textilelemente enthalten als Bestandteile Polypropylen, Polyethylen, (Co)polyamide, (Co)polyester, Nylon, Perlon und/oder Keflar®. Insbesondere kann es sich bei einem oder mehreren

der zu verklebenden Elemente um eine Einlage handeln. In einer besonderen Ausführungsform wird die erfindungsgemäße Klebstoffformulierung in Form eines Pulvers zwischen die zu verklebenden textilen Schichten eingebracht und durch thermische Energie (z. B. mit Hilfe einer Bügelpresse) aktiviert.

In einer ebenfalls erfindungsgemäßen Ausführungsform der vorliegenden Erfindung können die erfindungsgemäßen Polymere in Markierungsmassen, Beschichtungsmassen, Dichtungsbahnen oder Dachbahnen eingesetzt werden.

Die erfindungsgemäßen Markierungsmassen können die bereits bei der Beschreibung der Formmassen bzw. Klebstoffformulierungen genannten weiteren Bestandteile enthalten. Beispielsweise können die erfindungsgemäßen Markierungsmassen als Straßenmarkierungsmassen eingesetzt werden.

Im Falle von Beschichtungsmassen kann es sich beispielsweise um eine Beschichtungsmasse zur Pappe- bzw. Papierbeschichtung handeln.

Weiterhin eignen sich die erfindungsgemäßen Polymere zur Verwendung in Dichtungsbahnen. Neben den erfindungsgemäßen Polymeren können in den Dichtungsbahnen weitere Bestandteile enthalten sein, insbesondere handelt es sich bei den weiteren Bestandteilen um andere Polymere, Füllstoffe und Bitumen. Im Falle der Dichtungsbahnen liegt der Anteil der erfindungsgemäßen Polymere bei maximal 30 ma-%, bevorzugt bei maximal 27 ma-%, besonders bevorzugt bei maximal 25 ma-% und insbesondere bevorzugt bei maximal 22 ma-%, bezogen auf die Dichtungsbahn. Insbesondere handelt es sich bei den Dichtungsbahnen um Dachbahnen. Im Falle der Dachbahnen hat mindestens eines der erfindungsgemäßen Polymere eine Glasübergangstemperatur von maximal -10 °C, bevorzugt von maximal -15 °C, besonders bevorzugt von maximal -18 °C und insbesondere bevorzugt von maximal -20 °C.

Weiterhin eignen sich die erfindungsgemäßen Polymere zur Verwendung als Primer, Haftvermittler bzw. in Primerformulierungen und/oder in Haftvermittlerformulierungen, wobei insbesondere das Fehlen halogenierter organischer Bestandteile von Vorteil ist. Insbesondere werden Primer- und Haftvermittlungsformulierungen, welche die erfindungsgemäßen Polymere enthalten eingesetzt, um eine Haftung von organischen Beschichtungen und/oder Klebstoffen auf unbehandelten Polyolefinoberflächen, insbesondere auf unbehandeltem Polypropylen zu erzielen. In einem speziellen Fall werden die Primer- und/oder Haftvermittlerformulierungen als Grundierung auf Polypropylenformteilen wie z. 8. Kfz-Stoßfängem und/oder Verkleidungsteilen aufgebracht, um eine bessere Haftung der anschließenden Lackierung zu erzielen.

Weiterhin eignen sich die erfindungsgemäßen Polymere zur Verwendung in wässrigen Dispersionen, Suspensionen und/oder Emulsionen. Neben den erfindungsgemäßen Polymeren können in den Dispersionen, Suspensionen und/oder Emulsionen oberflächenaktive Substanzen (z. B. anorganische und/oder organische Tenside ionischer und/ oder nichtionischer Natur) sowie weitere Polymere, insbesondere solche mit polaren Monomereinheiten (wie z. B. Poly (propylen-graftmaleinsäureanhydrid) enthalten sein. Bevorzugt erfolgt die Herstellung der wässrigen Dispersionen, Suspensionen und/oder Emulsionen unter Verwendung einer Lösung der erfindungsgemäßen Polymere, insbesondere in Tetrahydrofuran oder Xylol. Auch eine Herstellung unter Verwendung einer Schmelze der erfindungsgemäßen Polymere ist möglich, wobei in diesem Fall bevorzugt Polymere mit einer Schmelz-/Erweichungstemperatur von < 100 °C, insbesondere bevorzugt von < 90 °C eingesetzt werden.

In den genannten wässrigen Dispersionen, Suspensionen und/oder Emulsionen beträgt der Anteil der erfindungsgemäßen Polyolefine mehr als 10 ma-% bezogen auf die Gesamtformulierung.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

**Beispiele:**

**Analytik:**

**a) Hochtemperatur-$^{13}$C-NMR**

Die Polymerzusammensetzung wird über Hochtemperatur-$^{13}$C-NMR bestimmt. Die $^{13}$C-NMR-Spektroskopie von Polymeren ist beispielsweise in folgenden Publikationen beschrieben:

[1] S. Berger, S. Braun, H.-O. Kalinowski, 13C-NMR-Spektroskopie, Georg Thieme Verlag Stuttgart 1985
[2] A.E. Tonelli, NMR Spectroscopy and Polymer Microstructure, Verlag Chemie Weinheim 1989
[3] J.L. Koenig, Spectroscopy of Polymers, ACS Professional Reference Books, Washington 1992
[4] J.C. Randall, Polymer Sequence Determination, Academic Press, New York 1977
[5] A. Zambelli et al: Macromolecules, 8, 687 (1975)

[6] A. Filho, G.Galland: J.Appl.Polym.Sci., 80, 1880 (2001)

**b) Hochtemperatur-GPC**

Die Bestimmung des Molekulargewichts erfolgt über Hochtemperatur-GPC. Die Bestimmung wird gemäß ASTM D6474-99 durchgeführt, jedoch bei einer höheren Temperatur (160°C statt 140°C) sowie einem geringeren Injektionsvolumen von 150 µl statt 300 µl. Als weitere Literatur zur GPC-Analyse von Polymeren sei angeführt: H. G. Elias: "Makromoleküle"; Bd.2; Wiley-VCH; Weinheim 2001; Z. Grubisic, P. Rempp, H. Benoit; Polym. Lett.; 5; 753 (1967); K.A. Boni, F.A. Sliemers, P.B. Stickney; J.Polym.Sci.;A2; 6; 1579 (1968); D. Goedhart, A. Opschoor; J.Polym.Sci.;A2; 8; 1227 (1970); A. Rudin, H.L.W. Hoegy; J.Polym.Sci.;A1; 10; 217 (1972); G. Samay, M. Kubin, J. Podesva; Angew. Makromol. Chem.; 72; 185 (1978); B. Ivan, Z. Laszlo-Hedvig, T. Kelen, F. Tüdos; Polym. Bull.;8; 311 (1982); K.-Q. Wang, S.-Y. Zhang, J. Xu, Y. Li, H.P. Li; J.Liqu.Chrom.; 5; 1899 (1982); T.G. Scholte, H.M. Schoffeleers, A.M.G. Brands; J.Appl.Polym.Sci.; 29; 3763 (1984).

Als Lösungsmittel wird Trichlorbenzol verwendet. Die Messung erfolgt bei einer Säulentemperatur von 160°C. Die dabei für die Auswertung der Elutionskurven verwendete universelle Kalibrierung wird auf Basis von Polyolefin-Standards durchgeführt. Die Ergebnisse sind nicht mit Messungen vergleichbar, deren Kalibrierungen auf Basis von artfremden Polymeren - z. B. auf Polystyrol-Basis - erfolgte, oder die ohne universelle Kalibrierung erfolgt sind, da ansonsten ein unzulässiger Vergleich unterschiedlicher dreidimensionaler Polymerstrukturen bzw. hydrodynamischer Radien erfolgt. Auch der Vergleich mit Messungen, die andere als das angegebene Lösungsmittel verwenden, ist nicht zulässig, da in unterschiedlichen Lösungsmitteln unterschiedliche dreidimensionale Polymerstrukturen bzw. hydrodynamische Radien vorliegen können, die zu einem abweichenden Ergebnis bei der Molekulargewichtsbestimmung führen.

Die Polydispersität $P_d$ ist als Quotient von zahlenmittlerer und gewichtsmittlerer Molmasse definiert. Sie ist insbesondere ein Maß für die Breite der vorliegenden Molmassenverteilung, die wiederum Rückschlüsse auf das vorliegende Polymerisationsverhalten zulässt. Sie wird über Hochtemperatur-GPC bestimmt. Die Polydispersität ist in gewissen Grenzen für eine bestimmte Katalysator-Cokatalysator-Kombination charakteristisch.Die Polydispersität hat einen relativ starken Einfluss auf die Klebrigkeit des Materials bei Raumtemperatur sowie auf die Haftung.

Bei der Bestimmung der Molmassen mittels Gel-Permeations-Chromatographie (GPC) spielt der hydrodynamische Radius der in Lösung vorliegenden Polymerketten eine besondere Rolle. Als Detektionsmechanismen werden neben Wärmeleitfähigkeits-, RI- (Brechungsindex) bzw. UV/VIS- und FTIR- oder Lichtstreuungsdetektoren auch Viskositätsdetektoren eingesetzt. Betrachtet man die Polymerkette als ungestörtes Knäuel, so lässt sich die Beziehung zwischen ihrer Grenzviskositätszahl und der Molmasse empirisch durch die sog. KMHS-Gleichung

$$[\eta] = K_V M_V^{\alpha}$$

beschreiben (H.-G. Elias, Makromoleküle, Band 2, 6. Auflage, Wiley-VCH, Weinheim 2001, S. 411-413). $K_v$ und $\alpha$ sind dabei Konstanten, die sowohl von der Konstitution, Konfiguration und Molmasse des Polymeren beeinflusst werden als auch vom Lösungsmittel und der Temperatur. Die wesentliche Aussage des Alpha-Wertes in der vorliegenden Erfindung ist die des hydrodynamischen Radius, dieser hängt mehr oder weniger von den an den Polymerketten befindlichen Verzweigungsstellen ab. Bei einer geringen Verzweigung ist der Alpha-Wert hoch, bei einer höheren Verzweigung niedrig.

**c) Rheologie**

Die Rheologischen Messungen erfolgen gemäß ASTM D 4440-01 ("Standard Test

Method for Plastics: Dynamic Mechanical Properties Melt Rheology") unter Verwendung eines Rheometers MCR 501 der Firma Anton Paar mit einer Platte-Platte-Geometrie (Plattendurchmesser: 50 mm) als Oszillationsmessung. Als maximale Probendeformation wird in allen Messungen 1 % verwendet, die temperaturabhängigen Messungen werden bei einer Messfrequenz von 1 Hz und einer Abkühlgeschwindigkeit von 1,5 K/min durchgeführt.

Die Schmelzviskosität wird durch Oszillationsrheometrie bestimmt, wobei mit einer Schergeschwindigkeit von 1 Hz gearbeitet wird. Die maximale Deformation der Probe wird so gewählt, dass sich die Probe während der gesamten Messdauer im linear viskoelastischen Bereich befindet. Viskoelastische Materialien zeichnen sich gegenüber Hookschen Festkörpern durch die Fähigkeit aus, auseinerfleformation resultierende Spannungen übereine bestimmte Zeit dissipativ abzubauen (Relaxation). Im Gegensatz zu Newtonschen Flüssigkeiten, die unter Einwirkung einer Scherung/Dehnung einer ausschließlich irreversiblen Verformung unterliegen, können viskoelastische Fluide einen Teil der Deformationsenergie zurückgewinnen, nachdem die Scherkraft entfernt wurde (sog. "Memory Effekt") [N.P.Cheremisinoff; "An Introduction to Polymer Rheology and Processing"; CRC Press; London; 1993]. Ein weiteres Kennzeichen polymerer

Schmelzen ist das Auftreten einer sogenannten Strukturviskosität. Als solche bezeichnet man ein Verhalten, bei dem die Schubspannung als auftretende Kraft die Ausgangsstruktur des Materials in Abhängigkeit von der Schergeschwindigkeit abbaut. Da dieser Abbauprozess eine Mindestschergeschwindigkeit voraussetzt, fließt das Material unterhalb dieser Schergeschwindigkeit wie eine Newtonsche Flüssigkeit. Eine Erklärung liefert das Prinzip von Le Chatelier, wobei das "Ausweichen" der strukturviskosen Flüssigkeit (vor der mechanischen Beanspruchung) in der Ausrichtung entlang der Schubflächen zur Verminderung des Reibungswiderstandes besteht. Letzteres führt zum Abbau der Gleichgewichtsstruktur des Anfangszustandes und zum Aufbau einer schuborientierten Struktur, was wiederum ein erleichtertes Fließen (Viskositätsverminderung) zur Folge hat. In Polymerschmelzen ist der Newtonsche Bereich nur bei sehr kleinen Schergeschwindigkeiten bzw. kleinen Scheramplituden wahrnehmbar. Seine Bestimmung ist über rheometrische Testmethoden (Amplituden-"Sweeps", d.h. Messung bei fester Frequenz in Abhängigkeit von der Scheramplitude) möglich und notwendig, wenn die Messung im reversiblen, d.h. reproduzierbaren Bereich durchgeführt werden soll [R.S.Lenk; "Rheologie der Kunststoffe"; C.Hanser Verlag; München; 1971; J.Meissner; "Rheologisches Verhalten von Kunststoff-Schmelzen und -Lösungen" in: "Praktische Rheologie der Kunststoffe"; VDI-Verlag; Düsseldorf; 1978; J.-F. Jansson; Proc.8th.Int.Congr.Rheol.; 1980; Vol.3]. Die Schwingungsrheometrie ist auf Grund ihrer geringen Krafteinwirkung, ihrer geringen Deformation und der somit geringen Auswirkung auf die Probenmorphologie besonders gut zur Untersuchung von Materialien geeignet, die ein strukturviskoses Verhalten zeigen.

**d) Nadelpenetration**

Die Nadelpenetration wird gemäß DIN EN 1426 bestimmt.

**e) DSC**

Die Bestimmung der Schmelzenthalpie, der Glasübergangstemperatur und des Schmelzbereichs des kristallinen Anteils erfolgt über Differentialkalorimetrie (DSC) gemäß DIN 53 765 aus der 2. Aufheizkurve bei einer Heizrate von 10 K/min. Der Wendepunkt der Wärmestromkurve wird als Glasübergangstemperatur ausgewertet.

**f) Xylollöslichkeit**

Es wird ein Xylol-Isomerengemisch verwendet, wobei das Polymer unter Rückfluss gelöst und dann die Lösung auf Raumtemperatur abgekühlt wird. 2 g Polyolefin werden in 250 mL Xylol unter Rühren und Heizen bis zum Siedepunkt von Xylol gelöst. Nachdem 20 min unter Rückfluss gekocht wurde, lässt man die Polymerlösung auf 25 °C abkühlen. Ungelöstes bzw. ausgefallenes Polyolefin wird mit abgenutscht (15 cm-Nutsche, Sartorius 390-Filterpapier) und getrocknet. Die überbleibende Polymerlösung wird in einem 5fachen Überschuss an Methanol (mit einem Tropfen 37-prozentiger wässriger HCl versetzt) ausgefällt. Der entstehende Niederschlag wird abgenutscht und bei 80 °C im Trokkenschrank (Vakuum) getrocknet.

**g) Löslichkeit in THF**

Die Löslichkeit in THF ist ein Kennzeichen teilkristalliner Polyolefine. Die Durchführung erfolgt analog zu den Lösungsversuchen in Xylol.

**h) Zugfestigkeit und Reißdehnung**

Die Bestimmung der Zugfestigkeit und Reißdehnung erfolgt nach DIN EN ISO 527-3.

**i) Erweichungspunkt (Ring&Kugel)**

Die Bestimmung des Erweichungspunktes nach der Ring- und Kugelmethode erfolgt nach DIN EN 1427.

**j) Klebscherfestigkeit**

Die Bestimmung der Klebscherfestigkeit erfolgt nach DIN EN 1465.

**k) RFA-Spektroskopie**

Die in Alu - Schalen gegossenen und ausgehärteten Proben werden mit einem Stanzeisen (Durchmesser 30 mm) ausgestanzt. Die Bestimmung erfolgt als Doppelbestimmung. Die Schichtdicke der Polymerproben beträgt > 5 mm.

Die Proben werden im Probenhalter platziert und vermessen (Messgerät: PANalytical PW 2404). Die quantitative Bestimmung erfolgt gegen eine externe Kalibrierung von Si in Borax-Tabletten.

Die beschriebenen Messmethoden beziehen sich dabei auf jede Vermessung im Rahmen der vorliegenden Erfindung, unabhängig davon ob es sich um das zu pfropfende Basispolymer oder um das erfindungsgemäße Polyolefin handelt.

**Beispiele für Modifizierte Polvolefine**

**a) Darstellung (Polymerisation) der Basispolymere**

Die Herstellung der Basispolymere erfolgt wie unter DE 102008005947 beschrieben.

**b) Erfindungsgemäße Basispolymere und nicht erfindungsgemäße Basispolymere**

Die Polymerzusammensetzung (Tabelle 1) sowie die Mikrostruktur der hergestellten Polymere werden über Hochtemperatur-$^{13}$C-NMR bestimmt.

**Tabelle 1**

| Polymer aus Polymerisations-versuch | 1 | 2 | 4 | 5 | 6 | 7 | 8 | 9 | 10 | 11 | 12 |
|---|---|---|---|---|---|---|---|---|---|---|---|
| Polymer-zusammensetzung | | | | | | | | | | | |
| Ethylen [ma-%] | 7,4 | 7,5 | 9 | 12,6 | 18,6 | 14,9 | 10 | 7,7 | 4 | 6,9 | 14 |
| Propylen [m-a%] | 77 | 0 | 82 | 74,5 | 81,4 | 85,1 | 90 | 92,3 | 96 | 93,1 | 86 |
| 1-Buten [ma-%] | 15,6 | 92,5 | 9 | 12,9 | 0 | 0 | 0 | 0 | 0 | 0 | 0 |
| Propylen-Triaden | | | | | | | | | | | |
| Isotaktisch [ma-%] | 75 | – | 74 | 67 | 48 | 53 | 60 | 72 | 74 | 66 | 66 |

| | | | | | | | | | | | |
|---|---|---|---|---|---|---|---|---|---|---|---|
| Syndiotaktisch [ma-%] | 5 | – | 6 | 13 | 19 | 15 | 11 | 7 | 6 | 12 | 10 |
| Ataktisch [ma-%] | 20 | – | 20 | 20 | 34 | 32 | 29 | 22 | 20 | 23 | 24 |
| 1-Buten-Triaden | | | | | | | | | | | |
| Isotaktisch [ma-%] | 45 | 68 | 28 | 32 | – | – | – | – | – | – | – |
| Syndiotaktisch [ma-%] | 5 | 6 | 9 | 9 | – | – | – | – | – | – | – |
| Ataktisch [ma-%] | 49 | 25 | 63 | 58 | – | – | – | – | – | – | |
| Ethylen-Triaden [ma-%] | 0,7 | 1,4 | 0,7 | 5,6 | 0,8 | 0,4 | 0,2 | 0 | 0 | 0 | 5,2 |

| Polymer aus Polymerisationsversuch | 3* | 13* | 14* |
|---|---|---|---|
| Polymerzusammensetzung | | | |
| Ethylen [ma-%] | 0 | 0 | 0 |
| Propylen [ma-%] | 26 | 59 | 100 |
| 1-Buten [ma-%] | 74 | 41 | 0 |
| Propylen-Triaden | | | |
| Isotaktisch [ma-%] | 99 | 75 | 7 |
| Syndiotaktisch [ma-%] | 0 | 13 | 75 |
| Ataktisch [ma-%] | 1 | 12 | 18 |
| 1-Buten-Triaden | | | |
| Isotaktisch [ma-%] | 95 | 80 | – |
| Syndiotaktisch [ma-%] | 2 | 3 | – |
| Ataktisch [ma-%] | 3 | 17 | – |
| Ethylen-Triaden [ma-%] | 0 | – | – |

*: Nicht erfindungsgemäß

**c) Molmassen, Molmassenverteilung und Polymerverzweigung**

Die Bestimmung des Molekulargewichts erfolgt über Hochtemperatur-GPC (Tabelle 2). Die Bestimmung wird gemäß ASTM D6474-99 durchgeführt, jedoch bei einer höheren Temperatur (160 °C statt 140 °C) sowie einem geringeren Injektionsvolumen von 150 μl statt 300 μl. Die Bestimmung der niedermolekularen Bestandteile erfolgt aus den erhaltenen Molmassenverteilungskurven durch Integration der entsprechenden Flächen.

**Tabelle 2**

| **Polymer aus Polymerisationsversuch** | **1** | **2** | **4** | **5** |
|---|---|---|---|---|
| Modalität MMV | monomodal | bimodal | monomodal | monomodal |
| **$M_w$ [g/mol]** | 30000 | 38200 | 83000 | 18400 |
| **Pd [-]** | 2,6 | 3,0 | 1,5 | 1,6 |
| α-Wert [-] | 0,58 | 0,74 | 1,04 | 1,04 |
| **Bestandteile 1000-500 D** | 0,3 | 0,01 | 0 | 0 |
| **Bestandteile < 500 D** | 0 | 0 | 0 | 0 |

| **Polymer aus Polymerisationsversuch** | **6** | **7** | **8** | **9** | **10** |
|---|---|---|---|---|---|
| **Modalität MMV** | Mono modal | Mono modal | Mono modal | Mono modal | bimodal |
| **$M_w$ [g/mol]** | 24900 | 27500 | 22800 | 19200 | 14000 |
| **Pd [-]** | 1,5 | 1,5 | 1,5 | 1,4 | 1,6 |
| α-Wert [-] | 0,83 | 0,82 | 0,86 | 0,93 | 0,82 |
| **Bestandteile 1000-500 D** | 0 | 0 | 0 | 0 | 0 |
| **Bestandteile < 500 D** | 0 | 0 | 0 | 0 | 0 |

| **Polymer aus Polymerisationsversuch** | **11** | **12** | **3**** | **13**** | **14**** |
|---|---|---|---|---|---|
| **Modalität MMV** | Bimodal | Mono modal | bimodal | Mono modal | Mono modal |
| **$M_w$ [g/mol]** | 11.600 | 43500 | 56000 | 195000 | 82500 |
| **Pd [-]** | 1,61 | 2,4 | 2,4 | 8,6 | 1,7 |
| α-Wert [-] | 0,82 | 0,56 | 0,76 | 0,68 | 0,75 |
| **Bestandteile 1000-500 D** | 0 | 0,1 | 0 | 0,31 | 0 |
| **Bestandteile < 500 D** | 0 | 0,01 | 0 | 0,19 | 0 |

**: Nicht erfindungsgemäß

**d) Erfindungsgemäße modifizierte Polymere**

**Herstellung der erfindungsgemäßen modifizierten Polyolefine in der Schmelze:**

Ein teilkristallines Polyolefin (Zusammensetzung und Materialparameter siehe Tabelle 1 & 2) wird in einem Doppelschneckenextruder (Berstorff ZE40) mit dem Monomer Vinyltrimethoxysilan und dem Initiator Dicumylperoxid (Menge siehe Tabelle 3) bei einer bestimmten Reaktionstemperatur (siehe Tabelle 3) für ca. 90 Sekunden (VWZ) vermischt. Das überschüssige Monomer wird in der letzten Zone des Extruders bei einem Vakuum von ca. 20 mbar verdampft. Anschließend erfolgt eine Stabilisierung durch ca. 0,3 ma-% IRGANOX 1076.

Tabelle 3

| | Bsp. A1 (nicht erfindungsgemäß) | Bsp. A2 (nicht erfindungsgemäß) | Bsp. A3 (erfindungsgemäß) | Bsp. A4 (erfindungsgemäß) | Bsp. A5 (erfindungsgemäß) |
|---|---|---|---|---|---|
| **Basispolymer lt. Beispiel** | **14** | **13** | **2** | **5** | **6** |
| **Basispolymer im Extruderfeed [ma-%]** | 88 | 88 | 88 | 88 | 88 |
| **Vinyltrimethoxysilan im Extruderfeed [ma-%]** | 11 | 11 | 11 | 11 | 11 |
| **Dicumylperoxid im Extruderfeed [ma-%]** | 1 | 1 | 1 | 1 | 1 |
| **Reaktionstemperatur [°C]** | 170 | 170 | 170 | 170 | 170 |
| **Si [ma-%]** | 0,7 | 0,8 | 0,7 | 0,5 | 0,3 |

**e) Verklebungen**

**Holzverklebungen**

Die erfindungsgemäß modifizierten Polyolefine werden bei 190 °C im Trockenschrank unter Schutzgasatmosphäre (z. B. Stickstoff, Argon usw.) eine Stunde aufgeschmolzen und anschließend bei einer Temperatur von 170 °C (mit Hilfe eines Thermofühlers) auf einen Holzprüfkörper (Holzart: Buche massiv) appliziert. Dieser wird innerhalb von 20 Sekunden mit einem weiteren Holzprüfkörper (Holzart: Buche massiv) auf einer fläche von 4 $cm^2$ einfach überlappend zusammengefügt und 5 Minuten mit einem Gewicht von 2 Kg aneinandergepresst. Überstehendes Klebpolymer wird entfernt. Anschließend lagert das Verklebungsmuster eine bestimmte Anzahl von Tagen bei 20 °C / 65 % rel. Luftfeuchte im Klimaschrank und wird anschließend mittels Zugprüfung auf seine mechanischen Eigenschaften hin getestet.

**Polypropylenverklebungen**

Die erfindungsgemäß modifizierten Polyolefine werden bei 190°C im Trockenschrank unter Schutzgasatmosphäre (z. B. Stickstoff, Argon usw.) eine Stunde aufgeschmolzen und anschließend bei einer Temperatur von 170 °C (mit Hilfe eines Thermofühlers) auf einen Polypropylenprüfkörper (isotaktisches Polypropylen, "PP-DWST"/ Hersteller: Simona AG) appliziert. Dieser wird innerhalb von 20 Sekunden mit einem weiteren Polypropylenprüfkörper (isotaktisches Polypropylen, "PP-DWST"/ Hersteller: Simona AG) auf einer Fläche von 4 $cm^2$ einfach überlappend zusammengefügt und 5 Minuten mit einem Gewicht von 2 Kg aneinandergepresst. Überstehendes Klebpolymer wird entfernt. Anschließend lagert das Verklebungsmustereine bestimmte Anzahl von Tagen bei 20 °C / 65 % rel. Luftfeuchte im Klimaschrank und wird anschließend mittels Zugprüfung auf seine mechanischen Eigenschaften hin getestet.

**Verklebungen von Aluminium**

Je 100 g der erfindungsgemäß modifizierten Polyolefine werden im Trockenschrank bei 180 °C unter Schutzgasatmosphäre (z. B. Stickstoff, Argon usw.) für eine Stunde aufgeschmolzen. Anschließend wird die Polymerschmelze bei einer bestimmten Verklebungstemperatur (mit Hilfe eines Thermofühlers) auf einen Aluminium-Prüfkörper (99.5, Abmaße: 100 mm x 20 mm x 1,5 mm) appliziert. Dieser wird innerhalb von 20 Sekunden mit einem weiteren Aluminium-Prüfkörper (99.5, Abmaße: 100 mm x 20 mm x 1,5 mm) auf einer Fläche von 4 $cm^2$ einfach überlappend zusammengefügt und 5 Minuten mit einem Gewicht von 2 kg aneinander gepresst. Überstehendes Klebpolymer wird entfernt. Anschließend lagert das Verklebungsmuster für 14 Tage bei 20 °C / 65 % rel. Luftfeuchte im Klimaschrank und wird anschließend mittels Zugprüfung auf seine mechanischen Eigenschaften hin getestet.

**Tabelle 4**

| | Verklebung | Klebscher-Festigkeit nach 2 Wochen Lagerdauer [N/$mm^2$] |
|---|---|---|
| **Bsp. A1 (nicht erfindungsgemäß)** | Buche | 2,89 |
| | PP | 0,64 |
| | Alu | 0,22 |
| **Bsp. A2 (erfindungsgemäß)** | Buche | 2,11 |
| | PP | 1,37 |
| | Alu | 0,31 |
| **Bsp. A3 (erfindungsgemäß)** | Buche | 4,96 |
| | PP | 1,42 |
| | Alu | 0,25 |
| **Bsp. A4 (erfindungsgemäß)** | Buche | 4,12 |
| | PP | 1,52 |
| | Alu | 0,29 |

(fortgesetzt)

| | Verklebung | Klebscher-Festigkeit nach 2 Wochen Lagerdauer [N/mm²] |
|---|---|---|
| **Bsp. A5 (erfindungsgemäß)** | Buche | 1,21 |
| | PP | 2,33 |
| | Alu | 0,41 |

Die erfindungsgemäßen Beispiele zeigen bessere Klebeigenschaften als die entsprechenden Vergleichsbeispiele, die auf anderen Basispolymeren beruhen.

**Patentansprüche**

**1.** Modifizierte Polyolefine auf Basis unfunktionalisierter Polyolefine, die maximal 30 ma-% Ethylen, entweder 70-98 ma-% oder maximal 30 ma-% Propylen und/oder entweder 75-95 ma-% oder maximal 25 ma-% 1-Buten enthalten, wobei die Summe der Anteile 100 ma-% beträgt, wobei die durch $^{13}$C-NMR bestimmte Triadenverteilung für Propentriaden einen ataktischen Anteil von 20-55 ma-%, einen syndiotaktischen Anteil von maximal 30 ma-% und einen isotaktischen Anteil von 40-80 ma-% aufweisen, und/oder die durch $^{13}$C-NMR bestimmte Triadenverteilung für 1-Butentriaden einen ataktischen Anteil von 2-85 ma-% und einen syndiotaktischen Anteil von maximal 20 ma-% aufweisen, wobei sich die Anteile isotaktischer, syndiotaktischer und ataktischer Triaden von Propen bzw. 1-Buten jeweils zu 100 % addieren, wobei die unfunktionalisierten Polymere unter Verwendung eines Metallocen-Katalysators hergestellt worden sind und wobei auf die unfunktionalisierten Polyolefine ein oder mehrere funktionelle Gruppen aufweisende Monomere aufgepfropft sind,.

**2.** Modifizierte Polyolefine gemäß Anspruch 1, **dadurch gekennzeichnet, dass** bei den unfunktionalisierten Polyolefinen der bei der Untersuchung durch Gelpermeationschromatographie gefundene Anteil an niedermolekularen Bestandteilen mit einem Molekulargewicht von 500 bis 1000 Dalton bei maximal 0,4 ma-% liegt.

**3.** Modifizierte Polyolefine gemäß Anspruch 1 oder 2, **dadurch gekennzeichnet, dass** das funktionelle Gruppen aufweisende Monomer ausgewählt ist aus der Gruppe der Carbonsäuren und/oder Carbonsäurederivate, der Acrylate, der Vinylsilane, der Vinylaromaten, der cyclischen Imidoester bzw. deren Vinylverbindungen, der Vinylimidazoline, der Vinylpyrolidone und/oder der alicyclischen Vinylverbindungen.

**4.** Modifizierte Polyolefine gemäß einem oder mehreren der Ansprüche 1 bis 3,
**dadurch gekennzeichnet, dass** es sich bei den unfunktionalisierten Polymeren um Poly(ethylen-co-propylen)-Copolymere mit einem Ethylenanteil von maximal 30 ma-%, um Poly(ethylen-co-1-buten)-Copolymere mit einem Ethylenanteil von maximal 30 ma-%, um Poly(propylen-co-1-buten)-Copolymere mit einem Propylenanteil von maximal 30 ma-%, um Poly(propylen-co-1-buten)-Copolymere mit einem 1-Butenanteil von maximal 25 ma-% oder um Poly (ethylen-co-propylen-co-1-buten)-Terpolymere mit einem Ethylenanteil von maximal 28 ma-% handelt.

**5.** Modifizierte Polyolefine gemäß einem oder mehreren der Ansprüche 1 bis 4, **dadurch gekennzeichnet, dass** der Metallocen-Katalysator ausgewählt ist aus Verbindungen gemäß der Formel I

$$Z_xR^1R^{1a}YR^{2a}(IndR^3R^4R^5R^6R^7R^8)_2MCl_2 \quad I$$

worin M ein Übergangsmetall ist, ausgewählt aus der Gruppe umfassend Zr, Hf und Ti, worin Ind Indenyl bedeutet und worin $Z_xR^1R^{1a}YR^2R^{2a}$ als Brücke die Indenyl-Reste verbindet, mit Z und Y ausgewählt aus Kohlenstoff und/oder Silizium, mit x = 0 oder 1, worin $R^1$, $R^{1a}$ und $R^2$ und $R^{2a}$ unabhängig voneinander ausgewählt sind aus H, linearen oder verzweigten Alkylgruppen mit 1 bis 6 C-Atomen, Alkoxylalkylgruppen mit 1 bis 6 C-Atomen, Arylgruppen oder Alkoxyarylgruppen mit 6 bis 10 C-Atomen und mit $R^3$ bis $R^8$ ausgewählt aus der Gruppe umfassend H und/oder lineare oder verzweigte Alkylgruppen mit 1 bis 10 C-Atomen, Alkylarylgruppen, Arylalkylgruppen oder Arylgruppen mit 6 bis 10 C-Atomen.

**6.** Verfahren zur Herstellung eines modifizierten Polyolefins gemäß Anspruch 1, **dadurch gekennzeichnet, dass** mindestens ein teilkristallines Polyolefin mit einem durch $^{13}$C-NMR-Spektroskopie bestimmten Gehalt an Ethylen von maximal 30 ma-%, entweder 70-98 ma-% oder maximal 30 ma-% Propylen und/oder entweder 70-100 ma-%

oder maximal 25 ma-% 1-Buten enthält, wobei die Summe der Anteile 100 ma-% beträgt, welches sich weiterhin **dadurch** auszeichnet, dass seine ebenfalls durch $^{13}$C-NMR bestimmte Triadenverteilung für Propentriaden einen ataktischen Anteil von 20-55 ma-%, einen syndiotaktischen Anteil von maximal 30 ma-% und einen isotaktischen Anteil von 40-80 ma-% aufweisen, und/oder die durch $^{13}$C-NMR bestimmte Triadenverteilung für 1 Butentriaden einen ataktischen Anteil von 2-85 ma-% und einen syndiotaktischen Anteil von maximal 20 ma-% aufweisen, wobei sich die Anteile isotaktischer, syndiotaktischer und ataktischer Triaden von Propen bzw. 1-Buten jeweils zu 100% addieren, wobei das unfunktionalisierte Polymer unter Verwendung eines Metallocen-Katalysators hergestellt worden ist, mit mindestens einem Radikalstarter und einem oder mehreren funktionelle Gruppen aufweisende Monomeren in Kontakt gebracht wird, woraufhin eine Pfropfreaktion der ein oder mehreren funktionelle-Gruppen aufweisende Monomere auf das Polyolefin stattfindet.

**7.** Verfahren gemäß Anspruch 6, **dadurch gekennzeichnet, dass** das funktionelle Gruppen aufweisende Monomer ausgewählt ist aus der Gruppe der Carbonsäuren und/oder Carbonsäurederivate, der Acrylate, der Vinylsilane, der Vinylaromaten, der cyclischen Imidoester bzw. deren Vinylverbindungen, der Vinylimidazoline, der Vinylpyrolidone und/oder der alicyclischen Vinylverbindungen.

**8.** Verfahren gemäß Anspruch 6 oder 7, **dadurch gekennzeichnet, dass** das Aufpfropfen der ein oder mehreren funktionelle Gruppen aufweisenden Monomere in Lösung oder in der Schmelze erfolgt.

**9.** Verfahren gemäß einem oder mehreren der Ansprüche 6 bis 8, **dadurch gekennzeichnet, dass** das Aufpfropfen bei einer Temperatur von 30 bis 250 °C erfolgt.

**10.** Verwendung von modifizierten Polyolefinen gemäß einem oder mehreren der Ansprüche 1 bis 5 als oder in Formmassen, in Schutzmassen, als oder in Klebstoffen, in Dichtungsmassen, in Markierungsmassen, Beschichtungsmassen, Dichtungsbahnen, Bodenbelägen oder Dachbahnen, als Primer oder in Primerformulierungen und/oder Haftvermittlerformulierungen und/oder in Dispersionen, Suspensionen oder Emulsionen.

**11.** Formmassen, Schutzmassen, Klebstoffe, Dichtungsmassen, Markierungsmassen, Beschichtungsmassen, Dichtungsbahnen, Bodenbeläge oder Dachbahnen, Primer, Primerformulierungen, Haftvermittlerformulierungen, Dispersionen, Suspensionen und/oder Emulsionen enthaltend ein oder mehrere modifizierte Polyolefine gemäß einem oder mehreren der Ansprüche 1 bis 5.

**12.** Klebstoffe gemäß Anspruch 11, **dadurch gekennzeichnet, dass** es sich um Heißschmelzklebstoffformulierungen handelt.

**13.** Klebstoffe gemäß Anspruch 11 oder 12, **dadurch gekennzeichnet, dass** sie zusätzlich Vernetzungsbeschleuniger, anorganische und/oder organische Füllstoffe, anorganische und/oder organische Pigmente, synthetische und/oder natürliche Harze, anorganische und/oder organische, synthetische und/oder natürliche Polymere, anorganische und/oder organische, synthetische und/oder natürliche Fasern, anorganische und/oder organische Stabilisatoren, anorganische und/oder organische Flammschutzmittel, Harze, amorphe Poly(a-Olefine), Polymere mit polaren Gruppen, Polymere auf Basis von Ethylen, Butadien, Styrol und/oder Isopren, elastomere Polymere auf Basis von Ethylen, Propylen, Acrylnitril, einem Dien und/oder einem cyclischen Dien, Styrol, Wachse, ein oder mehrere synthetische oder natürliche Öle und/oder UV-aktive Substanzen enthalten.

**14.** Dichtungsbahnen gemäß Anspruch 11, **dadurch gekennzeichnet, dass** sie zusätzlich andere Polymere, Füllstoffe und/oder Bitumen enthalten.

**15.** Verklebungen enthaltend ein oder mehrere modifizierte Polyolefine gemäß einem oder mehreren der Ansprüche 1 bis 5.

**16.** Verklebungen gemäß Anspruch 15, **dadurch gekennzeichnet, dass** es sich bei den Verklebungen um Verpackungsverklebungen, Verklebungen von Hygieneartikeln, Holzverklebungen, Verklebungen von Glasoberflächen, Etikettverklebungen, Laminierungsverklebungen, Teppich- oder Kunstrasenverklebungen, Schuhverklebungen, druckempfindliche Verklebungen, Buchverklebungen oder Textilverklebungen handelt.

**17.** Primer- und/oder Haftvermittlerformulierung nach Anspruch 11, enthaltend ein oder mehrerer Polyolefine gemäß einem oder mehreren der Ansprüche 1 bis 5 **dadurch gekennzeichnet, dass** sie zur Behandlung einer Polyolefinoberfläche eingesetzt wird.

**18.** Dispersionen, Suspensionen und/oder Emulsionen nach Anspruch 11 enthaltend ein oder mehrere Polyolefine gemäß einem oder mehrerer der Ansprüche 1 bis 5, **dadurch gekennzeichnet, dass** der Anteil an Polymer mehr als 10 ma-%, bezogen auf die Gesamtformulierung, beträgt.

## Claims

**1.** Modified polyolefins based on unfunctionalized polyolefins which contain not more than 30% by mass of ethylene, either 70-98% by mass or not more than 30% by mass of propylene and/or either 75-95% by mass or not more than 25% by mass of 1-butene, where the sum of the proportions is 100% by mass, the triad distribution determined by $^{13}C$ NMR for propene triads having an atactic content of 20-55% by mass, a syndiotactic content of not more than 30% by mass and an isotactic content of 40-80% by mass, and/or the triad distribution determined by $^{13}C$ NMR for 1-butene triads having an atactic content of 2-85% by mass and a syndiotactic content of not more than 20% by mass, where the contents of isotactic, syndiotactic and atactic triads of propene and 1-butene each add up to 100%, the unfunctionalized polymers having been prepared using a metallocene catalyst, and monomers having one or more functional groups having been grafted onto the unfunctionalized polyolefins.

**2.** Modified polyolefins according to Claim 1, **characterized in that**, in the unfunctionalized polyolefins, the proportion of low molecular weight constituents with a molecular weight of 500 to 1000 daltons found in the analysis by gel permeation chromatography is not more than 0.4% by mass.

**3.** Modified polyolefins according to Claim 1 or 2, **characterized in that** the monomer having functional groups is selected from the group of the carboxylic acids and/or carboxylic acid derivatives, the acrylates, the vinylsilanes, the vinylaromatics, the cyclic imido esters and vinyl compounds thereof, the vinylimidazolines, the vinylpyrrolidones and/or the alicyclic vinyl compounds.

**4.** Modified polyolefins according to one or more of Claims 1 to 3, **characterized in that** the unfunctionalized polymers are poly(ethylene-co-propylene) copolymers with an ethylene content of not more than 30% by mass, poly(ethylene-co-1-butene) copolymers with an ethylene content of not more than 30% by mass, poly(propylene-co-1-butene) copolymers with a propylene content of not more than 30% by mass, poly(propylene-co-1-butene) copolymers with a 1-butene content of not more than 25% by mass, or poly(ethylene-co-propylene-co-1-butene) terpolymers with an ethylene content of not more than 28% by mass.

**5.** Modified polyolefins according to one or more of Claims 1 to 4, **characterized in that** the metallocene catalyst is selected from compounds of the formula I $Z_xR^1R^{1a}YR^2R^{2a}$ $(IndR^3R^4R^5R^6R^7R^8)$ $_2MCl_2$ I
in which M is a transition metal selected from the group comprising Zr, Hf und Ti, in which Ind is indenyl and in which $Z_xR^1R^{1a}YR^2R^{2a}$ joins the indenyl radicals as a bridge, where Z and Y are selected from carbon and/or silicon, where x = 0 or 1, in which $R^1$, $R^{1a}$ and $R^2$ and $R^{2a}$ are each independently selected from H, linear or branched alkyl groups having 1 to 6 carbon atoms, alkoxylalkyl groups having 1 to 6 carbon atoms, aryl groups or alkoxyaryl groups having 6 to 10 carbon atoms, and where $R^3$ to $R^8$ are selected from the group comprising H and/or linear or branched alkyl groups having 1 to 10 carbon atoms, alkylaryl groups, arylalkyl groups oder aryl groups having 6 to 10 carbon atoms.

**6.** Process for preparing a modified polyolefin according to Claim 1, **characterized in that** at least one semicrystalline polyolefin with an ethylene content, determined by $^{13}C$ NMR spectroscopy, of not more than 30% by mass contains either 70 - 98% by mass or not more than 30% by mass of propylene and/or either 70 - 100% by mass or not more than 25% by mass of 1-butene, where the sum of the proportions is 100% by mass, which has the additional feature that the triad distribution thereof, likewise determined by $^{13}C$ NMR, for propene triads has an atactic content of 20 - 55% by mass, a syndiotactic content of not more than 30% by mass and an isotactic content of 40-80% by mass, and/or the triad distribution for 1-butene triads, determined by $^{13}C$ NMR, has an atactic content of 2-85% by mass and a syndiotactic content of not more than 20% by mass, where the contents of isotactic, syndiotactic and atactic triads of propene and 1-butene each add up to 100%, the unfunctionalized polymer having been prepared using a metallocene catalyst, and contacted with at least one free-radical initiator and monomers having one or more functional groups, followed by a graft reaction of the monomers having one or more functional groups onto the polyolefin.

**7.** Process according to Claim 6, **characterized in that** the monomer having functional groups is selected from the group of the carboxylic acids and/or carboxylic acid derivatives, the acrylates, the vinylsilanes, the vinylaromatics, the cyclic imido esters and vinyl compounds thereof, the vinylimidazolines, the vinylpyrrolidones and/or the alicyclic vinyl compounds.

8. Process according to either of Claims 6 and 7, **characterized in that** the monomers having one or more functional groups are grafted on in solution or in the melt.

9. Process according to one or more of Claims 6 to 8, **characterized in that** the grafting is effected at a temperature of 30 to 250°C.

10. Use of modified polyolefins according to one or more of Claims 1 to 5 as or in moulding materials, in protective materials, as or in adhesives, in sealants, in marking materials, coating materials, sealing membranes, floor coverings or roof membranes, as a primer or in primer formulations and/or adhesion promoter formulations and/or in dispersions, suspensions or emulsions.

11. Moulding materials, protective materials, adhesives, sealants, marking materials, coating materials, sealing membranes, floor coverings or roof membranes, primer, primer formulations, adhesion promoter formulations, dispersions, suspensions and/or emulsions containing one or more modified polyolefins according to one or more of Claims 1 to 5.

12. Adhesives according to Claim 11, **characterized in that** they are hotmelt adhesive formulations.

13. Adhesives according to either of Claims 11 and 12, **characterized in that** they additionally contain crosslinking accelerants, inorganic and/or organic fillers, inorganic and/or organic pigments, synthetic and/or natural resins, inorganic and/or organic, synthetic and/or natural polymers, inorganic and/or organic, synthetic and/or natural fibres, inorganic and/or organic stabilizers, inorganic and/or organic flame retardants, resins, amorphous poly($\alpha$-olefins), polymers with polar groups, polymers based on ethylene, butadiene, styrene and/or isoprene, elastomeric polymers based on ethylene, propylene, acrylonitrile, a diene and/or a cyclic diene, styrene, waxes, one or more synthetic or natural oils and/or UV-active substances.

14. Sealing membranes according to Claim 11, **characterized in that** they additionally contain other polymers, fillers and/or bitumen.

15. Adhesive bonds containing one or more modified polyolefins according to one or more of Claims 1 to 5.

16. Adhesive bonds according to Claim 15, **characterized in that** the adhesive bonds are packaging bonds, bonds of hygiene articles, wood adhesive bonds, bonds of glass surfaces, label bonds, lamination bonds, carpet or synthetic turf bonds, shoe bonds, pressure-sensitive bonds, book bonds or textile bonds.

17. Primer and/or adhesive promoter formulation according to Claim 11, containing one or more polyolefins according to one or more of Claims 1 to 5, **characterized in that** they are used to treat a polyolefin surface.

18. Dispersions, suspensions and/or emulsions according to Claim 11, containing one or more polyolefins according to one or more of Claims 1 to 5, **characterized in that** the proportion of polymer is more than 10% by mass, based on the overall formulation.

**Revendications**

1. Polyoléfines modifiées à base de polyoléfines non fonctionnalisées, qui contiennent au plus 30 % en masse d'éthylène, 70 à 98 % en masse ou au plus 30 % en masse de propylène et/ou 75 à 95 % en masse ou au plus 25 % en masse de 1-butène, la somme des proportions étant de 100 % en masse, la répartition des triades déterminée par RMN $^{13}C$ pour les triades de propène présentant une proportion atactique de 20 à 55 % en masse, une proportion syndiotactique d'au plus 30 % en masse et une proportion isotactique de 40 à 80 % en masse et/ou la répartition des triades déterminée par RMN $^{13}C$ pour les triades de 1-butène présentant une proportion atactique de 2 à 85 % en masse et une proportion syndiotactique d'au plus 20 % en masse, la somme des proportions de triades isotactiques, syndiotactiques et atactiques de propène, et respectivement de 1-butène, étant à chaque fois de 100 %, les polymères non fonctionnalisés ayant été fabriqués en utilisant un catalyseur métallocène et un ou plusieurs monomères comprenant des groupes fonctionnels étant greffés sur les polyoléfines non fonctionnalisées.

2. Polyoléfines modifiées selon la revendication 1, **caractérisées en ce que** la proportion de constituants de faible poids moléculaire ayant un poids moléculaire de 500 à 1 000 Dalton trouvée lors de l'analyse par chromatographie

par perméation de gel des polyoléfines non fonctionnalisées est d'au plus 0,4 % en masse.

3. Polyoléfines modifiées selon la revendication 1 ou 2, **caractérisées en ce que** le monomère comprenant des groupes fonctionnels est choisi dans le groupe des acides carboxyliques et/ou des dérivés d'acides carboxyliques, des acrylates, des vinylsilanes, des composés aromatiques de vinyle, des imidoesters cycliques et leurs composés de vinyle, des vinylimidazolines, des vinylpyrolidones et/ou des composés de vinyle alicycliques.

4. Polyoléfines modifiées selon une ou plusieurs des revendications 1 à 3, **caractérisées en ce que** les polymères non fonctionnalisés sont des copolymères de poly(éthylène-co-propylène) ayant une proportion d'éthylène d'au plus 30% en masse, des copolymères de poly(éthylène-co-1-butène) ayant une proportion d'éthylène d'au plus 30 % en masse, des copolymères de poly(propylène-co-1-butène) ayant une proportion de propylène d'au plus 30 % en masse, des copolymères de poly(propylène-co-1-butène) ayant une proportion de 1-butène d'au plus 25 % en masse ou des terpolymères de poly(éthylène-co-propylène-co-1-butène) ayant une proportion d'éthylène d'au plus 28 % en masse.

5. Polyoléfines modifiées selon une ou plusieurs des revendications 1 à 4, **caractérisées en ce que** le catalyseur métallocène est choisi parmi les composés de formule I

$$2xR^1R^{1a}YR^2R^{2a}\ (IndR^3R^4R^5R^6R^7R^8)\ _2MCl_2\ I$$

dans laquelle M est un métal de transition choisi dans le groupe comprenant Zr, Hf et Ti, Ind signifie indényle et $Z_xR^1R^{1a}YR^2R^{2a}$ relie en tant que pont les radicaux indényle, Z et Y étant choisis parmi le carbone et/ou le silicium, avec x = 0 ou 1, $R^1$, $R^{1a}$ et $R^2$, $R^{2a}$ étant choisis indépendamment les uns des autres parmi H, les groupes alkyle linéaires ou ramifiés de 1 à 6 atomes C, les groupes alcoxyalkyle de 1 à 6 atomes C, les groupes aryle ou les groupes alcoxyaryle de 6 à 10 atomes C, et $R^3$ à $R^8$ étant choisis dans le groupe comprenant H et/ou les groupes alkyle linéaires ou ramifiés de 1 à 10 atomes C, les groupes alkylaryle, les groupes arylalkyle ou les groupes aryle de 6 à 10 atomes C.

6. Procédé de fabrication d'une polyoléfine modifiée selon la revendication 1, **caractérisé en ce qu'**au moins une polyoléfine partiellement cristalline, contenant une teneur en éthylène déterminée par spectroscopie RMN $^{13}C$ d'au plus 30 % en masse, 70 à 98 % en masse ou au plus 30 % en masse de propylène et/ou 70 à 100 % en masse ou au plus 25 % en masse de 1-butène, la somme des proportions étant de 100 ô en masse, qui est également **caractérisée en ce que** sa répartition des triades également déterminée par RMN $^{13}C$ pour les triades de propène présente une proportion atactique de 20 à 55 % en masse, une proportion syndiotactique d'au plus 30 % en masse et une proportion isotactique de 40 à 80 % en masse et/ou la répartition des triades déterminée par RMN $^{13}C$ pour les triades de 1-butène présente une proportion atactique de 2 à 85 % en masse et une proportion syndiotactique d'au plus 20 % en masse, la somme des proportions de triades isotactiques, syndiotactiques et atactiques de propène, et respectivement de 1-butène, étant à chaque fois de 100 %, le polymère non fonctionnalisé ayant été fabriqué en utilisant un catalyseur métallocène, est mise en contact avec au moins un démarreur radicalaire et un ou plusieurs monomères comprenant des groupes fonctionnels, une réaction de greffage du ou des monomères comprenant des groupes fonctionnels sur la polyoléfine ayant lieu.

7. Procédé selon la revendication 6, **caractérisé en ce que** le monomère comprenant des groupes fonctionnels est choisi dans le groupe des acides carboxyliques et/ou des dérivés d'acides carboxyliques, des acrylates, des vinylsilanes, des composés aromatiques de vinyle, des imidoesters cycliques et leurs composés de vinyle, des vinylimidazolines, des vinylpyrolidones et/ou des composés de vinyle alicycliques.

8. Procédé selon la revendication 6 ou 7, **caractérisé en ce que** le greffage du ou des monomères comprenant des groupes fonctionnels a lieu en solution ou en masse fondue.

9. Procédé selon une ou plusieurs des revendications 6 à 8, **caractérisé en ce que** le greffage a lieu à une température de 30 à 250 °C.

10. Utilisation de polyoléfines modifiées selon une ou plusieurs des revendications 1 à 5 en tant que ou dans des matériaux de moulage, dans des matériaux de protection, en tant que ou dans des adhésifs, dans des matériaux d'étanchéité, dans des matériaux de marquage, des matériaux de revêtement, des bandes d'étanchéité, des revêtements de sol ou des plaques de recouvrement, en tant qu'amorces ou dans des formulations d'amorces et/ou des formulations de promoteurs d'adhésion et/ou dans des dispersions, des suspensions ou des émulsions.

**11.** Matériaux de moulage, matériaux de protection, adhésifs, matériaux d'étanchéité, matériaux de marquage, matériaux de revêtement, bandes d'étanchéité, revêtements de sol ou plaques de recouvrement, amorces, formulations d'amorces, formulations de promoteurs d'adhésion, dispersions, suspensions et/ou émulsions contenant une ou plusieurs polyoléfines modifiées selon une ou plusieurs des revendications 1 à 5.

**12.** Adhésifs selon la revendication 11, **caractérisés en ce qu'**il s'agit de formulations adhésives thermofusibles.

**13.** Adhésifs selon la revendication 11 ou 12, **caractérisés en ce qu'**ils contiennent également des accélérateurs de réticulation, des charges inorganiques et/ou organiques, des pigments inorganiques et/ou organiques, des résines synthétiques et/ou naturelles, des polymères inorganiques et/ou organiques, synthétiques et/ou naturels, des fibres inorganiques et/ou organiques, synthétiques et/ou naturelles, des stabilisateurs inorganiques et/ou organiques, des agents ignifuges inorganiques et/ou organiques, des résines, des poly($\alpha$-oléfines) amorphes, des polymères contenant des groupes polaires, des polymères à base d'éthylène, de butadiène, de styrène et/ou d'isoprène, des polymères élastomères à base d'éthylène, de propylène, d'acrylonitrile, d'un diène et/ou d'un diène cyclique, de styrène, des cires, une ou plusieurs huiles synthétiques ou naturelles et/ou des substances actives sous UV.

**14.** Bandes d'étanchéité selon la revendication 11, **caractérisées en ce qu'**elles contiennent également d'autres polymères, des charges et/ou des bitumes.

**15.** Encollages contenant une ou plusieurs polyoléfines modifiées selon une ou plusieurs des revendications 1 à 5.

**16.** Encollages selon la revendication 15, **caractérisés en ce que** les encollages sont des encollages d'emballages, des encollages d'articles d'hygiène, des encollages de bois, des encollages de surfaces en verre, des encollages d'étiquettes, des encollages de stratification, des encollages de tapis ou de gazon artificiel, des encollages de chaussures, des encollages sensibles à la pression, des encollages de livres ou des encollages de textiles.

**17.** Formulation d'amorce et/ou de promoteur d'adhésion selon la revendication 11, contenant une ou plusieurs polyoléfines selon une ou plusieurs des revendications 1 à 5, **caractérisée en ce qu'**elle est utilisée pour le traitement d'une surface en polyoléfine.

**18.** Dispersions, suspensions et/ou émulsions selon la revendication 11, contenant une ou plusieurs polyoléfines selon une ou plusieurs des revendications 1 à 5, **caractérisées en ce que** la proportion de polymère est supérieure à 10 % en masse, par rapport à la formulation totale.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0004034 A
- DE 1963571
- DE 2353783
- DE 2406844
- DE 2554525
- DE 2642927
- US 3075948 A
- EP 0260103 A
- DE 4000695
- JP 2003002930 A
- WO 03070786 A
- WO 2006069205 A
- WO 2007067243 A
- WO 9106580 A
- WO 8911513 A
- DE 19516457
- EP 1508579 A
- WO 2007001694 A
- US 2006293424 A
- EP 1614699 A
- WO 2009092752 A
- DE 10114345
- WO 2007002177 A
- WO 2007008765 A
- EP 0827994 A
- US 6121377 A
- EP 584609 A
- EP 516018 A
- WO 2000037514 A
- WO 200146274 A
- US 20040110910 A
- EP 0384264 A
- EP 480390 A
- EP 1263815 A
- WO 0146278 A
- JP 2004196848 A
- DE OS4000695 A
- DE 102008005947


### In der Beschreibung aufgeführte Nicht-Patentliteratur


- **H.-G. Elias.** Makromoleküle. Wiley-VCH, 2001, vol. III
- Polyolefine. Kunststoff Handbuch. C. Hanser Verlag, 1969, vol. IV
- **A.F. Mason ; G.W. Coates.** Macromolecular Engineering. Wiley-VCH, 2007
- **L. Resconi.** Metallocene based Polyolefins. J. Wiley & Sons, 1999
- **A.F.Mason ; G.W.Coates.** Macromolecular Engineering. Wiley-VCH, 2007
- **T. Shiomura ; N. Uchikawa ; T. Asanuma ; R. Sugimoto ; I. Fujio ; S. Kimura ; S. Harima ; M. Akiyama ; M. Kohno ; N. Inoue.** Metallocene based Polyolefins. J.Wiley & Sons, 1999
- **J.Bicerano; J.M.S.** *Rev.Macromol.Chem.Phys.,* 1998, vol. C38, 391ff
- **W.Spaleck.** Metallocene based Polyolefins. J.Wiley & Sons, 1999
- **A. Lehtinen.** *Macromol. Chem.Phys.,* 1994, vol. 195, 1539ff
- **W. Spaleck.** Metallocene based Polyolefins. J.Wiley & Sons, 1999
- **J. Boor.** Ziegler-Natta Catalysts and Polymerization. Academic Press, 1979
- **G. Natta ; I. Pasquon ; A. Zambelli ; G. Gatti.** *Makromol. Chem.,* 1964, vol. 70, 191ff
- **B.A. Krentsel ; Y.V. Kissin ; V.I. Kleiner ; L.L. Stotskaya.** Polymers and Copolymers of higher 1-Olefins. Hanser Publ, 1997, 19, 20
- **Y.V.Kissin.** Isospecific polymerization of olefins. Springer Verlag, 1985
- **H. El Mansouri ; N. Yagoubi ; D. Scholler ; A. Feigenbaum ; D. Ferrier.** *J. Appl. Polym. Sci.,* 1999, vol. 71, 371ff
- **Walter, Philipp ; Mader, Dietmar ; Reichert, Peter ; Mulhaupt, Rolf.** *Journal of Macromolecular Science, Pure and Applied Chemistry,* 1999, vol. A36 (11), 1613-1639
- **S. Berger ; S. Braun ; H.-O. Kalinowski.** C-NMR-Spektroskopie. Georg Thieme Verlag, 1985
- **A.E. Tonelli.** NMR Spectroscopy and Polymer Microstructure. Verlag Chemie, 1989
- **J.L. Koenig.** Spectroscopy of Polymers. ACS Professional Reference Books, 1992
- **J.C. Randall.** Polymer Sequence Determination. Academic Press, 1977
- **A. Zambelli et al.** *Macromolecules,* 1975, vol. 8, 687
- **A. Filho ; G.Galland.** *J.Appl.Polym.Sci.,* 2001, vol. 80, 1880

- **H. G. Elias.** Makromoleküle. Wiley-VCH, 2001, vol. 2
- **Z. Grubisic ; P. Rempp ; H. Benoit.** *Polym. Lett.,* 1967, vol. 5, 753
- **K.A. Boni ; F.A. Sliemers ; P.B. Stickney.** *J.Polym.Sci.,* 1968, vol. A2 (6), 1579
- **D. Goedhart ; A. Opschoor.** *J.Polym.Sci.,* 1970, vol. A2 (8), 1227
- **A. Rudin ; H.L.W. Hoegy.** *J.Polym.Sci.,* 1972, vol. A1 (10), 217
- **G. Samay ; M. Kubin ; J. Podesva.** *Angew. Makromol. Chem.,* 1978, vol. 72, 185
- **B. Ivan ; Z. Laszlo-Hedvig ; T. Kelen ; F. Tüdos.** *Polym. Bull.,* 1982, vol. 8, 311
- **K.-Q. Wang ; S.-Y. Zhang ; J. Xu ; Y. Li ; H.P. Li.** *J.Liqu.Chrom.,* 1982, vol. 5, 1899
- **T.G. Scholte ; H.M. Schoffeleers ; A.M.G. Brands.** *J.Appl.Polym.Sci.,* 1984, vol. 29, 3763
- **H.-G. Elias.** Makromoleküle. Wiley-VCH, 2001, vol. 2, 411-413
- **N.P.Cheremisinoff.** An Introduction to Polymer Rheology and Processing. CRC Press, 1993
- **R.S.Lenk.** Rheologie der Kunststoffe. C.Hanser Verlag, 1971
- Rheologisches Verhalten von Kunststoff-Schmelzen und -Lösungen. **J.Meissner.** Praktische Rheologie der Kunststoffe. VDI-Verlag, 1978
- **J.-F. Jansson.** *Proc.8th.Int.Congr.Rheol.,* 1980, vol. 3